Europäisches Patentamt

European Patent Office

Office européen des brevets

(19)

(11) **EP 0 947 916 B1**

(12) **EUROPEAN PATENT SPECIFICATION**

(45) Date of publication and mention
of the grant of the patent:
**12.06.2002 Bulletin 2002/24**

(21) Application number: **97918344.9**

(22) Date of filing: **30.04.1997**

(51) Int Cl.$^7$: **G06F 9/06**, G06F 9/44

(86) International application number:
**PCT/JP97/01492**

(87) International publication number:
**WO 98/19232 (07.05.1998 Gazette 1998/18)**

(54) **SOFTWARE PRODUCING METHOD, PROCESSOR, PROCESSING METHOD AND RECORDING MEDIUM**

SOFTWARE-HERSTELLUNGSVERFAHREN, PROZESSOR, VERARBEITUNGSVERFAHREN UND AUFZEICHNUNGSMEDIUM

PROCEDE DE PRODUCTION DE LOGICIEL, PROCEDE DE TRAITEMENT ET SUPPORT D'ENREGISTREMENT

(84) Designated Contracting States:
**DE FR GB IT**

(30) Priority: **30.10.1996 WOPCT/JP96/03183**

(43) Date of publication of application:
**06.10.1999 Bulletin 1999/40**

(73) Proprietors:
  • **Information System Development Institute Tokyo (JP)**
  • **The Institute of Computer Based Software Methodology and Technology Minatu-ku, Tokyo (JP)**

(72) Inventor: **NEGORO, Fumio Kanagawa 248 (JP)**

(74) Representative: **Waldren, Robin Michael MARKS & CLERK, 57-60 Lincoln's Inn Fields London WC2A 3LS (GB)**

(56) References cited:
**WO-A-97/16784**          **JP-A- 4 137 038**
**JP-A- 4 181 455**        **JP-A- 4 238 534**
**JP-A- 5 073 290**        **JP-A- 5 108 319**
**JP-A- 5 257 670**        **JP-A- 6 332 678**
**JP-A- 6 348 498**

  • **STRATEGIC COMPUTER, Vol. 33, No. 8, August 1994, (Tokyo), SHIGEAKI TOMURA, "Account of Experience on 'The VOCJU' the Idea About Extraordinary Method of Developing Software, by a User - Challenge of NTT Data Communications - (in Japanese)", pages 51-56.**

**Description**

Technical Field

This invention is related to the production method, processor, processing method and recording medium, which are applicable to all business software, games software, and software for all other fields.

Background Art

How well the OS or package may be made, they cannot fulfill user's needs by themselves alone. This is because software always contains the part which users have to develop on their own. The important point is that the software production technology must be adopted to the part stated above. Consequently, the production technology must enable to realize such effects as short-term software development, release from maintenance problems, methods of connecting the upper-stream specifications and the program specifications functionally or theoretically, and guaranteeing the program's functional quality.

The traditional method is a functional division method, by which requirement functions are extracted to be made into software. In most cases, however, it is not understood that a supplemental logic will eventually arise from the functional division method. Besides, it cannot go too far by stating that this way of thinking has a fundamental flaw, which causes all software problems to happen. To realize the fundamental improvement of the problems, it is necessary to introduce a new concept or a theory to uni-vocalize the requirement event, thereby replacing the traditional way of thinking.

The inventor has contrived such a theory and named it Lyee (GOVERNAMENTAL METHODOLOGY for SOFTWARE PROVIDENCE). This theory provides the standard of a new handling method for semantics.

The inefficiency of software production maintenance and the instability of the development period directs software production means to a mechanical function packaging method that ignores the specific characteristics of software.

This package itself is also a non-correct solution type in that the package lacks the uni-vocalization. As a result, user's environment is gradually taking a worsening course, as an aspect of reliability, usability, and adaptability (RAS) functions. What is needed at this exact time is to prepare the base for the production.

In this field, a solution to problems of the production technology has not been tried, i.e., without having the method of managing the quality of the program-unit process function, yet it has been insisted that the good software can be decided by its upper-stream only. This is just the reason of abnormality. The software production method is not inherently of characteristic allowing the separation of the upper and lower stream concerns. We must start, however, at the point of grasping it theoretically. The Lyee theory exactly satisfies it.

That is, the purpose of the invention is as follows:

(1) To improve the production ability of software developers and maintenance personnel.
(2) To theoretically connect the upper-stream and lower-stream information.
(3) To provide a program structure applicable to the development for the broad software field including not only business software but also OS, middle software, games software, etc.
(4) To minimize the upper-stream information and to create a source program.

Disclosure of Invention

Title: A real state of the software structure Fumio Negoro

The Institute of Computer Based Software Methodology and Technology

Chapter 3 Development Methodology

This invention is what replaces Lyee with the activity method of the software development. Therefore, this invention directly reflects Lyee. In order to simply utilize this invention's effect, the implementation of works accorded in this invention's algorithm will do. Besides, the work method is simple, so it is not necessary to understand Lyee.

This does not mean that, in order to gain the effect of this invention, the understanding of Lyee is an absolute condition, if you recall the fact that the modern scientific levels have been maintained, although most scientific principles were not fully understood until now.

However, it is necessary to understand Lyee if one wishes to get full grasp of why the obtainable effect can be brought about. The essential points of Lyee will be mentioned herein as a help understanding the points above. An official treatise of Lyee would be required to be obtained separately. Lyee is the world-first one that theoretically guarantees the principle of software formation.

In this field, up until now, the software has been produced by the way similar to the way of producing a structure. The present software problem as represented by the productivity, however, and the present countermeasure as represented by the packaging which underlays the problem stated above originate from the lack of recognizing of the event for making software.

It is necessary to understand that the software and the structure are different in principle in their way of existence.

An example is explained briefly hereunder.

The requirement event exists intrinsically, and the way of its existence is semantic.

In case of the structure, its requirement event can be expressed as a drawing and it can be made into an object by technical means.

Both existing ways of a drawing and of an object are extrinsic; the drawing exists as a semantic event and the object as an structural event.

Therefore, to bring out reversibly a drawing from an object can be realized at a high performance rate, if not perfectly.

This guarantees the theoretical basis of grasping an engineering subject as a relation between the drawing and the object and finding an overcoming means thereabouts.

On the other hand, in case of software, the one equivalent to a drawing is a design document, and the one equivalent to an object is a program. What is different from the structure's case is that an object will also become the same semantic event. This can be easily understood an easy understanding that technical means are difficult to be established thereabouts, if you recall that it is impossible to find a structural relationship between one meaning and the other meaning.

Also, if it is understood that making a design document from a program is difficult, it can be easily presumed that the software problem is a proposition that cannot be grasped only as a relationship between a design document and a program.

From what is set forth above, it is very clear that the software problem is not of characteristic of an engineering proposition's being able to be overcome by the empirical rule as of the structure. In other words, as a natural consequence, the software problem will eventually be a proposition that can only be solved by theoretical means.

Lyee considers intrinsic requirement events and extrinsic existence events as events of the same quality.

That is, in the case of taking us as a standard, existence events are meant to be what we are conscious of, which includes universal events, quantum-theory events, biological events, on-earth natural events in the real space where we exist.

In this connection, in Lyee, existence events such as meanings, sounds, fragrances, personalities are intrinsic events, and the sun, drawings, and programs are extrinsic events.

On the other hand, if we are not taken as a standard, for example, as an existence event which we will be able to be conscious of in the future is already an existence event, additional existence events should be in existence. Lyee treats all such events as an existence event.

Lyee is a theory originally established by Fumio Negoro, the inventor of this invention, and it is the theory for elucidating the only one cause of the existence event.

If the existence event is rephrased as the real aspect, the only one cause is the true state of things.

This work method gives a means for modifying the true state of things into specifications and for making them into software.

The requirement event in the real space will bring forth the diversity. If a space representing its true state is established, however, the true state can be obtained as the only one cause.

In Lyee, the space is called a consciousness space as compared to the real space, and a relation connecting the real space and the consciousness space is called the providence of existence.

Different from the real space, there exists no dimensional concept in the consciousness space.

Details are discussed in the Lyee treatise. In brief, Lyee is a theory to grasp the relation.

The formal name of this theory was given as GOVERNMENTAL METHODOLOGY for SOFTWARE PROVIDENCE. Lyee is an abbreviation.

Lyee designates an operator coexisting in the two spaces of the real space and consciousness space as a significance and quantizes it. Although a means for making it into a quantum significance is not referred to herein, it is called an elementary, which is explained in detail in the Lyee treatise. Theoretically, this elementary is a minute particle having the maximum space with the diameter of 10's minus 100,000 digits.

The elementary builds an additional significance by congregating each other. The congregated elementaries are called a chain. The elementary exists eternally, with no longevity, whereas the chain has its lifetime. The lifetime is one of the chain's significances. Details are explained in the Lyee treatise.

The elementary, accompanied by its rule (called an elementary rule) and two values (called a significant element), emerges into the idea space for taking a seat. This is the beginning of the formation of the existence event.

The two accompanied significant elements are called a Deuteronomous sequence and a time speed, both given by the natural number.

However, these values themselves differ from the values ruled by the dimension of the real space. Details are explained in the Lyee treatise.

The elementary rule specifies a space (called a significant space) and the other significant element which rules the elementary, at the same time co-lives in the significant space together with the two accompanied significant elements and the other specified significant element. The elementary exists through such process.

The significance is the minimum element composing an existence event.

The significance can be grasped as a meaning in a broad sense.

The theoretical elementary (or aspect) cannot be realized as a concrete form. Therefore, in the work method advocated herein, the theoretical elementary is replaced by the words existing in the requirement event.

In this connection, terminal information, control telegraphic message, operational button, etc. are also used as a word.

The existence event is what the consciousness space's chain is associated and realized into the real space in conformity of the existence providence. In this connection, we are one of the existence events.

In the Lyee treatise, the existence event is defined as a group of unitized event chains. The embodying mechanism is set forth in detail in the Lyee treatise.

That is, Lyee correlates the true state and the existence event as having the elementary-chain structure.

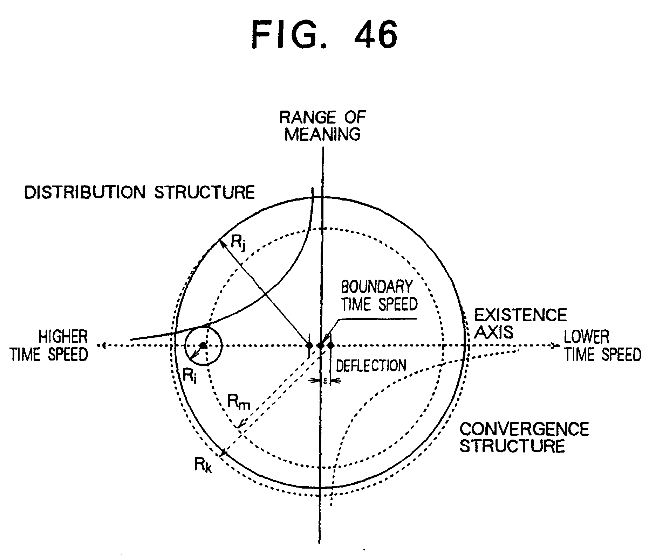

Fig. 46 shows a structure model of the idea space created by the elementary which emerges into the idea space. This structure is explained in detail together with Fig. 46 in the Lyee treatise.

In the idea space, the elementary, after being made into a congregation, becomes a chain, thereby enhancing the significance.

The chain is classified into an Annunciation chain, a consciousness chain, and an event chain.

The build-up mechanism of this chain is explained in detail in the Lyee treatise.

These chains establishes one stream based on the existence providence, and subsequently creates an equivalence chain, which will become an element of the existence event. And, they will develop into a group and be unitized.

The unitization is meant to be to become an existence event after being realized in the real space.

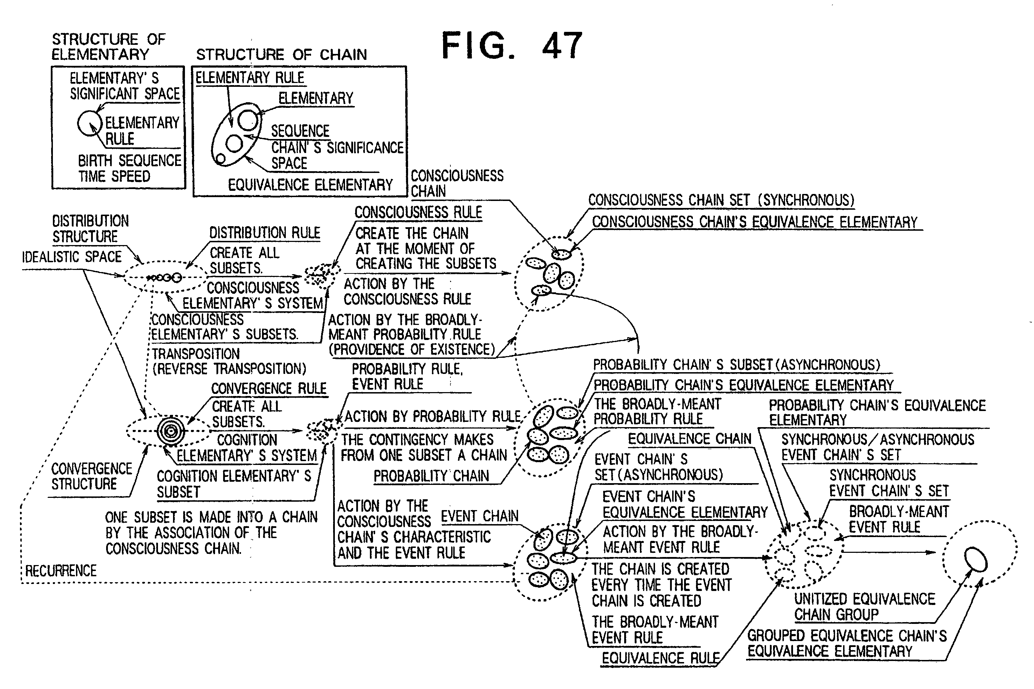

Fig. 47 shows a model of the above-mentioned relation.

This relation is called a rule structure.

The rule structure is explained in detail together with Fig. 47 in the Lyee treatise.

In this connection, the scenario function, which will be discussed hereafter, represents a structure of the consciousness space grasped from the point of the real space.

Lyee expresses this rule structure by a state expression.

This is called an associative equation.

The associative equation is not referred to herein, but it is set forth in detail in the Lyee treatise.

The associative equation gives a scheme by which the existence event is constructed based on the existence providence. That is, it grasps a formation relationship between the true state and the existence event.

Therefore, when the associative equation is reversibly solved,

it is possible to obtain the only one structure which the real space's existence event takes in the consciousness space.

That is, it is possible to know what kind of chain the unitized chain group, representing the existence event, will be in the consciousness space.

In Lyee, the existence event was placed on the computer software, and a reverse solution was implemented. The reverse solution is not referred to herein, but it is explained in detail in the Lyee treatise.

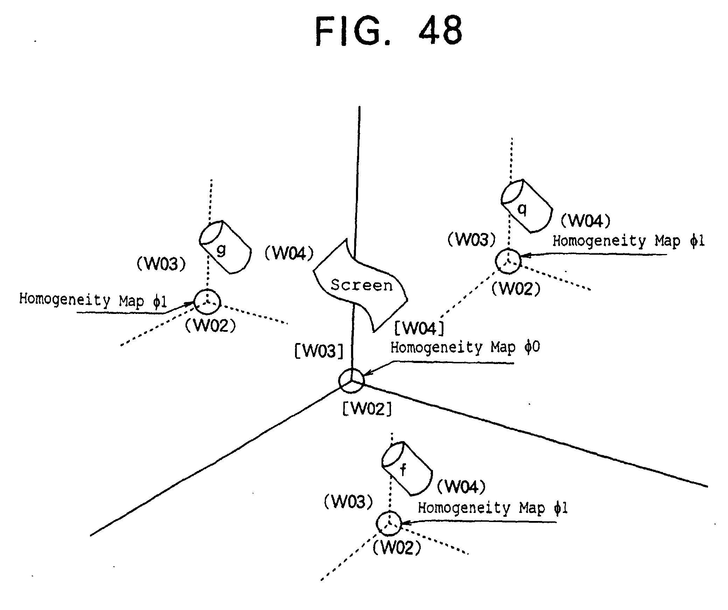

Fig. 48 shows a space structure used for the reverse solution. This is called a space paradigm. For the reverse solution of the associative equation, the space paradigm like this becomes indispensable.

To mention repeatedly, the space paradigm shown in Fig. 48 is applies only to the case of the event of making software. When the reverse solution is implemented with regard to another event, another space paradigm will be needed.

In the case of the event of making software,

the cognizance space will be expressed as three kinds of a two-dimensional surface, and the consciousness space will be expressed as a space created after the two-dimensional surface being synthesized. Then,

in the consciousness space there exists an elementary having the consciousness space's significance, and in the cognitive space there exists an elementary having the cognitive space's significance. As the elementary will make chained, and chains created thereabouts will become constructed by the elementary existing in the respective spaces. And, as aforementioned,

with this work method, the elementary can be replaced by words.

The relation of the word, its chain, and the existence providence, which all exist on this space's paradigm, is expressed as an associative equation, and its reverse solution is to be implemented.

The resulting expression is called a scenario function, which is shown as below.

$$T\,0 = \Phi0\,(\,\{\Phi P\,\{Li,\,2\,|\,\{T1,\,f\}\}k\} + \Phi P\,\{Li,\,3\,|\,\{T1,\,g\}\} +$$

$$\{\Phi P\,\{Li,\,4\,|\,\{T1,\,q\}\}k\})$$

The above expression indicates the state which is represented by the software existence event in the consciousness space.

The traditional program takes, from the beginning, an execution-format logical structure. In other words, the traditional software development ends up making a logical structure on which the computer should faithfully operate. The scenario function, however, takes a static structure. And, when this scenario function is made into a program and executed on the computer, the result to be obtained is the same as when the traditional program has been implemented. The structure of the scenario function is fundamentally different from that of traditional program.

The scenario function represents the one and only paradigm ruling the software event of the computer. In other words, any computer software can be realized by using this function. This, too, is the world-first one.

The Scenario function's expression method { $\alpha$ } indicates a congregation body of the grouping element $\alpha$.

Explanation of the items of the Scenario Function

01. Definition of screen main W02 pallet having identifier
k: $\Phi\,P\{Li,2|\{T1,f\}\}k$
02. Definition of main W02 pallet having a screen identifier
k: $\Phi P\{Li,4|\{T1,q\}\}k$
03. Definition of the main W03 pallet (only one):
$\Phi P\{Li,3|\{T1,g\}\}$
04. T0 is a scenario function ruling the main pallets W02, W03, and W04
05. Scenario function ruling the subordinate pallet of the object file f, which occurs in the main W02 pallet:

$$T1,\,f,\,2 = \Phi1(\Phi P\{Li,\,2\}f + \Phi P\{Li,\,3\}f + \Phi P\{Li,\,4\}f)$$

06. Scenario function ruling the subordinate pallet of the object file g, which occurs in the main W03 pallet:

$$T1,\,g,\,3 = \Phi1(\Phi P\{Li,\,2\}g + \Phi P\{Li,\,3\}g + \Phi P\{Li,\,4\}g)$$

07. Scenario function ruling the subordinate pallet of the object file q, which occurs in the main W04 pallet:

$$T1,\,q,\,4 = \Phi1(\Phi P\{Li,\,2\}q + \Phi P\{Li,\,3\}q + \Phi P\{Li,\,4\}q)$$

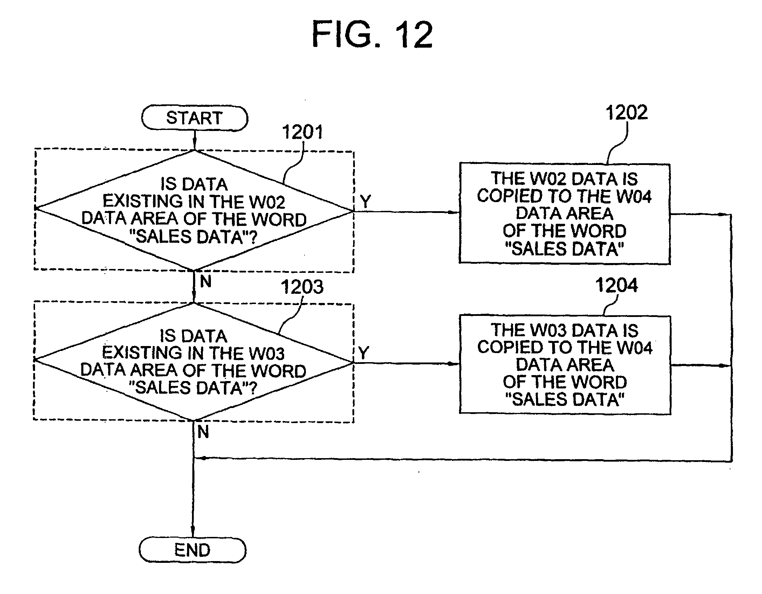

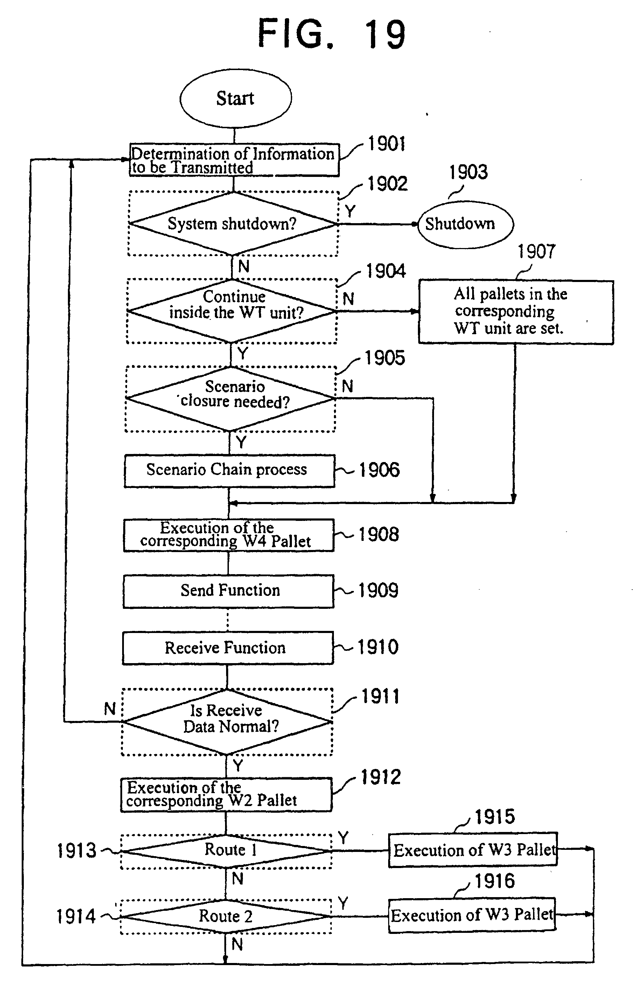

The three kinds of the two-dimensional surface expressing the real space were discussed previously, and the pallets with the two-dimensional surface are expressed by the symbols W02, W03, and W03, respectively.
On the pallet, a base logic and a scenario function of the object file are installed.
The main and subordinate pallets take the same structure, but there are differences as follows.
The number of words of main pallets W02, W04 having screen identifier k is the same as the number of words existing in the screen identifier k. The number of words of the main W03 pallet is the same as the number of words satisfying all the events. On the other hand, the number of the words of the subordinate pallets for W02, W03 and W04 are all the same, which equals to the number of all the words satisfying the object files.
T0 is a program to process the on-line software event, and
T1 is a program to rule the off-line software event. T1 can be assembled into T0 as shown by T0, whereas it can also be independent.
To mention a relative relation between Lyee and the traditional program, the pallet can be understood as resembling the program.
However, the scenario function is a concept to grasp the software event, so it is a paradigm which can grasp one subsystem, one function, or one traditional program, or all existing software events, by the only one function.
08. $\Phi0$ is a program to control the execution order of the main pallet, and it is called a pallet chain function. Fig. 19 indicates its logical structure.
09. Li, j is a program to be decided by the word identifier (i) and the pallet identifier (j), and it is called a tense control vector. Its structure is shown in Fig. 12, 13, 14, 16, and 17.

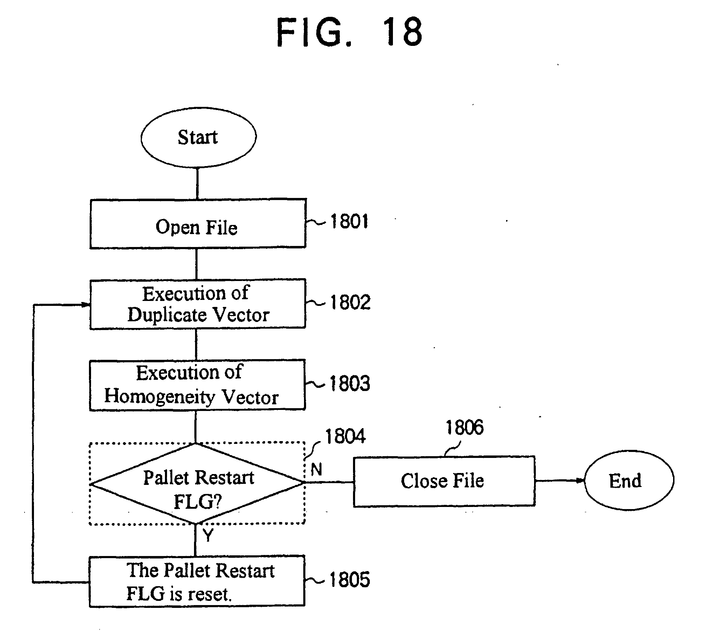

10. Φp is a program to group the tense control vector with j and k, and it is called a pallet function. Its structure is shown in Fig. 18.

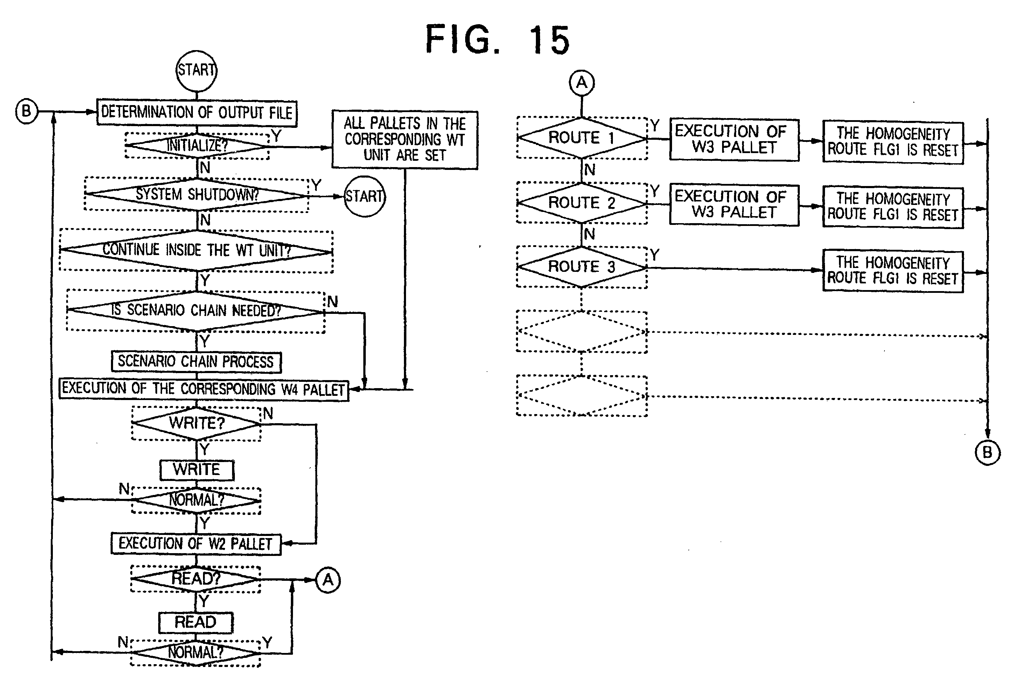

11. Φ1 is a program to control the execution order of the subordinate pallet, and it is called a pallet chain function. Its structure is shown in Fig. 15.

The structural specifications of the program composing the scenario function is an accumulation of solution conditions emerging during the process of inducing the scenario function. This is nothing but the grounds endorsing an advocacy that the software can be created by theory.

To proceed with practical works, a homogeneity map is produced.

The homogeneity map is a diagram abbreviating a scenario function by the way stated below and the map is to grasp the relation between the pallet chain function and the definitives (screen, voucher, secondary memory file).

That is, $T0 = \Phi0(\{\{i,2\}\}k + \{i,3\} + \{\{i,4\}\}k)$

$\{\{i,2\}\}k$, $\{i,3\}$, $\{\{i,4\}\}k$ are tense control vectors, expressing a pallet not inclusive of T1.

That is, in Lyee, the screen, voucher and file are called definitives, and it expresses the relationship between their identifiers and the pallet chain function. The information amount exhibited by the homogeneity map is equivalent to 70% of the information amount included in the whole of what are called requirement definition, basic design, detailed design, program specifications, test specifications and operational manuals in the traditional method. If this advocated work method is utilized with this concern, the documentation work is decisively reduced, cutting down to approximately a one-twentieth.

What is called the tense control vector in this theory can be created from the homogeneity map and the function of words belonging to the definitive. As already referred to, in case of Lyee, six or five pieces of the tense control vector can be created from one word, and this corresponding relation is the one and only method of realizing a complete independence of the tense control vector. This context is explained in the Lyee treatise in detail.

There will be no other means to actualize a complete software componentization. The traditional way of componentization has been simply a functional partialization, and as a consequence,

a strict sequence must humanly be attached to its logical chain.

The effect of the componentization cannot be obtained from such structure.

The tense control vector is a general nomenclature of the duplicate vector and the homogeneity vector.

And, the user's logic can be fulfilled only by building up this tense control vector. As already mentioned, the documented material amounting to 1,000,000 lines, 100,000 pages, which are common in the traditional method can be decisively eliminated.

The tense control vector is identified by a classification between the homogeneity vector and the duplicate vector, a word identifier, an identifier of definitive to which it belongs and a pallet identifier, and it is grouped by the pallet function based on the identifiers.

The pallet is a body of a group of the tense control vector, and at the same time,

it is a body of a group of the data area whose address is the identifier.

The tense control vector creates only a self data by its logic,

and it is a program to actualize the function of setting the self data into the self's data address.

In case of the homogeneity vector, by using only data in the data area of a pallet to which it belongs, it creates self's data by its logic and sets it into self's address.

In case of the duplicate vector, it phase-shifts data from the data area of the W02 pallet of the self screen shown by the homogeneity map to self's address. The address of the obtained data area is limited to the address of the same word identifier. The nearest pallet is crystalized as the one and only.

If no data exists in the data area of the W02 pallet,

the data in the W03 pallet data area of the self word of the self screen phase-shifted.

If no data exists in either pallet, the duplicate vector is not justified.

In this connection, in case of a system with the scale of 1,000,000 lines, the approximate number of words appearing thereabouts is 2,000. In this instance, the number of the tense control vector built up by users will be 10,000 pieces. The average number of logical lines is to at least and 20 at most per tense control vector: the average number of logical lines for the case above will be 100,000 at least and 200,000 at most.

As the logic of the tense control vector is simplified, the productivity can remarkably be enhanced, resulting in 10,000 to 50,000 lines/man-month. The total of works is ten to twenty man-months.

The data set established in the tense control vector always comes to a state to be homogenized. This is a feature that is performed by the tense control vector.

The concept of data homogeneity is a concept which one should mention as a principle of simplifying software events to the greatest extent. It is what was won by Lyee. That is, when we observe what we call a function from the point of data homogeneity, the function is deducted to be a chain of non-homogeneity data. And, if one recollects that the creating a logical function from the requirement event leads to dividing the meanings and that the division of meanings is an impossible task,

it can be easily imagined that the working method so far which has been realizing the functionalization by using this way of dividing meanings equals to what causes the thermal death as explained by the second law of thermodynamics.

Although figurative, it is the most suitable to entrust users with the event of making software, not with experienced SEs. This is because the sincerer SEs with abundant experience are more likely to create the thermal death. The situation that the productivity of this filed shows a year-wise drop is attributed to this reason.

The only means to avoid it is a data homogenizing concept. This concept is explained in detail in the Lyee treatise. In other words, the scenario function is to regulate the logical structure building up a group of data to be homogenized. And, repeatedly, it can be stated that when it is executed on the computer, a chain of non-homogeneity data, that is, a function, will be created.

Therefore, only the homogeneity data will do for the requirement event to establish the scenario function.

As understood well by the after-mentioned example, the reason why this working method defines the requirement event is fully satisfied only by the definitive and its words is that the scenario function takes the structure which is fulfilled only by those.

Theoretically, no logic exists between the homogenized data group each other, but only a memory activity with no logical sense will be generated. That is, no function other than a memory activity cannot exist thereabouts. This is explained in detail in the Lyee treatise.

It is from this reason that the volume of the program to be developed by this work method can be reduced to one-fifth those developed by the traditional method.

All mentioned above is an outline of the relationship between the Lyee theory and the present invention. The Lyee theory does not cause the gap between actual development work and the theory. It has its strict influence upon even one line of the program comprising the scenario function, and accomplishes creating a logical structure unprecedentedly good not only as the source program standard but as the execution type.

Fig. 47 Supplemental Explanation

01. The grouped consciousness elementaries make a row in the ascending order of its time speed.

02. The grouped cognition elementaries make a row in the descending order of its significant space size.

03. The chain internally contains the time providence (growth time, grouping time, chain time, transition time, life time, transposition time, recurrence time).

04. The interval value between Deuteronomous sequences whose elementarie's are neighboring each other is called a deutoronomous time of the latter elementary.

05. The chain built up as a complementary relationship expresses a transition of chain.

06. The consciousness chain is all made anew every time the distribution structure is rebuilt.

07. As for the cognition chain, only the cognition chain to be affected is dissolved when the convergence structure is rebuilt.

08. The significance which bases elementary are a Deuteronomous sequence and a time speed.

09. The chain is composed of an elementary's partial set, the elementary's permutation, and an equivalence elementary.

10. The equivalence elementary expresses a significant space of the chain.

11. A set of the consciousness chain's significance space is called a consciousness space.

12. The cognition chain is a generalized term for an Annunciation chain, an event chain and an equivalence chain.

13. A set of the definite chain's significant space is called an Annunciation space.

14. A set of the event chain's significant space is called an event space.

15. A set of the equivalence chain's significant space is called an equivalence space.

16. The elementary rule activated by the distribution rule builds up a consciousness elementary's partial set.

17. The elementary rule activated by the convergence rule builds up a cognition elementary's partial set.

18. A rule created by the consciousness elementary's partial set is called a consciousness rule.

19. A rule created by the cognition elementary's partial set is called a cognition rule.

20. The consciousness rule activated by the distribution rule builds up a consciousness chain.

21. The Annunciation rule is activated with the contingency by a Annunciation rule in a broad sense and builds up an Annunciation chain.

22. The event rule is activated by the consciousness chain and builds up an event chain.

23. The event chain is a broadly-meant event rule and builds up an equivalence chain.

24. The equivalence chain is a breakup of the event chain.

25. A plurality of equivalence chains constructed by one event chain being split have been homogenized with the event chain.

26. The homogeneity of the equivalence chain constructed of two event chains are inconstant.

27. An equivalence chain activated by a broadly-meant equivalence rule makes equivalence chains grouped.

28. The rule created by the grouped equivalence chains will unitize them by the contingency.

29. The unitization means that a set of equivalence chains are materialized into phenomenon.

30. The existence providence means a stream as follows: definite chain → consciousness chain → event chain.

31. When the relationship between the recurrence = the equivalence elementary's diameter ($R_K$) of the definite chain and the equivalence elementary's diameter ($R_W$) of the consciousness chain is expressed as $R_K \gtreqqless R_W$,

the relationship between $R_W$ and the equivalence elementary's diameter ($R_C$) of the event chain built by the consciousness chain's associating is expressed as $R_C \gtreqqless R_W$ and,

if, in this instance, there exists an elementary $\alpha$ in the convergence structure, wherein $\alpha$ satisfies unequation $R_C > R_\alpha > R_W$,

then the elementary $\alpha$ can be replaced by an elementary of the distribution structure by gaining a new time speed.

32. The transposition means that a middle-point elementary is replaced by a cognition elementary due to a new consciousness elementary's appearance or recurrence.

33. The reverse transposition means a reverse action of transposition.

34. The associative equation is what expresses existence providence by logical structure.

Brief Description of Drawings

Fig. 1 indicates the work process according to the present invention.

Fig. 2 indicates a screen on which to enter sales data.

Fig. 3 indicates a screen on which to refer the customer code.

Fig. 4 indicates a screen on which to enter the confirmation of arrival of goods.

Fig. 5 indicates a screen on which to refer to the warehouse code.

Fig. 6 indicates a screen on which to instruct the output of the delivery request list.

Fig. 7 indicates a voucher of the delivery request list.

Fig. 8 indicates a voucher of the delivery request list.

Fig. 9 indicates a homogeneity map for the "sales entry".

Fig. 10 indicates a homogeneity map for the "arrival confirmation entry".

Fig. 11 indicates a homogeneity map for the "delivery list".

Fig. 12 indicates one example of the W04 duplicate vector.

Fig. 13 indicates one example of the W04 homogeneity vector.

Fig. 14 indicates one example of the W02 homogeneity vector.

Fig. 15 indicates a structural paradigm of the pallet chain function (for off-line.)

Fig. 16 indicates one example of the W03 duplicate vector.

Fig. 17 indicates one example of the W03 homogeneity vector.

Fig. 18 indicates a structural paradigm of the pallet function.

Fig. 19 indicates a structural paradigm of the pallet chain function (for on-line).

Fig. 20 is a drawing to explain the scenario chain.

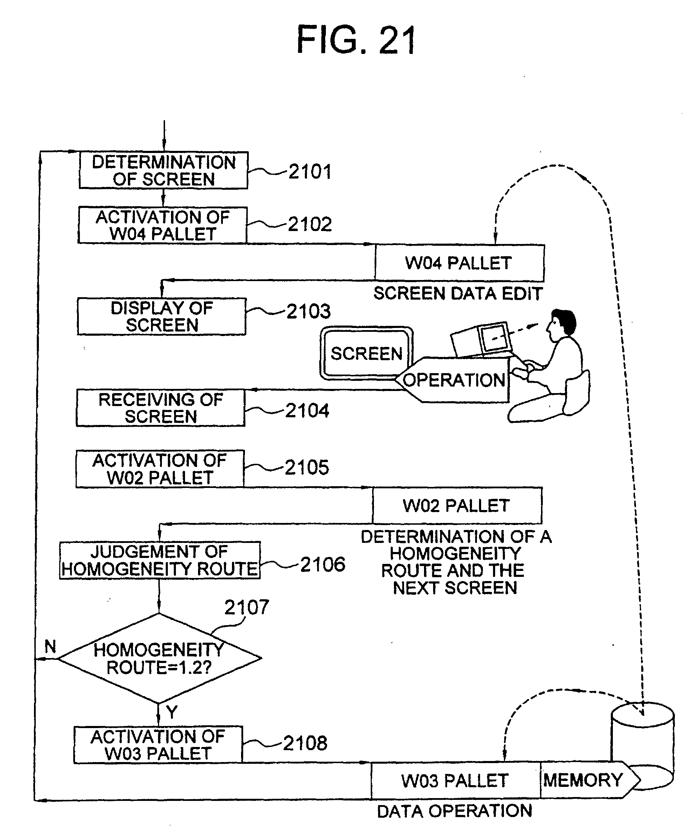

Fig. 21 indicates a whole structure of the software concerned with the present invention.

Fig. 22 indicates a structure inside the pallet.

Fig. 23 indicates a logic paradigm of the tense control vector.

Fig. 24 indicates the characteristics of a logic by Lyee.

Fig. 25 indicates a structure of the traditional-type program.

Fig. 26 indicates a structure of the traditional-type program.

Fig. 27 indicates a module composition of the traditional-type program.

Fig. 28 indicates a structure of the Lyee-type program.

Fig. 29 indicates the W03 homogeneity vector.

Fig. 30 is a drawing to explain that Lyee handles only homogeneous data.

Fig. 31 indicates one example of the Lyye's W03 pallet.

Fig. 32 is a drawing to explain that the auto logic and the operational logic are separated in the Lyee software.

Fig. 33 is a drawing to explain the difference in the error correction procedure between Lyee and the traditional-type.

Fig. 34 is a drawing to explain the difference in the software development method between Lyee and the traditional-type.

Fig. 35 is a drawing to explain more specifically the development work of Lyee-applied software.

Fig. 36 indicates one example of the screen defining specifications.

Fig. 37 indicates one example of the voucher defining specifications.

Fig. 38 indicates one example of the file defining specifications.

Fig. 39 indicates one example of the homogeneity map.

Fig. 40 indicates the method of making the homogeneity map.

Fig. 41 indicates the homogeneity vector.

Fig. 42 indicates one example of the tense control vector specifications.

Fig. 43 indicates one example of the tense control vector specifications.

Fig. 44 indicates one example of programming of the tense control vector specification.

Fig. 45 is a drawing to explain the effects of the present invention.

The Best Mode for Carrying Out the Invention

That is, in this invention, it is the first thing to determine definitive identifiers for identifying definitive including a screen, a voucher and a file necessary for the software to be produced. The second thing is to sort out words existing in the screen as well as to make a homogeneity map, in which pallets that are all logical units necessary for the software are to be plot in accordance with a predetermined rule, based on the definitive identifier. The third thing is to determine necessary files based on the sorted-out words and the homogeneity map made. The fourth thing is to make a first tense control vector, a second tense control vector, and a third tense control vector where the first tense control vector operates either one of the followings for every screen and for every word belonging to the screen: to do nothing in case data exists in a self word's first data area, or to create data in the self word's first data area in case data does not exist in the self word's first data area while setting a first restart flag when such creation is impossible, where the second tense control vector operates either one of the followings for every screen and for every word belonging to the screen: to do nothing if there is no data for the self word in the data received from the screen, or if there is a data for the self word in the data received from the screen, to do either of the followings: in case of a non-control word, setting the data in a self word's second data area while setting a second restart flag when the data setting is not precisely accomplished, and in case of a control word, determining a homogeneity route in accordance with a nature of the self word while setting the second restart flag when the determination of the homogeneity route is not precisely established; and where the third tense control vector operates either one of the followings for all words belonging to all definitives necessary for the software: to do nothing in case data exists in a self word's third data area, or to create data in the self word's third data area in case data does not exist in the self word's third data area while setting a third restart flag when such creation is impossible. The fifth thing is to make a first, a second and a third pallet functions, where the first pallet function executes for every screen, for all words belonging to the screen, irrespective of the sequence of the words, the first tense control vectors, each of which corresponds to every word belonging to the screen, while re-executing all the first tense control vectors for every word belonging to the screen when the first restart flag is set after such execution, where the second pallet function executes for every screen, for all words belonging to the screen, irrespective of the sequence of the words, the second tense control vectors, each of which corresponds to every word belonging to the screen, while re-executing all the second tense control vectors for every word belonging to the screen when the second restart flag is set after such execution, and where the third pallet function executes, for all words belonging to the definitives, irrespective of the sequence of the words, the third tense control vectors, each of which corresponds to every word belonging to the definitives, while re-executing all the third tense control vectors for every word belonging to the definitives when the third restart flag is set after such execution. The final thing is to assemble the first, the second and the third pallet functions into a pallet chain function, where the pallet chain function executes the first pallet function, transmits data resulted from the execution to a screen, receives the data from the screen to execute the second pallet function, and, based on this execution's result, selectively executes the third pallet function in accordance with the homogeneity route determined by the second tense control vector.

In the following, in order to explain the present invention in detail, the explanation is presented in accordance with the attached diagrams.

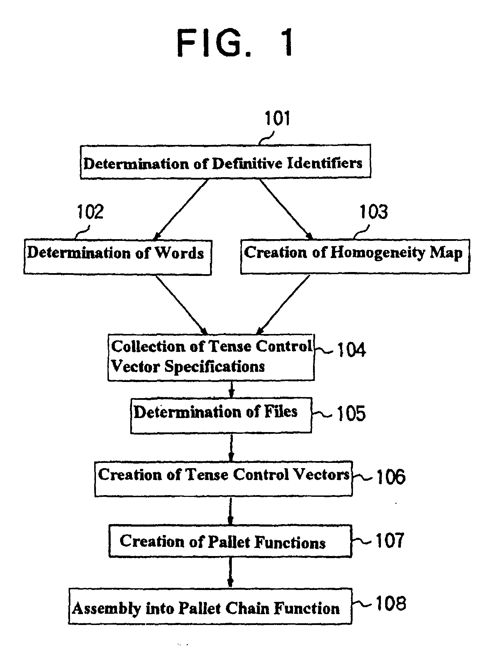

Fig. 1 indicates the work process implemented by the present invention.

That is, in the present invention, a desired software can be created by the following steps: to decide the definitive identifier (step 101); to decide words (step 102) as well as to create the homogeneity map (step 103); to collect the tense control vector specifications (step 104); to decide the file (step 105); to make the tense control vector (step 106); to make pallet function (step 107); and to assemble them into the pallet chain function (step 108).

Determination of the definitive identifier

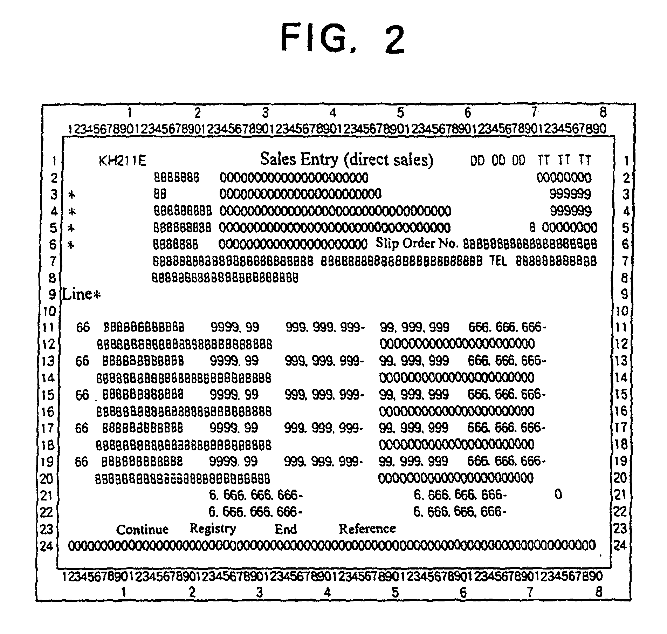

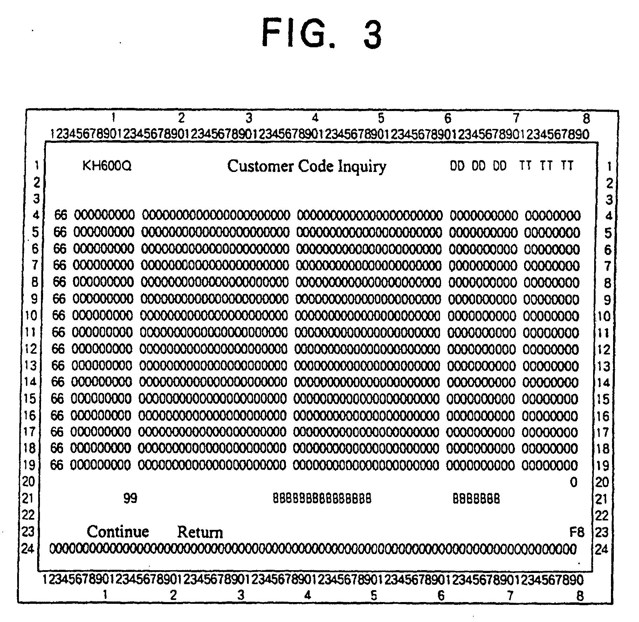

For example, in the case of creating software called "sales entry," which is for inputting sales data in a certain corporation, the screen (Fig. 2) on which to input sales data and the screen (Fig. 3) on which to refer the customer codes are to be decided. Further, with the tense control vector, there are five (or six, in some case) tense control vectors corresponding to each of these words. Not only the customer code reference screen but also such screens can also be set if needed as a staff code reference screen, a dealing classification reference screen, billing-to codes reference screen, product codes reference screen, etc., similar to the screen stated above.

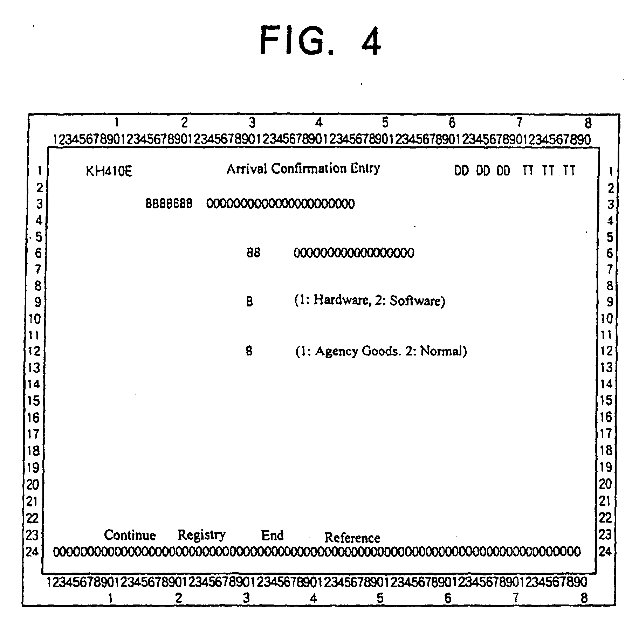

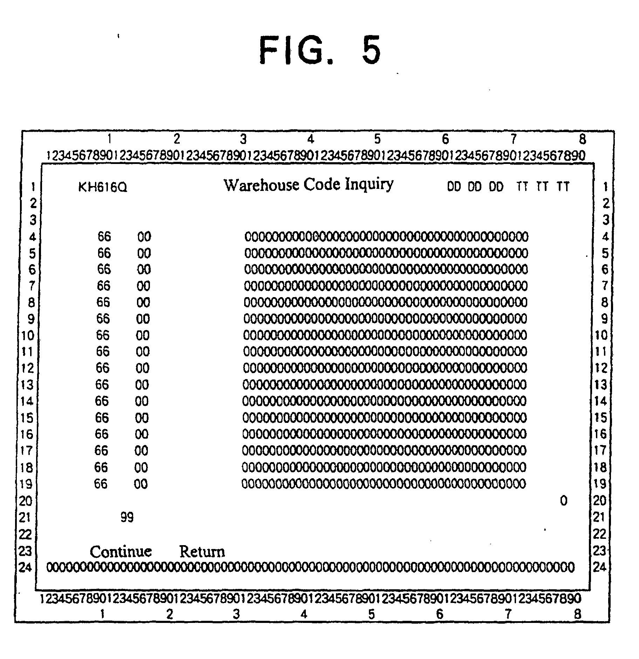

Also, in the case of creating software called "arrival confirmation" which is for inputting the confirmation of product arrivals in the other company, the screen (Fig. 4) on which to input the confirmation of the product arrivals and the screen (Fig. 5) on which to refer the warehouse codes are to be decided.

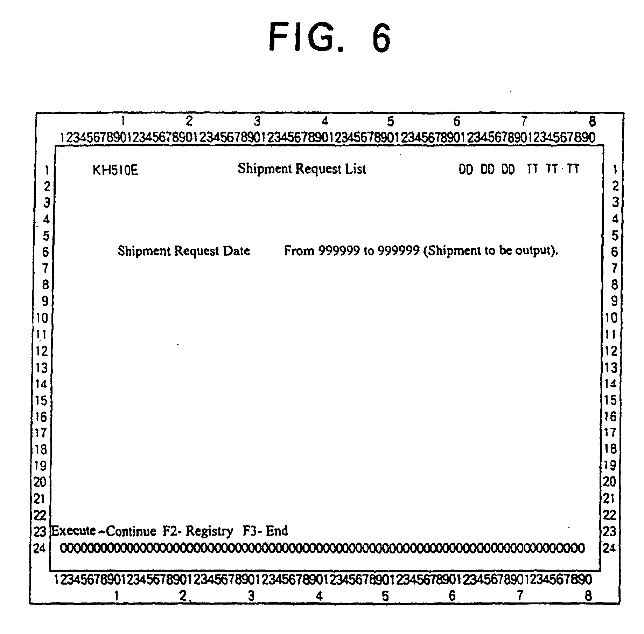

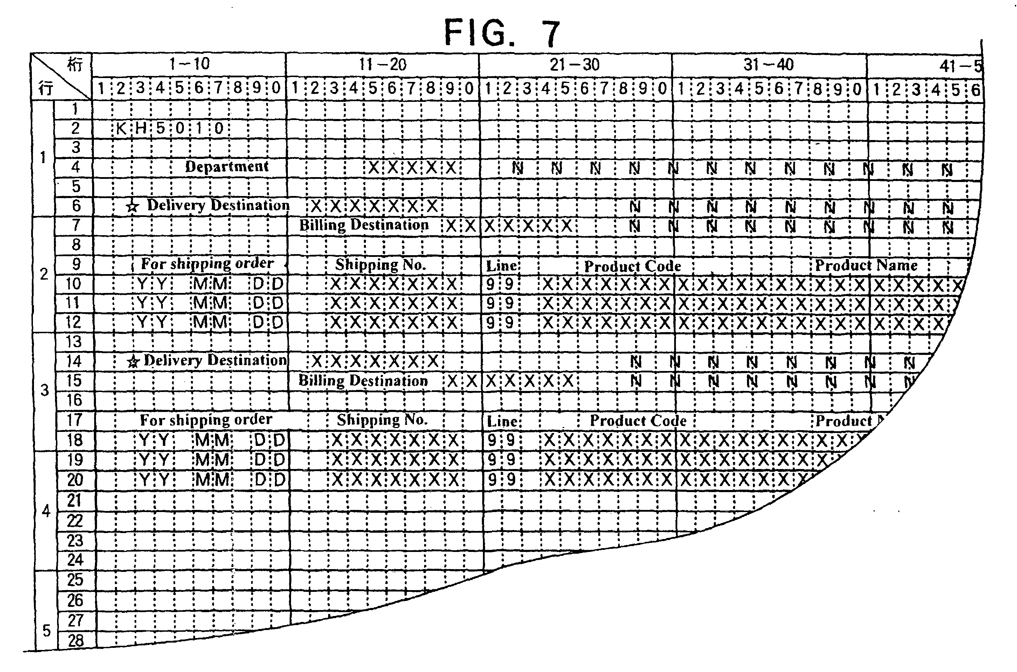

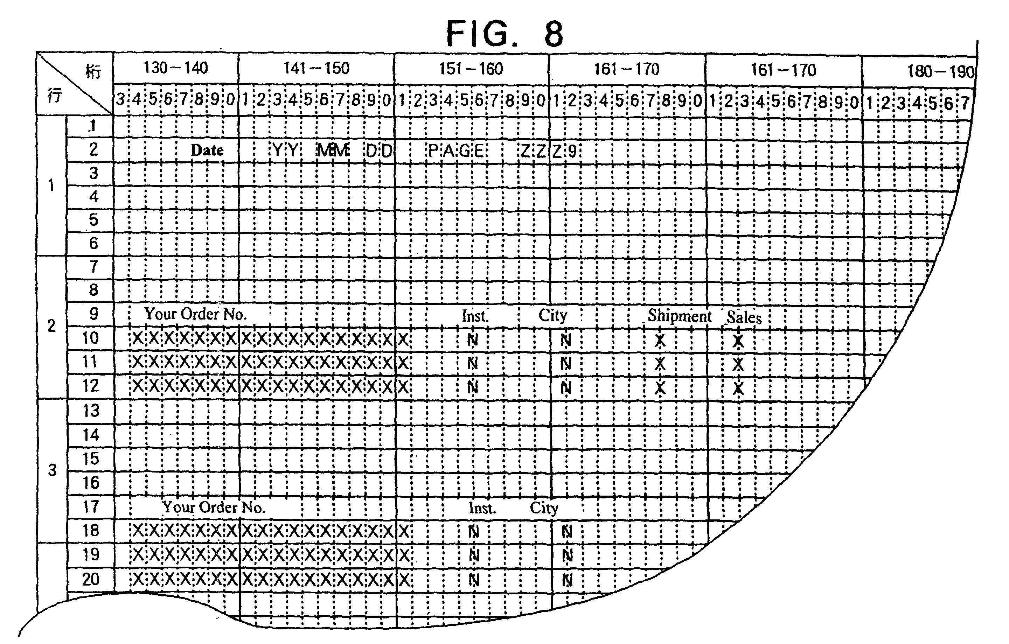

Also, in the case of creating software called a "delivery request list" which is for outputting a list of product delivery requests in the other company, the screen (Fig. 6) in which to control the output of the delivery request list and the list's vouchers (Fig. 7, Fig. 8) are to be decided.

Determination of the word

The determination of the word means to sort out all the words from the above-decided screens and vouchers.

For example, in Fig. 2 screen which is for the "sales entry," the following words can be sorted out:

OPCD
Sales No.
Sales Classification
Sales Date
Customer
Payment Due Date
Billing Destination
Consumption Tax
Staff in Charge
Slip-base Order No.
Delivery Location
Phone Number
Remarks
Product Codes
Quantity
Unit Price
Discount
Amount
Product Name
Type of Machines/Media
Article Number
Sales Total
Consumption Tax Total
Discount Total
Sum Total
Execution
F1
F3
F4
F8,

and these are the determined words.

Also, in the above "customer code reference" screen of Fig. 3, although not illustrated, there are such words as follows:

No.
Customer
Customer (abbreviation)

Customer Name
Address
Staff in Charge
Selection No.
Customer Name in katakana
Old Code
Execution
F12

The determined words are what were sorted out from these words.

Also, in the above "arrival confirmation entry" screen of Fig. 4, although not illustrated, there are such words as follows:

OPCD
Warehouse Codes
H/S Classification
Usher Classification
Execution
F1
F3
F4

The determined words are what were sorted out from these words.

Also, in the above "arrival confirmation entry" screen of Fig. 5, the following words can be sorted out:

No.
Warehouse Codes
Warehouse Name
Selection No.
Execution
F12

and these are the determined words.

Also, in the above "delivery request list" screen of Fig. 6, the following can be sorted out:

Delivery Request Date, Execution
F2
F3

and these are the determined words.

Also, with the vouchers of the above "delivery request list" of Fig. 7 and Fig. 8, the following can be sorted out:

Department
Delivery Destination
Billing Destination
Address 1
Address 2
Phone Number
Dept. 1
Staff in Charge
Staff in Charge of Store
Delivery Request Date
Delivery No.
Product Code
Product Name
Quantity
Update
Order Receive Date

Order Receive No.
Line
Staff in Charge of Order Receiving
Article Number
Date
Your Company's Order No.
Inst.
City
Delivery
Sales

For every word of these words, there are five (six, in some case) tense control vectors corresponding to it.

Making of the homogeneity map

The homogeneity map is made based on the determined definitive (screens or vouchers) identifier. The homogeneity map may be made by a worker or be automated mechanically.

On the homogeneity map, pallets (indicated with a box) corresponding to each screen and each voucher are connected each other with lines, and the connection accords with the regulation of the pallet chain function. The line means the pallet chain function. If screens and vouchers have already been determined, the connections between pallets are to be necessarily determined.

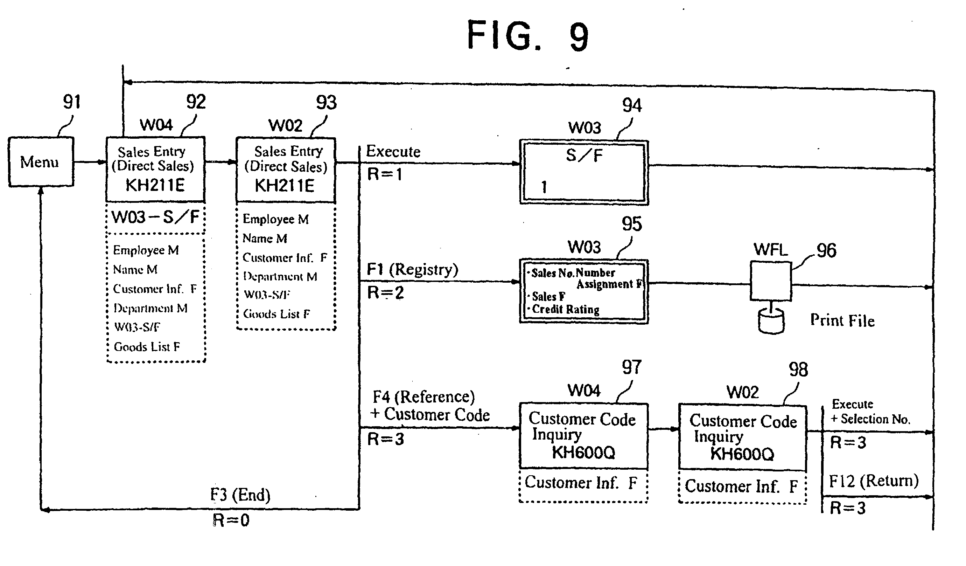

The Fig. 9 is a homogeneity map for the above "sales entry."

91 is a menu screen. One can select "sales entry" from the menu screen.

92 is the W04 pallet for the screen (Fig. 2) on which to enter sales data, whereas 93 is its W02 pallet.

94 is the W03 pallet at the time when "execution" has been selected in the screen on which to enter sales data.

95 is the W03 pallet at the time when "registration" has been selected in the screen on which to enter sales data. The WFL (Work File Area) 96 means to write data onto a file.

97 is the W04 pallet for the screen (Fig. 3) at the time when "reference" of "the customer code" has been selected in the screen on which to enter sales data, whereas 98 is its W02 pallet.

When "end" is selected in the screen on which to enter sales data, it returns to the menu screen.

In each pallet, the following are described: the kind of pallet (in the upper part outside the box); the name of screen (in the upper part inside the box); the screen identifier (in the lower part inside the box); and the determined file name (discussed later) (in the dot-line box in the lower part outside the box).

Above the line connecting pallets, the name of buttons (such as "execution" and "registration") are described, and below the line is described, the absolute classification of the process (R0 - R5)(discussed later).

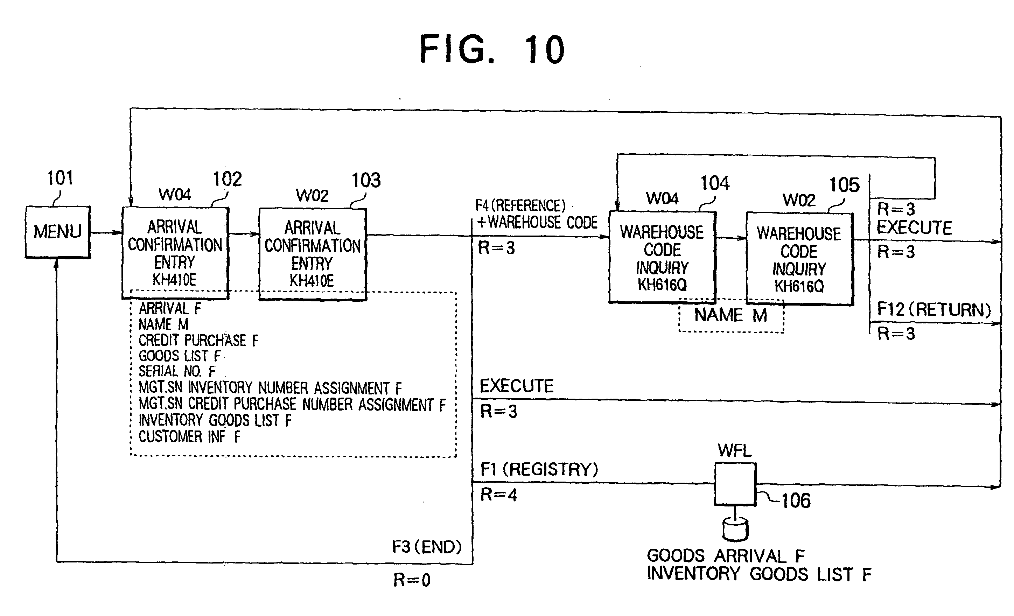

Fig. 10 is a homogeneity map for the above "arrival confirmation entry."

101 means a menu screen, on which "arrival confirmation entry" can be selected.

102 is the W04 pallet for the screen (Fig. 4) on which to enter arrivals confirmation, whereas 103 is its W02 pallet.

104 is the W04 pallet for the warehouse codes reference screen (Fig. 5) at the time when "reference" of the "warehouse codes" has been selected in the screen on which to enter arrival confirmation, whereas 105 is its W02 pallet.

When "execution" is selected in the screen on which to enter arrivals confirmation, it returns to the screen on which to enter arrivals confirmation.

When "registration" is selected in the screen on which to enter arrivals confirmation, the data is written onto a file via the WFL (Work File Area) 106.

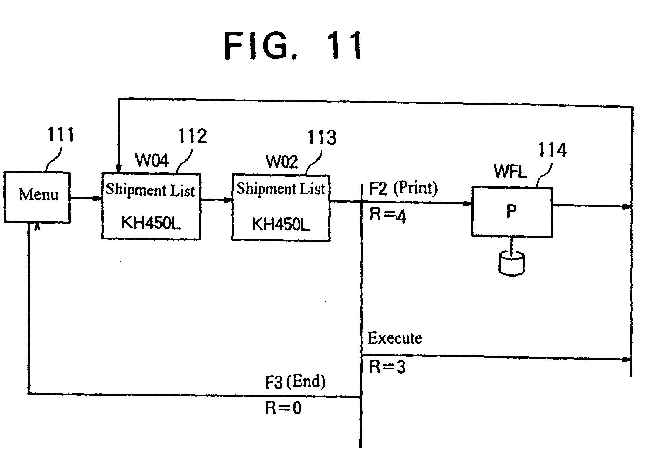

When the "end" is selected in the screen on which to enter arrivals confirmation, it returns to the menu screen. Fig. 11 is a homogeneity map for the above "delivery request list."

111 is a menu screen on which "delivery request list" can be selected.

112 is the W04 pallet for the screen (Fig. 6) on which to output the delivery request list, whereas 113 is its W02 pallet.

When "print" is selected in the screen on which to output the delivery request list, the vouchers are output (printed) via the WFL (Work File Area) 114.

When "execution" is selected in the screen on which to output the delivery request list, it returns to the screen on which to output the delivery request list.

When "end" is selected in the screen on which to output the delivery request list, it returns to the menu screen.

In the homogeneity map, as explained above, for example, if a certain screen has been determined, the process to be followed (such as display of screen, output of voucher, writing onto file, reading from file, operation) will be inevitably determined based on the contents of process of the screen (control words such as execution and registration), so that definitives such as screens are connected with lines in accordance with the above-mentioned contents of the process.

Determination of the file

Necessary files are determined based on the homogeneity map made and the words determined. That is, a necessary file can be inevitably determined from the homogeneity map and the word. A determined file is described in the appropriate lace such as the dot-line box in the lower part outside the box of the homogeneity map.

For example, in the W02 pallet indicated by the code 93 of Fig. 9, it is consequently known, from the homogeneity map and the words, that the following files are necessary:

    Employee M (master file)
    Name M
    Customer Information F (file)
    Department M
    W03-S/F
    Product List F.

Creation of the Tense Control Vector

A tense control vector (program) for each word is to be made. That is, a tense control vector for each word is to be coded.

In the tense control vector, there are the following six kinds:

    W04 duplicate vector
    W04 homogeneity vector
    W02 duplicate vector
    W02 homogeneity vector
    W03 duplicate vector
    W03 homogeneity vector

These six kinds of the tense control vector (program) are to be created for every word. In some case, however, the W02 duplicate vector is not necessary.

For example, a sample for making the tense control vector is explained herein, focusing on the word "sales" on the "Sales Entry (Direct Sales)" screen 92 as shown by Fig. 9.

The W04 duplicate vector is to be made as shown in Fig. 12.

First, the vector should have the logic to make judgment whether a data exists or not in the W02 data area of the word "sales data" of the screen 92 of Fig. 9 (step 1201). If it exists, the vector should have the logic to make a copy of the data into the W04 data area of the word "sales data" of the screen 92 of Fig. 9 (step 1202), thereby ending a process of the tense control vector.

If the data does not exist there, the vector should have the logic to judge whether a data exists or not in the W03 data area of the word "sales data" of the screen 92 (step 1203). If it exists, the vector should have the logic to make a copy of the data into the W04 data area of the word "sales data" of the screen 92 (step 1204), thereby ending a process of the tense control vector. If the data does not exist at step 1203, the vector should have the logic to end the process of the tense control vector.

What is important is that for any words, programs are to be made with always the same structure as the one stated above, which also applies to the following programs.

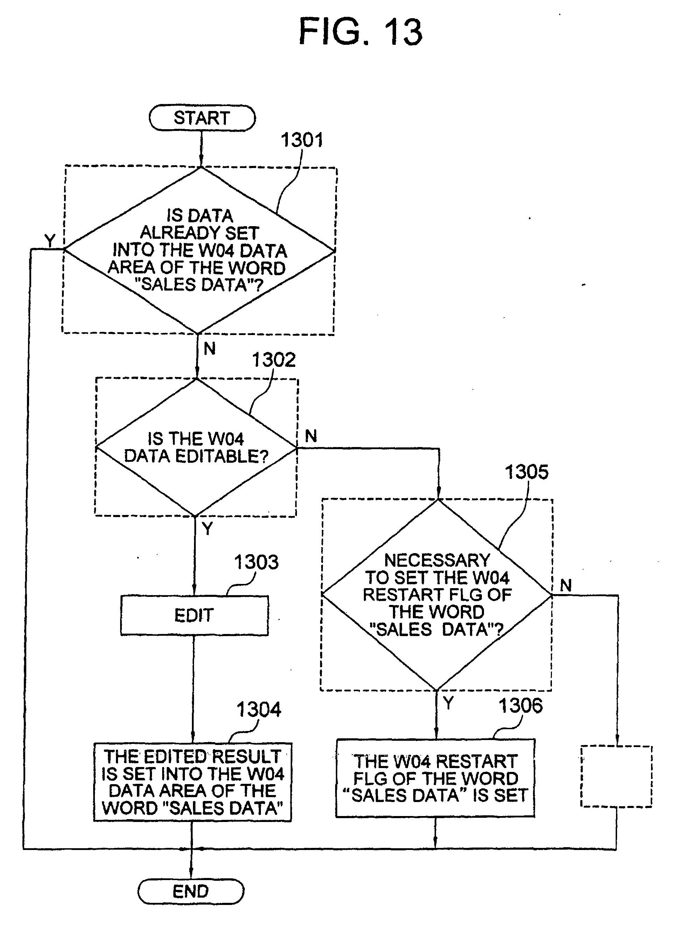

The W04 homogeneity vector is to be made as shown in Fig. 13.

First, the vector should have the logic to make judgment whether a data has already been set into the W04 data area of the word "sales data" on the screen 92 of Fig. 9 (step 1301). If the data has already been set, the vector should put an end to the process of the tense control vector.

If the data has not been set yet, the vector should have the logic to judge whether a data in the W04 data area of the word "sales data" on the screen 92 of the Fig. 9 can be edited or not by a data of any word including self or others in the W04 (step 1302). That is, for example, assuming that the data of the word "sales value" on the screen 92 of the Fig. 9 is calculated by the operation: "the price" $\times$ "the number of pieces", the vector should, as the data of the word "sales value" is editable if both the data of the word "price" and the data of the word "number of prices" exist, edit the data, (for example, the vector is to compute the data of the word "sales data" from the data existing in the W04 data area of the word "price" and the data existing in the W04 data area of the word "number of pieces" by using the operation above)(step 1303), and set the edited result (that is, the obtained data of the word "sales value" for the example above) into the W04 data area of the word "sales data" (step 1304), thereby patting an end to the process of the tense control vector.

When the data is judged to be not editable at step 1302, the vector should have the logic, if necessary (step 1305), to set a flag for reactivating the tense control vector, i.e. a restart FLG of W04 of the word "sales data" (step 1306). Therefore, the determination of the data of the word "sales value" is once reserved: for the above-mentioned example, the determination of the data is reserved until a data in the W04 data area of the word "price" and a data in the W04 data area of the word "number of pieces" are each set by the execution of the corresponding tense control vector, respectively. This means nothing but that the program stated in the present invention autonomously determines the significance.

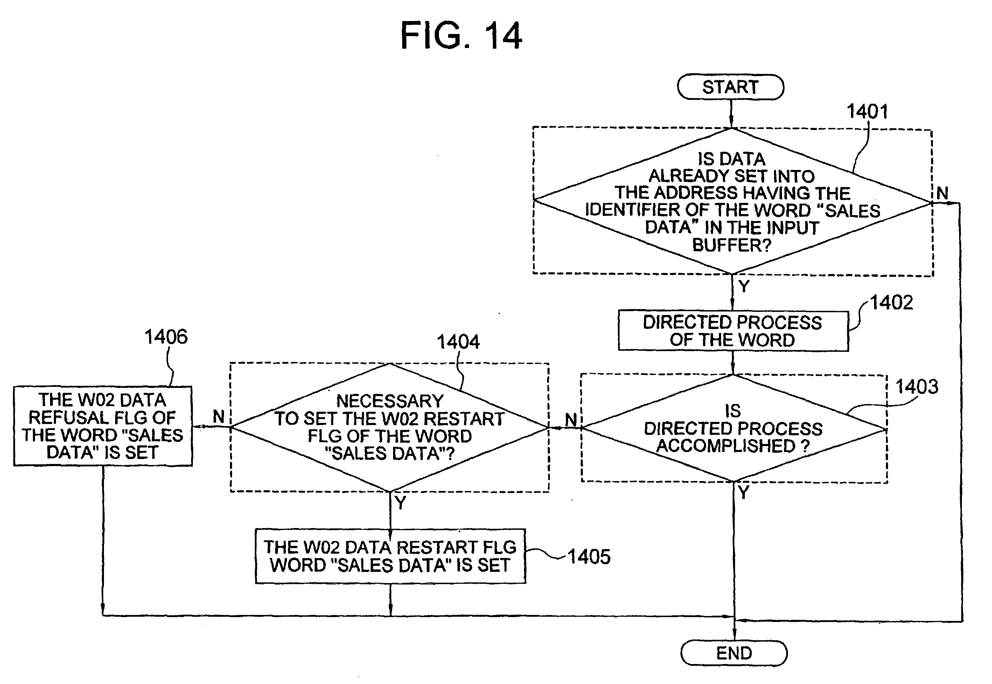

The W02 homogeneity vector is to be made as shown in Fig. 14.

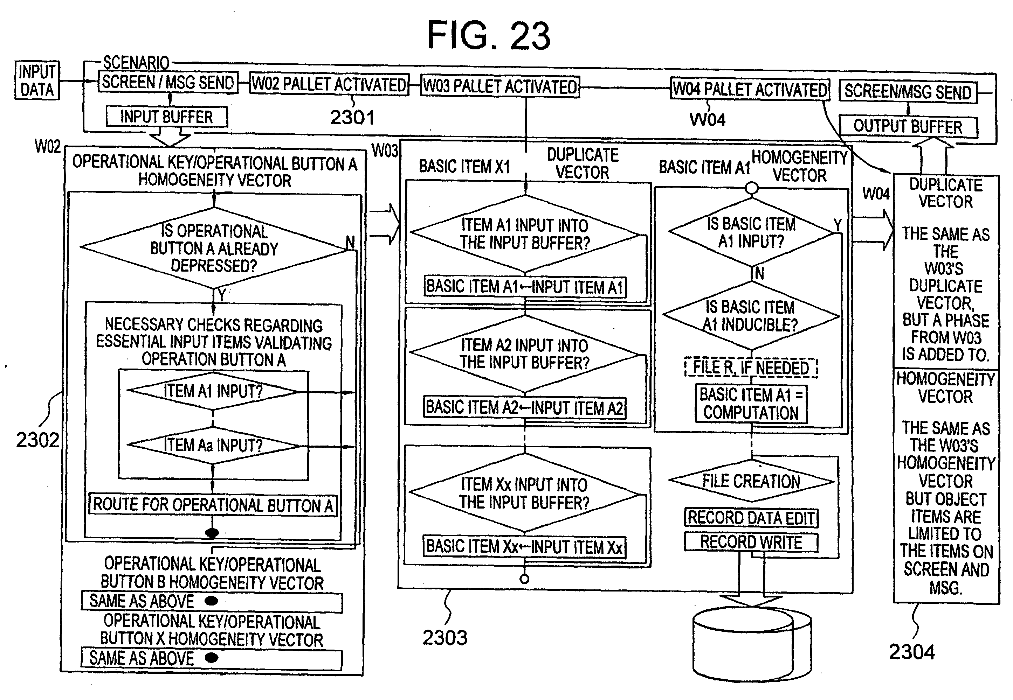

First, the vector should have the logic to make judgment whether a data is already set or not into the input buffer (for example, the address having the identifier of the word "sales value", which belongs to the buffer area for outputting the data input by "Screen/MSG Receive" in the Scenario of Fig. 23 onto the "W02")(step 1401). If it is not yet set, the vector should put an end to the process of the tense control vector.

If the data is already set, the vector should have the logic to perform a directed process. Here, the "directed process" is meant to be, as stated above, a setting of the homogeneity route FLG in case of a control word, or a setting the data in the input buffer onto the W02 data area of the corresponding word in case of a non-control word. In this context the word "sales value" to be targeted is not a control word, so that the vector should make, as the directed process, a setting the data in the input buffer onto the W02 data area of the word "sales value".

Then, the vector should confirm whether the directed process is accomplished or not (step 1403). If the directed process has not been accomplished and if it is necessary to set the W02 restart FLG of the word "sales data" (step 1404), then the vector should set the restart FLG (step 1405), thereby putting an end to the process of the tense control vector.

If it is unnecessary to set the restart FLG at step 1404, the vector should have a logic to set the W02 refusal FLG of the word "sales data" (step 1406), thereby putting an end to the process of the tense control vector.

If the directed process is accomplished at step 1403, then the vector should have a logic to put an end to the process of the tense control vector without doing anything.

Further, for example in the case of the control words such as the "execute key," the above-mentioned step 1402 will become a process for setting a homogeneity map flag. The homogeneity map flag (R = 0 - 5, however, R = 0 is exceptional) is uniquely determined in accordance with the nature of the control word and the flag is displayed on the homogeneity map. By this homogeneity map flag it becomes possible to process distributing the homogeneity routes in the pallet chain function, as will be discussed later.

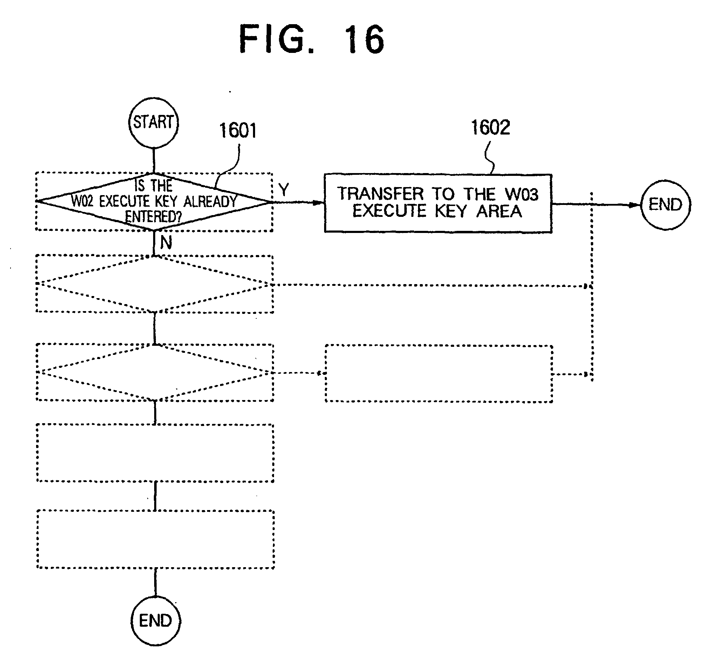

The W03 duplicate vector is to be made as shown in Fig. 16.

First, the vector should have the logic to make judgment whether a data already exists or not in the W02 data area of the word "sales data" (step 1601). If the data already exists, the vector should make a copy of the data into the W03 data area of the word "sales data" (step 1602), and to put an end to the process of the tense control vector.

If the data does not exist at step 1601, the vector should put an end to the process of the tense control vector without doing anything.

As set forth above, the data processing with regard to the word is performed without accepting the effect of the other words processing. This is to say that each tense control vector program in the present invention does determine the significance autonomously.

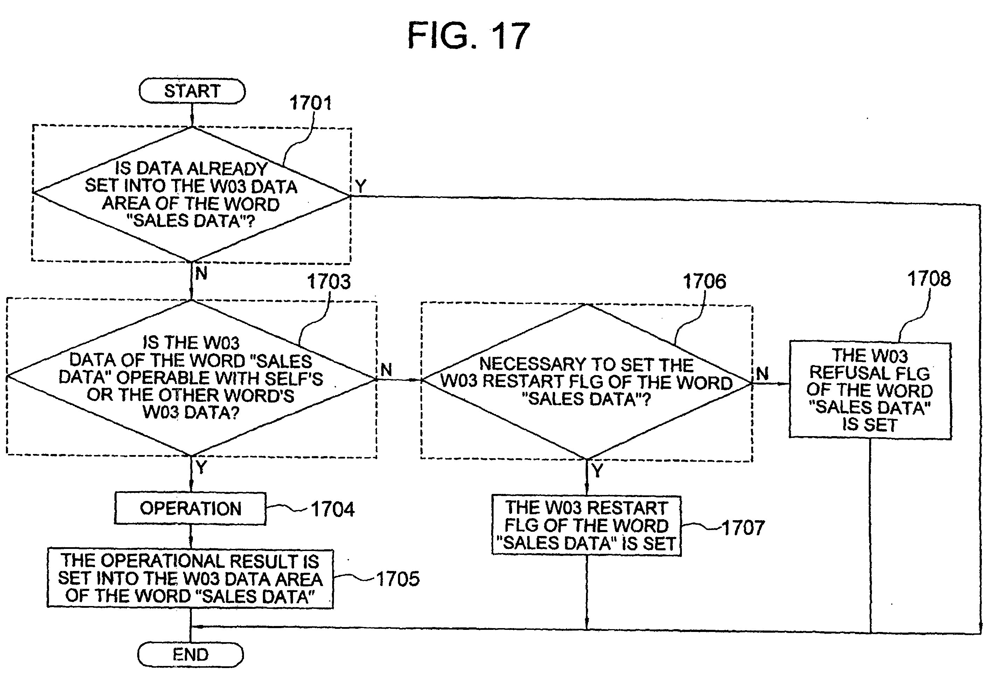

The W03 homogeneity vector is to be made as shown in Fig. 17.

First, the vector should have the logic to make judgment whether a data is already set or not into the W03 data of the word "sales data" (step 1701). If it is already set, the vector should put an end to the process of the tense control vector.

If the data is not set, the vector should have the logic to make judgment whether a data of the W03 of the word "sales data" can be induced or not with the data of the W03 of the self or the other word (step 1703). That is, for example, if the data of the word "sales data" is calculable from the operation: "the price" $\times$ "the number of pieces", as is the same as the situation of the step 1302, then the vector should have a logic to make a judgement where there already exists a data in the W03 data area of the word "price" and in the W03 data area of the word "the number of pieces." If there exists a data, then the vector should have a logic, deciding that the data is calculable, to calculate the data (that is, for the example above, the vector should calculate the data of the word "sales data" from the word existing in the W03 data area of the word "price" and the word existing in the W03 data area of the word "the number of pieces" by using the above-mentioned calculating expression) (step 1704), then to set the result of the calculation (i.e., the data of the word "sales data" in the example above) into the W03 data area of the word "sales data")(step 1705), thereby putting an end to the process of the tense control vector.

When the calculation is judged to be impossible at the step 1704, if necessary (step 1706), the vector should set a flag for reactivating the the tense control vector, i.e. the restart FLG of W03 of the word "sales data" (step 1707). That is, also in this case, as the same as above, the determination of the data of the word "sales value" is once reserved: for the above-mentioned example, the determination of the data will be reserved until data are set into the W03 data area of the word "price" and into the W03 data area of the word the "number of pieces" by the executions of the corresponding tense control vectors. This leads to the effect that, as the processing order of the tense control vector has nothing to do with the processing order of the other word's tense control vector, the reservation above will be ceased after all and the data will be set, so that the same result is assured even if the processing order varies.

Making of the pallet function

The pallet function for W04, W02 and W03 should be made. Fig. 18 shows the structure paradigm of the pallet function. The pallet function (program) having such structure may as well be made for each of W04, W02 and W03, as will be set forth in the followings.

First, the pallet function should have a logic to open a file (step 1801). That is, for example, the pallet function concerned with the W04 should have a logic to open a file of one predetermined W04 out of a plurality of W04 pallets, and then to execute each duplicate vector and homogeneity vector in the consecutive order (step 1802, step 1803).

Thereafter, in the case that the pallet restart flag has been set (step 1804), the function should reset the flag (step 1805), as well as execute each duplicate vector and homogeneity vector in the consecutive order (step 1802, step 1803). That is, the pallet function in co-operation with the pallet activating flag of each pallet, enables the determination of the autonomous significance of the program.

On the other hand, when the pallet restart flag has not been set, the function should close the file (step 1806) and put an end to the process.

Assembling into the Pallet Chain Function

The structure of the pallet chain function is identical in any software. Accordingly, the tense control vector and the pallet function made as explained above simply needs to be assembled into the pre-made pallet chain function.

The structure paradigm of the pallet chain function is shown in Fig. 19.

That is, the pallet chain function should have a logic to determine information to be transmitted (step 1901). The information to be transmitted is meant to be a screen to display. In the case of the homogeneity map shown in Fig. 9, for example, when the "reference" of the "customer code" in the sales data entry screen (ref. Fig. 2.) is selected (which means that a homogeneity map flag of R = 3 has been valid in the W02 pallet of "customer code"), the pallet chain function should determine the customer code reference screen (Fig. 3) as the information to be transmitted.

When the information to be transmitted contains the information for closing the system (step 1902), the function should have the logic to close the system (step 1903). The information for closing the system is that, explaining by referring to the homogeneity map shown in Fig. 9, for example, the "F3" has been selected in the sales data entry screen (Fig. 2) (which means that a homogeneity map flag of R=0 has been valid in the F3's W02 pallet). To close the system is, speaking of the above example, to return to the menu screen.

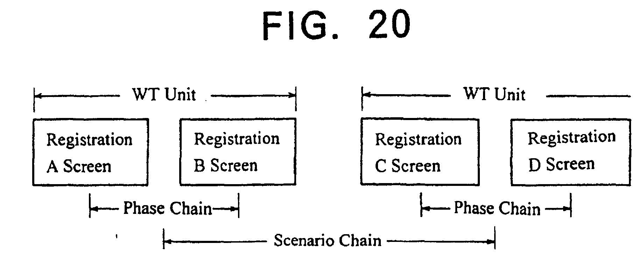

Next, the function should to make judgment whether to continue or not inside the WT (Walk-Through) unit (step 1904). This step is concerned with exceptional process. WT is a functional unit processed by an input by human. That is, the WT unit is, as shown in Fig. 20, for example, one unit composed by binding the entry screen used for data entry and the reference screen used for the reference to data upon entering the data.

For example, by explaining in reference to the homogeneity map shown in Fig. 9, the WT unit is one unit composed by binding the sales data entry screen (ref. Fig. 2) and the customer code reference screen (ref. Fig. 3). However, when screens of other homogeneity maps, for example the arrival confirmation entry screen (ref. Fig. 10 and Fig. 4.), are needed, the confirmation entry screen must be unit-teamed with these screens stated above. Thereupon, as shown in Fig. 20, if necessary, the pallet chain should perform the scenario chain, or the chain with the other WT (step 1905, 1906). This will become particularly effective, when coping with a huge program.

In the case of the continuation inside the WT unit, the pallet chain function should set all pallets of the WT unit (step 1907). For example, in the case of the homogeneity map shown in Fig. 9, the function should set all the pallets concerned with this whole homogeneity map (W02 - W04) in the working memory, respectively.

Then, the function should at first execute the W04 pallet corresponding to the screen which corresponds to the menu item selected on the menu screen (step 1908). That is, the function should execute the W04 pallet in which the W04 duplicate vectors and the W04 homogeneity vectors for every word belonging to the sales entry (direct sales) screen (whose definitive identifier is KH211E) have been set by the pallet function shown in Fig. 18. By this step, data concerned with the screen to display will be determined.

Then, the pallet chain function should execute the transmission function (step 1909). That is, the function should transmit a screen in which all the data have been set to a display means, for example, a CRT.

Thereafter, the function should have the logic to execute the receiving function (step 1910). That is, the function should receive the screen, in which all the data have been input (from display means, for example, a CRT).

Then, the pallet chain function should make judgment whether the received data is normal or not (step 1911). If abnormal, the function should resume the procedure from the beginning. That is, the function should make judgment if a data violating the regulation exists or not.

Next, the function should execute the W02 pallet corresponding to the screen to which the received data belongs (step 1912). That is, the function should execute the W02 pallet in which all W02 homogeneity vectors for every word belonging to the sales entry (direct sales) screen whose definitive identifier is KH211E) have been set by the pallet function shown in Fig. 18. By this step, the input data will be determined.

Next, a homogeneity map will be determined (step 1913, step 1914). As explained above, the homogeneity map is judged by the homogeneity map flag (R = 1 to 5) contained in the W02 homogeneity vector.

When the homogeneity map flag R = 1, the function should execute the corresponding W03 pallet which is the only W03 pallet in the software to be produced and on which all W03 tense control vectors for all words belonging to all definitives necessary for the software have been set by the pallet function shown by Fig. 18 (step 1915). The W03 pallet in this case does not perform data registry into a file. For example, the line of the W03 pallet 94 shown in Fig. 9 is executed. Then, the function should have a logic to return to the first step (step 1901). That is, the homogeneity map in the case of R = 1 only performs data processing (ref. Fig. 9) .

When the homogeneity map flag R = 2, too, the function should execute the W03 pallet (step 1916). The W03 pallet in this case performs data registry into a file. For example, the line of the W03 pallet 95 and the line of the WFL 96 are executed. Then the function should have a logic to return to the first process (step 1901). That is the homogeneity map in the case of R = 2 executes data processing as well as a recording data onto a file (ref. Fig. 9).

When the homogeneity map flag R = 3 to 5, the function should return to the first process (step 1901) as it is.

In this connection, the homogeneity map as shown by R = 3 performs processing to return to the W04 pallet (both homogeneous and heterogeneous) without doing anything farther (ref. Fig. 9).

The homogeneity map as shown by R = 4 performs recording data in a file as it is (ref. Fig. 10).

The homogeneity map as shown by R = 5 performs taking out data from a file as it is (not shown).

To be noted, the pallet chain function shown in Fig. 19 is for on-line use. The pallet chain function for off-line use is as shown in Fig. 15.

In summary,

At first, the pallet chain function should have the logic to determine a screen to display (step 2101) and to execute the W04 pallet on which the W04 duplicate vector and the W04 homogeneity vector corresponding to every word for all words belonging to the determined screen (step 2102). By this, screen data is edited and the edited screen is displayed (step 2103).

When the user's operation is done to this displayed screen, the function should have the logic to receive the screen (step 2104) and to activate the W02 pallet corresponding to the screen to which the received data belongs (step 2105). By this a homogeneity map route and the next screen to be displayed is judged.

Then, the function should have the logic to judge the homogeneity map (step 2106), and in the case of the homogeneity map 1 or 2 (step 2107), the function should activate the W03 pallet. By this, the data operation processing is done.

When the data operation processing is finished or in the case of other than the homogeneity map 1 or 2 above, the function returns to step 2101.

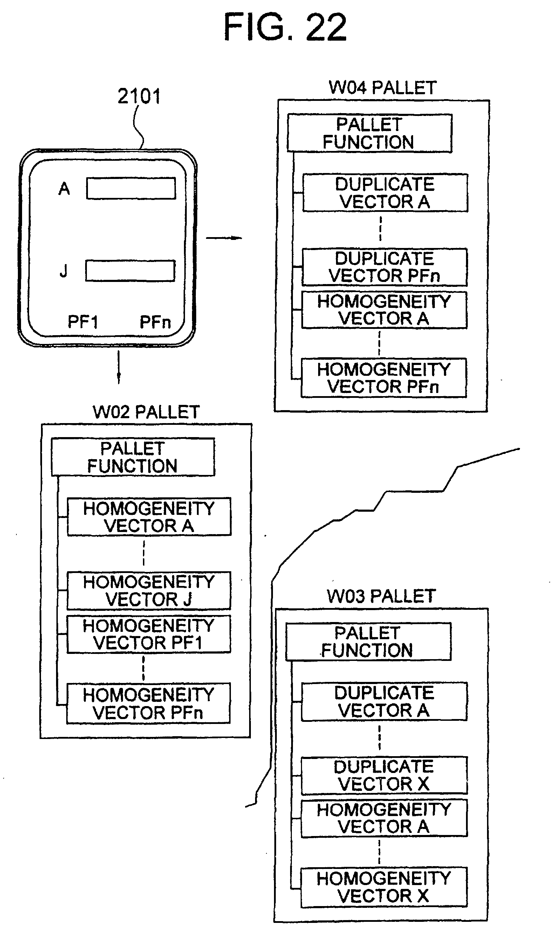

Fig. 22 shows the structure inside the pallet.

As shown by the Fig. 22, for the terms A - PFn on the screen 2201, a pallet function, duplicate vector A - PFn and homogeneity vector A - PFn exist inside the W04 pallet, as well as a pallet function, homogeneity vector A - J and the homogeneity vector PF1 - PFn exist inside the W02 pallet. Inside the W03 pallet, a pellet function, duplicate vector A - X and homogeneity vector A - X exist ("A" - "X" are meant to be all words belonging to all definitives inside the system).

A logic paradigm of the tense control vector is shown in Fig. 23. As shown in the Fig. 23, in the pallet chain function (scenario) 2301, when data is input and a screen/message is received, W02 pallet, W03 pallet and W04 pallet are activated in their order. When the W02 pallet is activated, the process shown by the code 2303 is executed. When the W03 pallet is activated, the process shown by the code 2303 is executed. When the W04 pallet is activated, the process shown by the code 2304 is executed.

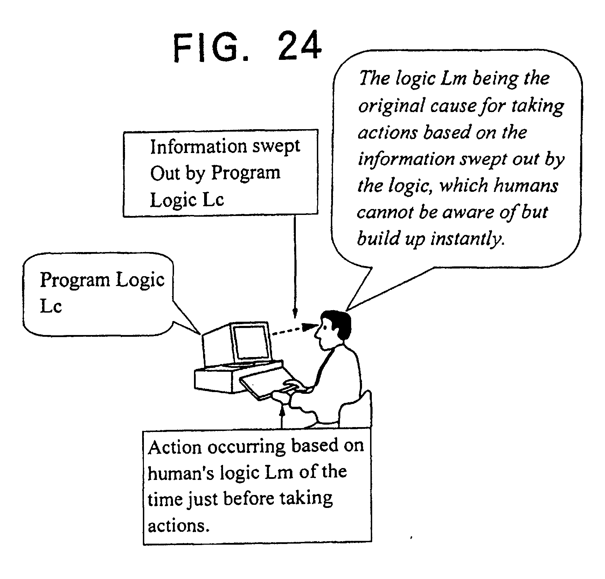

Fig. 24 is a diagram showing the characteristics of the logic in Lyee.

Suppose the program logic is Lc, and the logic being a base for causing actions in accordance with the information swept out by the program, which humans cannot be aware of but can instantly conduct, is Lm. In the traditional way of making software, the logic Lm (impossible to be realized) being a base for causing human actions has been forced to be fabricated, a process (procedure) and a function both binding human actions have been fixed as specifications (fabricated by SE with his or her experience or knowledge), thereby a program based thereupon has been made. That is, Lc = Lm

was its provision.

Lyee's software, contrary to the traditional method of making software, does not contain Lm, and the program to be made works in accordance with human's capricious conducts.

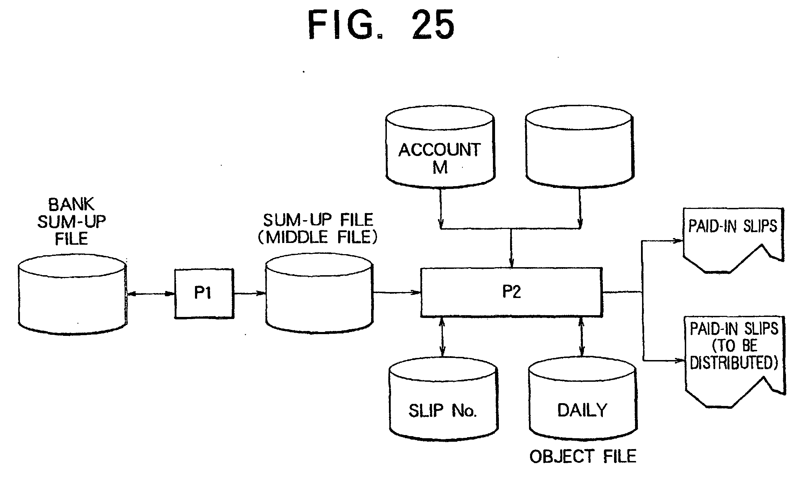

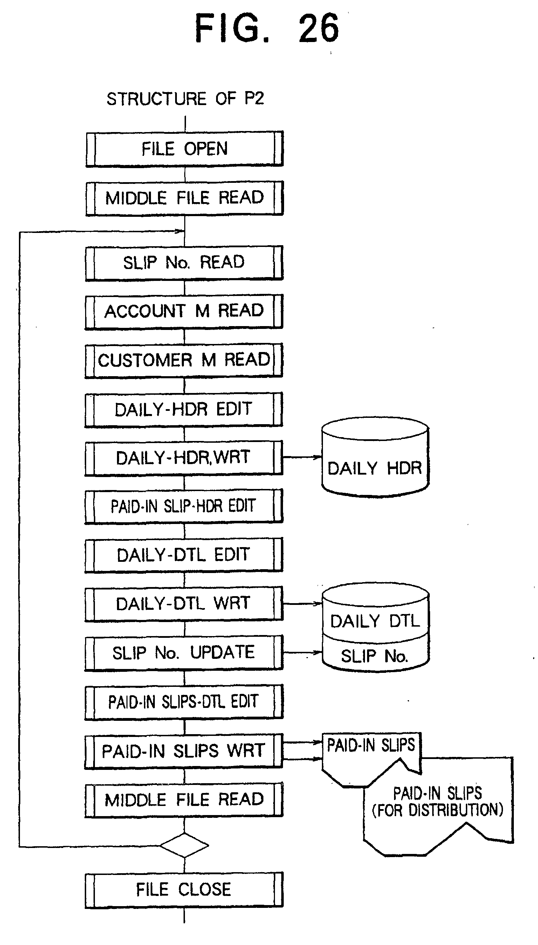

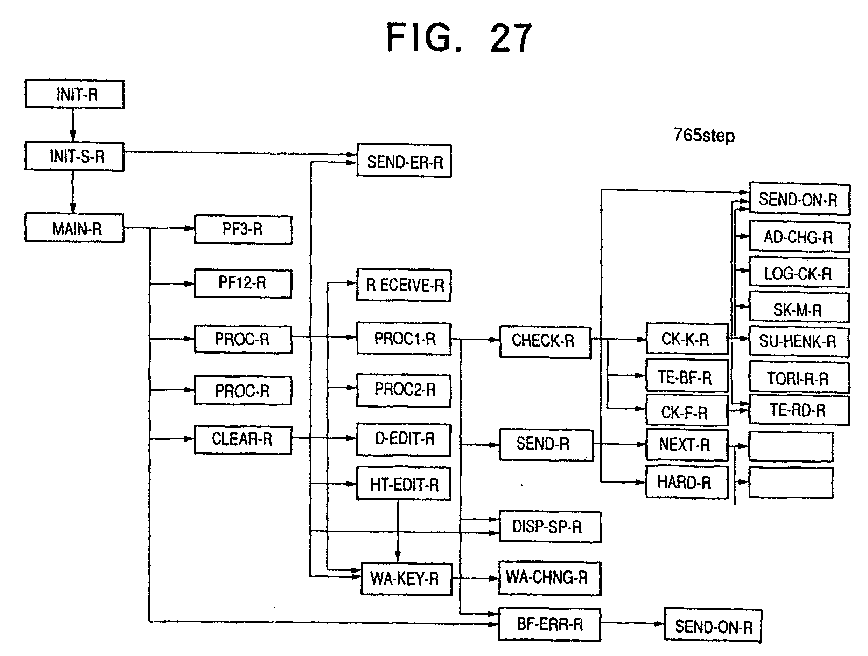

Fig. 25 and Fig. 26 show the structure of the traditional-type programs, and Fig. 27 shows the module configuration of the traditional-type programs.

As understood from these figures, the traditional-type programs can be referred to as process transaction of functional division type. For this reason, the structural condition is made complicated, as well as the conditions of the module configuration is also puzzling.

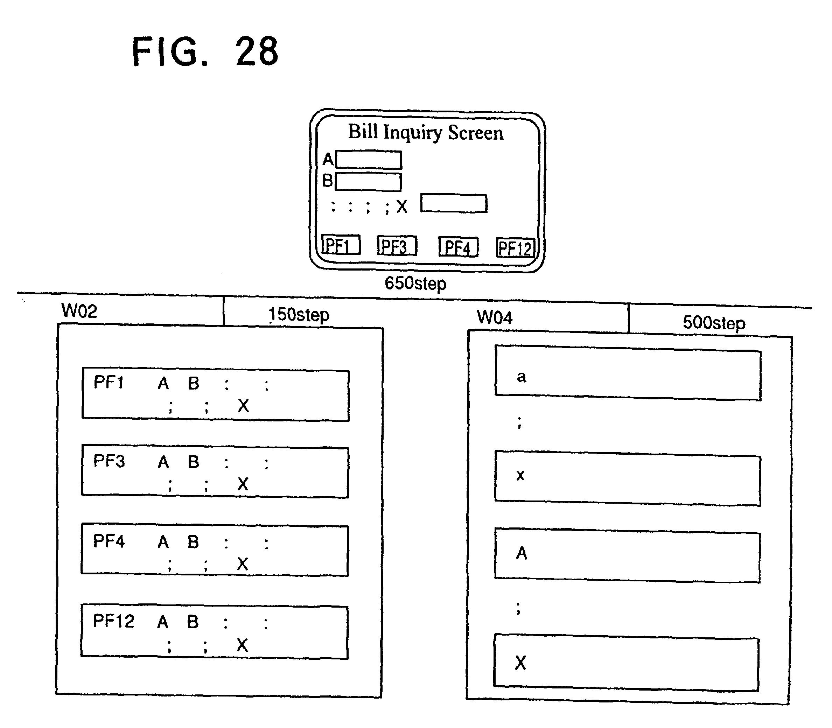

Fig. 28 shows the structure of the Lyee-type program.

As understood from this figure, the Lyee-type program features the followings: the configuration is simple; the element unit is processed by the unit of word; the element content is simple and independent; and the program logic does not contain composition conditions (handling procedure) like traditional-type programs.

In the following, how to grasp business expertise and function as well as the resulting effects from the stand point of Lyee will be explained.

(1) There is no need for business expertise

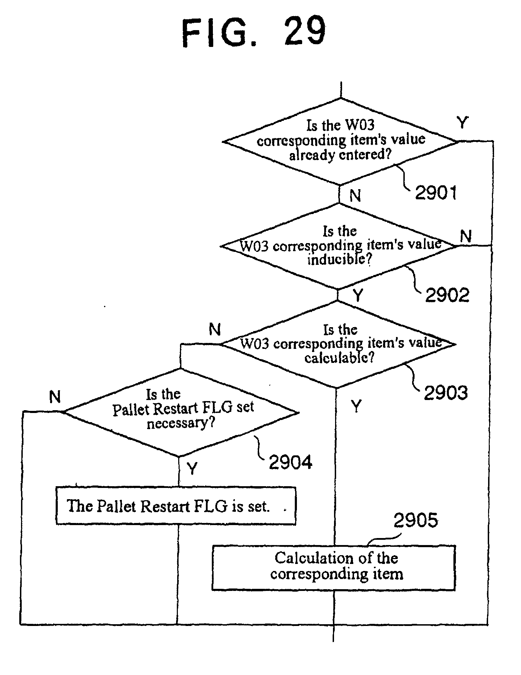

Fig. 29 shows the W03 homogeneity vector.

In step 2901, the vector should have the logic to confirm whether the field's value is "space" or "zero". (judging from the item definition document). The judgment of this logic does not require business expertise; knowing the rule of Lyee is only needed.

In step 2902, the vector should have the logic to confirm whether the item in the right side (Starting point) of the corresponding item's expression (judging from the item definition document) exist or not in the W03 area. The judgment of this logic does not require business expertise; knowing the rule of Lyee is only required.

In step 2903, the vector should have the logic to confirm whether the value of the item of the right side (Starting point) of the corresponding item's expression (judging from the item definition document) is calculable ("space" or "zero") or not. The judgment of this logic does not require business expertise; knowing the rule of Lyee is only requested.

The step 2904 is a scheme which guarantees the operational order of the tense control vector. The judgment of this logic does not require business expertise; knowing the rule of Lyee is only necessary.

In step 2905, the vector shall calculate the items from the item definition document (such as expressions, etc.) users have confirmed.

Accordingly, in order to assemble Lyee's logic, the "item definition document such as expressions" is necessary, but the sequence of the process (which is called "business expertise") is not required.

(2) Lyee deals with only synchronous data and dismiss a process (handling of asynchronous data).

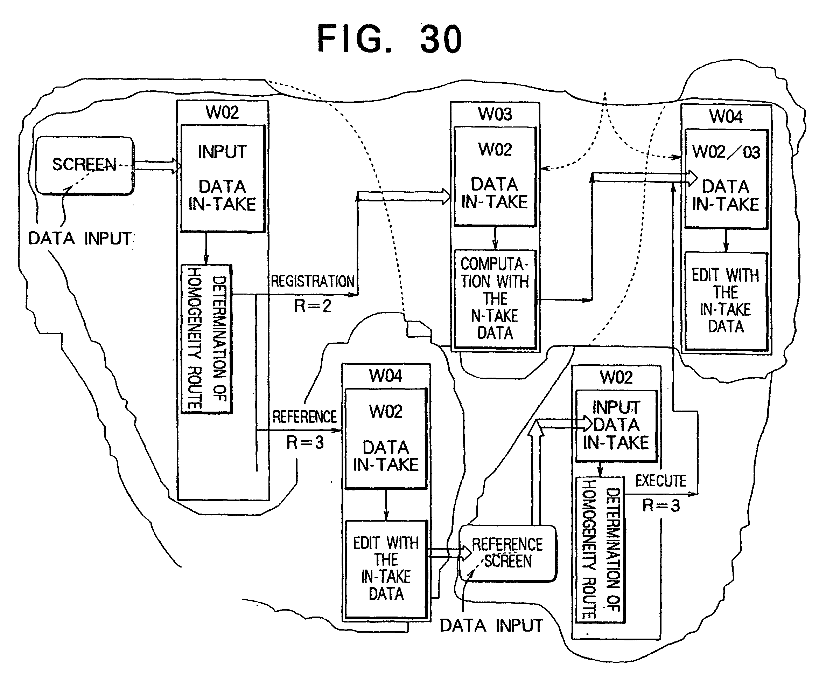

In Lyee, by introducing the "duplicate vector," it is possible to handle only the synchronous data. That is, in Lyee, as shown in Fig. 30, by handling only the synchronous data operational procedure conditions itself disappears, or is no longer needed, whereas in the traditional methodology, much time was spent on examining the operational procedure, which results in worsening the productivity and the maintainability.

(3) The only one W03 pallet will do.

When realizing the logicalization of humans (i.e., to think communicable sentences, to take actions,....), it can be said from a biological point of view that all one's will and muscles (as represented by all brain cells) is intertwined each other. And, the right-side brain or the left-side brain primarily works in accordance with an object area to be logicalized. The logic of software (the logicalization), by nature, must be the same as this (because the software logic is nothing but the logic made by humans).

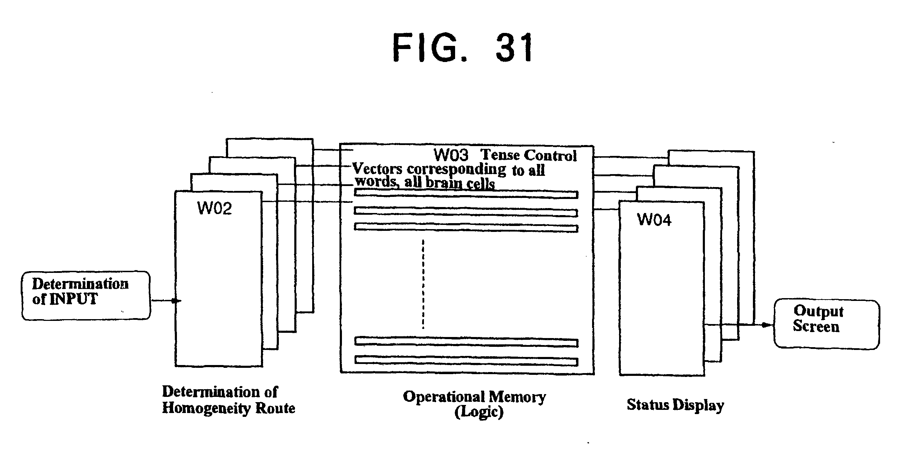

As shown in Fig. 31, the W03 pallet of Lyee is an area assuming the role of "logicalization," so that the W03 pallet installs all the words in a system, which is equivalent to all one's will and muscles, in one area as synchronous data. In the case of Lyee, tense control vectors corresponding to all words are all intertwined each other (all tense control vectors work once, and as a result only the tense control vectors with significance execute their aimed process).

That is, traditionally, words (data) necessary for the function aimed at have to be examined and analyzed in advance before the data definition part is to be designed. On the contrary, in the case of Lyee, all needs to be done is that all words be defined as they are and that the individual tense control vectors be assemblied into the logic as explained above.

(4) There are two kinds of the logic.

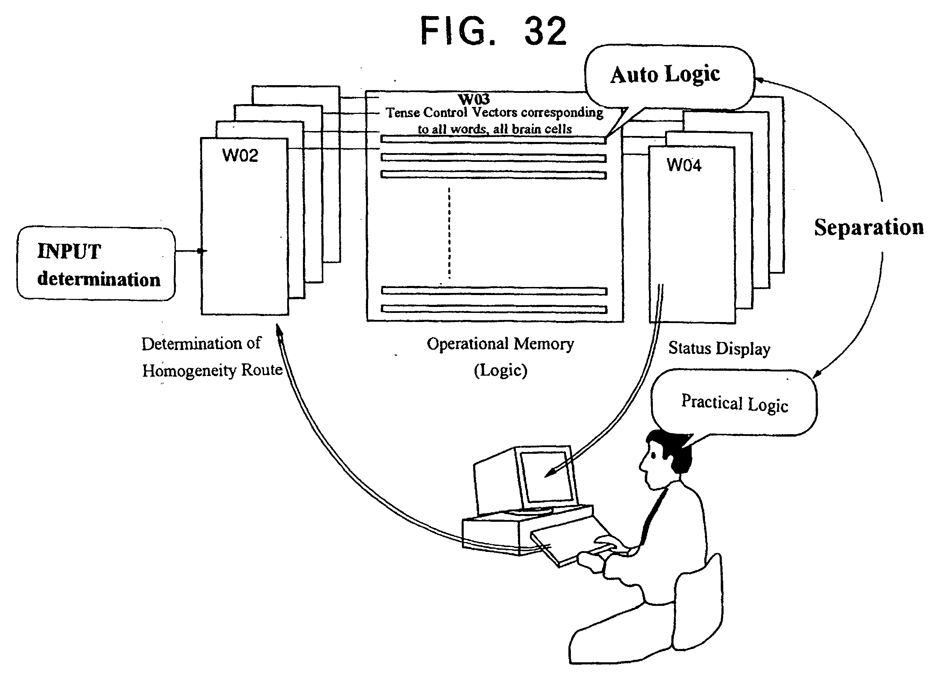

In the traditional software, the automatic logic was composed of the combination of an operational logic and an automatically self-run logic. On the other part, in the case of software made by Lyee method, as shown in Fig. 32, the automatically self-run logic and the operational logic are separated. That is, the automatically self-run logic exists in the W03 pallet, and the operational logic exists in the logic in a human brain.

(5) Checking

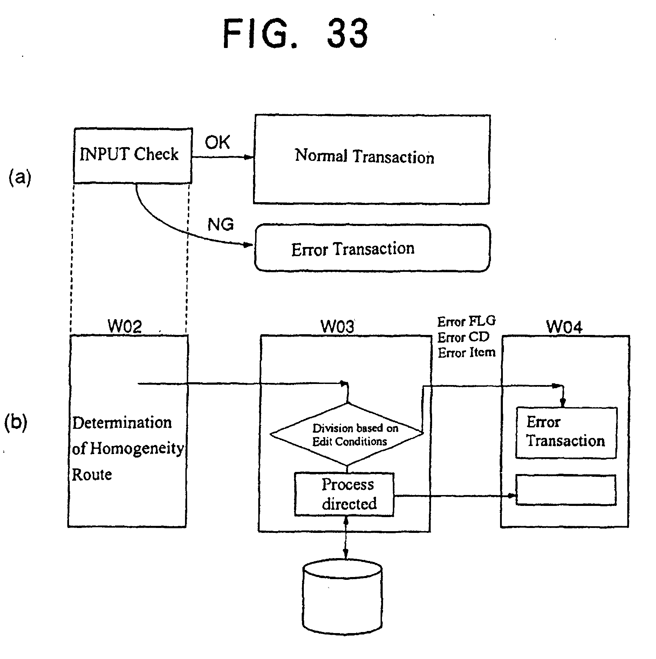

The traditional software, as shown in Fig. 33 (a), has been structured to be of a flow of checking against the input, performing a normal process in case of "OK", or performing an error transaction in case of "NG." Accordingly, all error conditions of multiple items must be examined beforehand.

On the other hand, in Lyee software, as shown in Fig. 33 (b), the only homogeneity map is determined without executing the input check except for the property verifying in the W02 pallet. In the W03 pallet, the selection is done concerning whether the process to be directed can be accomplished or not, and if the process to be directed cannot be executed, an error transaction is performed in the W04 pallet.

Explained next is the application range of Lyee in the system development step.

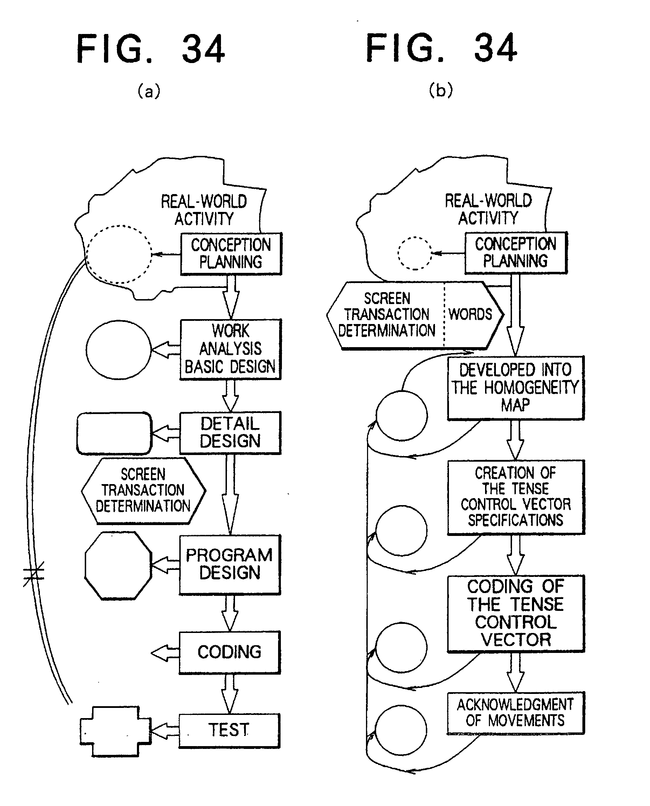

Fig. 34 (a) shows the traditional software development method. Traditionally, software has been developed through the following steps: scheme planning, job analysis and basic design, detail design, programming design, coding, and tests. Traditionally, development from the "job analysis and basic design" step to the "programming design" step has been performed depending upon SE's experience and expertise and human's abilities in coordinating meetings with users.

Fig. 34 (b) shows the Lyee's software development methodology. In Lyee, software is developed through the following steps: after the scheme planning, it will develop into a homogeneity map, from which the tense control vector specifications is made, leading to the completion through manufacturing and movements confirmation. The working method only needs to accord with the rule based on the Lyee theory. So to speak, in the traditional method, the upper-stream requirement and the lower-stream source have been linked up each other by the SE's ability. On the other hand, in Lyee, the upper-stream requirement and the lower-stream source are linked by the theory of Lyee.

In the following, the working steps for the development of the Lyee-applied software is more specifically explained.

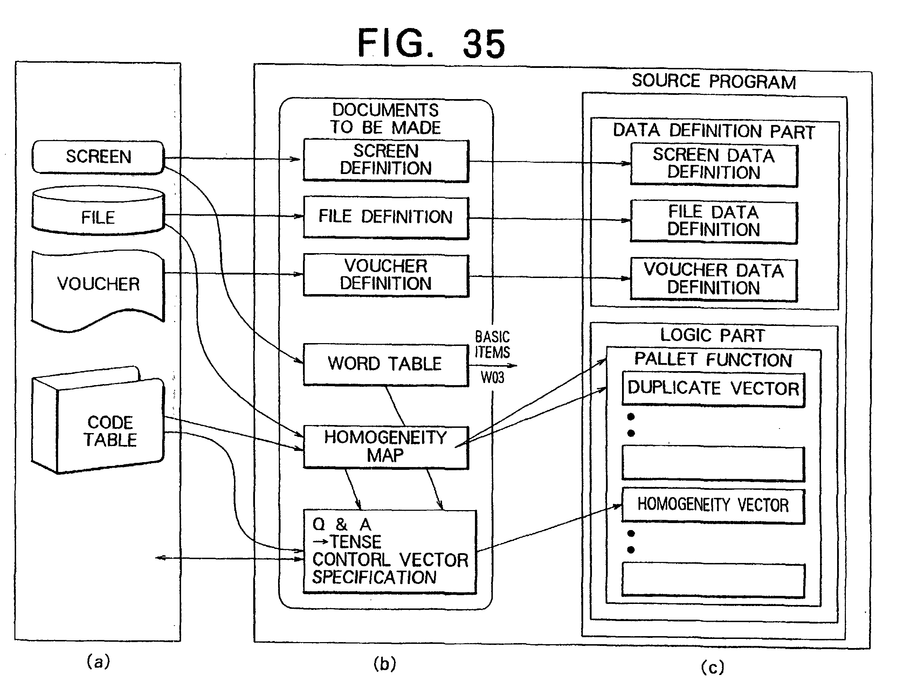

Fig. 35 (a) shows a hand-over document given by users to the development side. What are to be handed over to the development side includes screens, files, vouchers, and code tables. In this regard, as shown in Fig. 35 (b), the development side makes screen definition document, file definition document, voucher definition document, table of words, homogeneity maps, and tense control vectors specifications based on the discussion with users. Then, as shown in Fig. 35 (c),

the source program is made based on these documents.

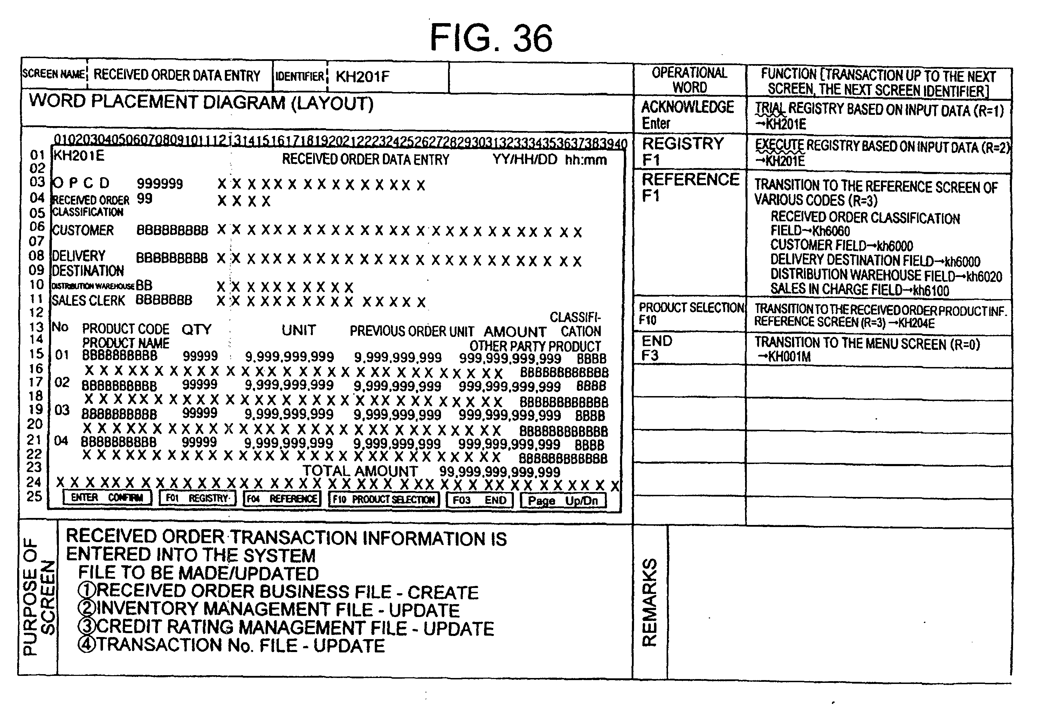

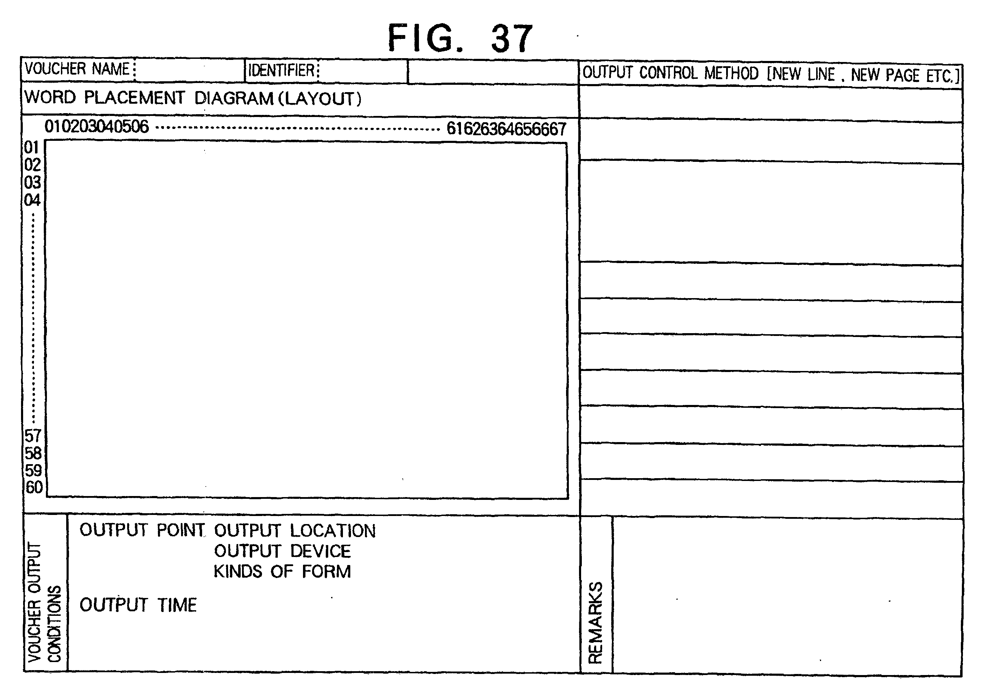

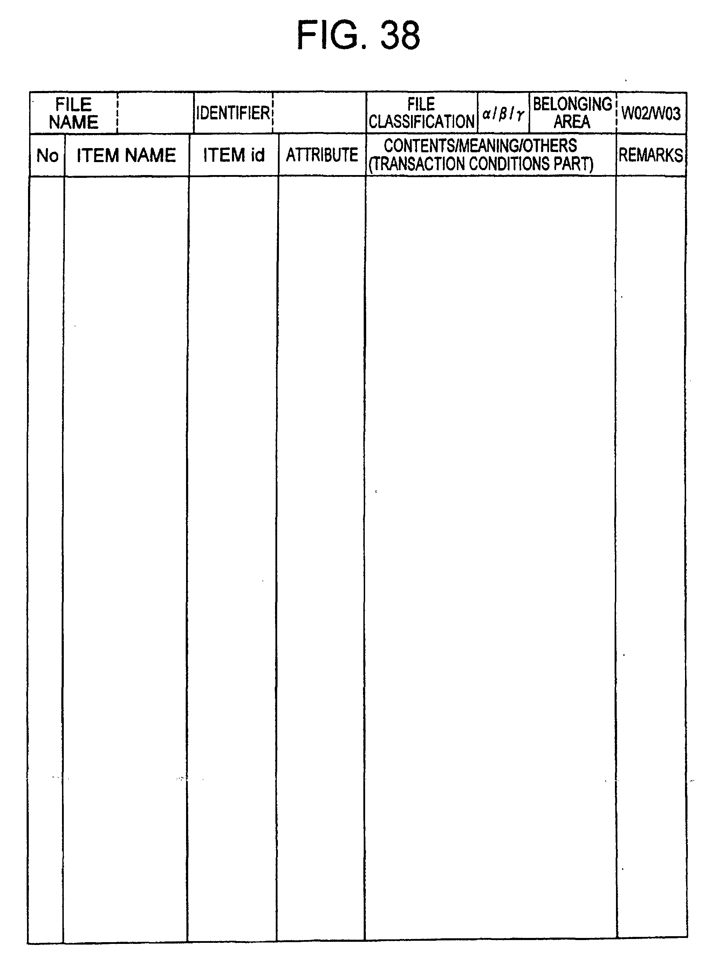

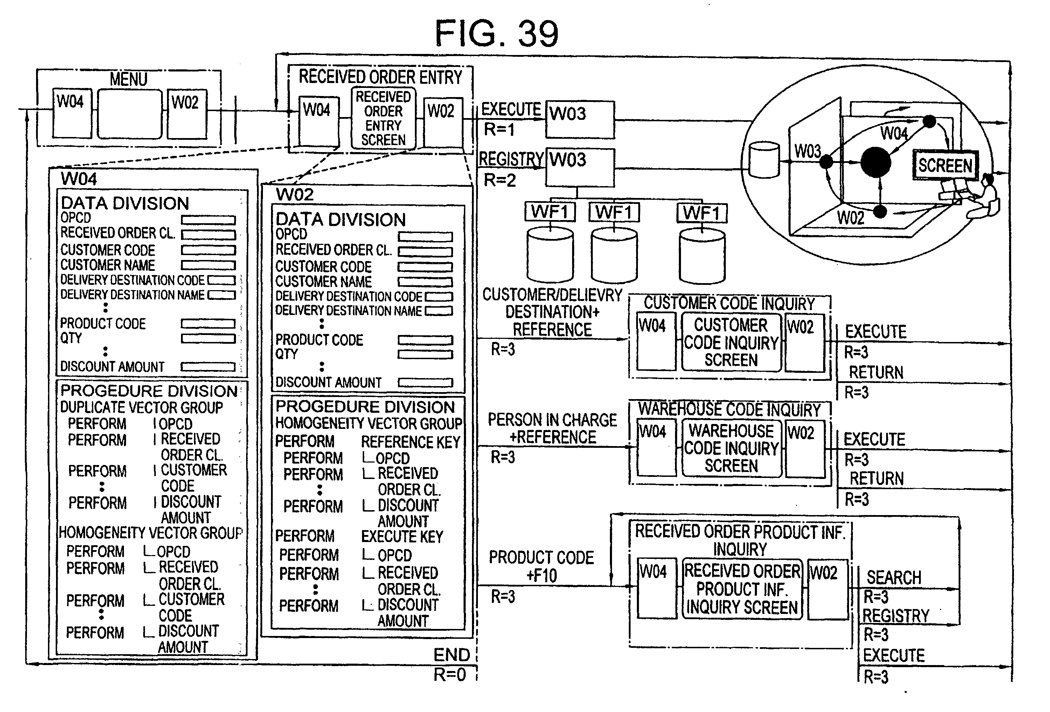

Fig. 36 shows an example of the screen definition document. Fig. 37 shows an example of the voucher definition document. Fig. 38 shows an example of the file definition document. Fig. 39 shows an example of the homogeneity map.

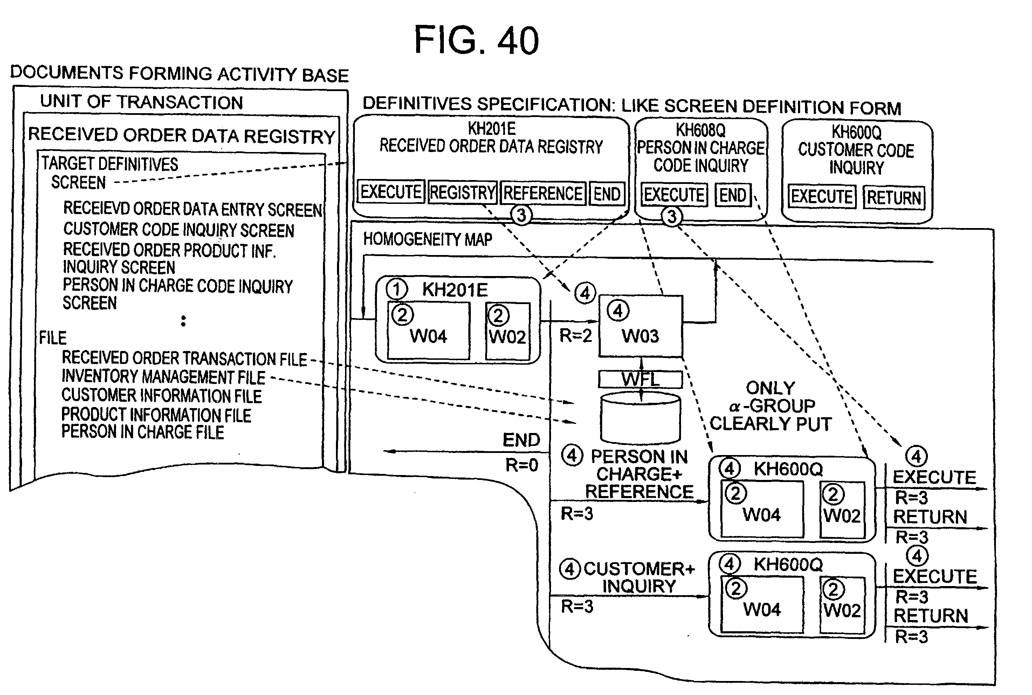

Fig. 40 shows the method of making the homogeneity map.

(1) One shall confirm a screen for the menu to shift to at first, and make a framed space for the screen in the left-upper corner on the homogeneity map sheet.

(2) One shall make unconditionally a frame for W04 and W02 into this frame.

(3) One shall confirm the function key (button) on the screen, as well as distinguish between the screen to shift to upon pressing the key (button) and the function to be kept until the shift to the screen (*1: simple data hand-over/ *2: file making & updating/ *3: operation & confirmation without file making or updating has been completed).

(4) As the following example, one shall draw diverging branches in the right of W02, in accordance with the distinguishing result of the above (3).

    **\***    1: Simple data hand-over → Specifying the functional key, Homogeneity map (R) = 3, the frame of next screen's frame

    **\***    2: File making & updating → Specifying the functional key, Homogeneity map (R) = 2, the frame of W03
           However, when a file to be made is other than the basic items, homogeneity map (R) = 4, the frame of WFL

    **\***    3: Simple operation & confirmation → Specifying the functional key, Homogeneity map (R) = 1, the frame of W03 (5) Hereafter, one shall repeat the above (2) to (4) for all screens inside the unit of the homogeneity map.

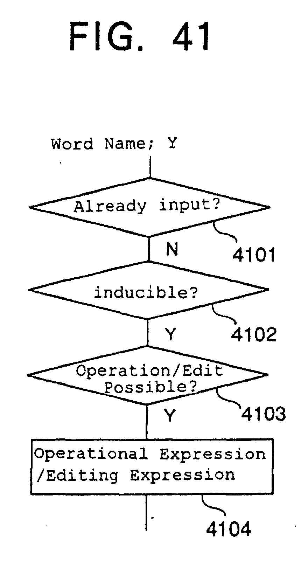

In the following, the method of making the tense control vector specifications is explained based on Fig. 41.

Fig. 41 indicates the homogeneity vector.

The condition for determining the "Input done" of step 4101 can be judged with the attribute and the initial value (known from the definitives definition document), and the others are all regulations in the course of realization by Lyee. Thus, no documents are required.

The condition for determining the "Inducibility" of step 4102 is whether the operational expression/editing expression is clear or not. Thus, no documents are required.

The condition for determining the "Operatability" of step 4103 is whether the value of the right side of the operational expression/editing expression may be used for the calculation or not, which is a condition that can be determined from the operational expression. Thus, no documents are required.

In step 4104, for example
the following:
an expression like "Y = aX + bZ * cW"
and,
The range of possible values and particular conditions taken by a, b, c, X, Z, W
and,
The conditions to executing this computational formula (Multiple computational formulas are possible for one word), are to be questioned to users for each word and the answers are to be taken as a memo.

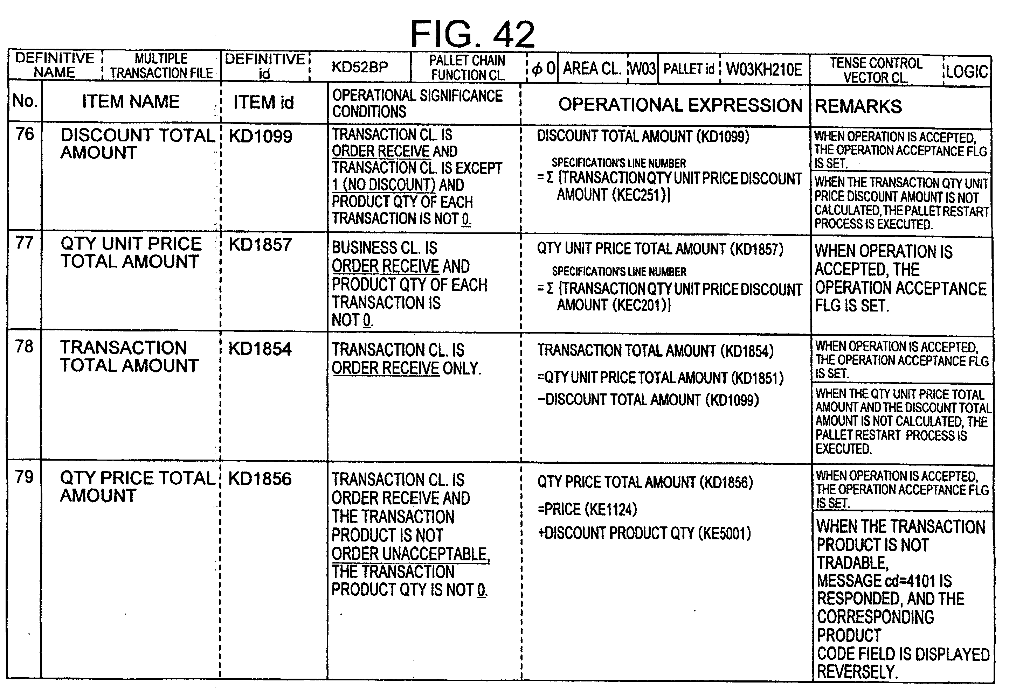

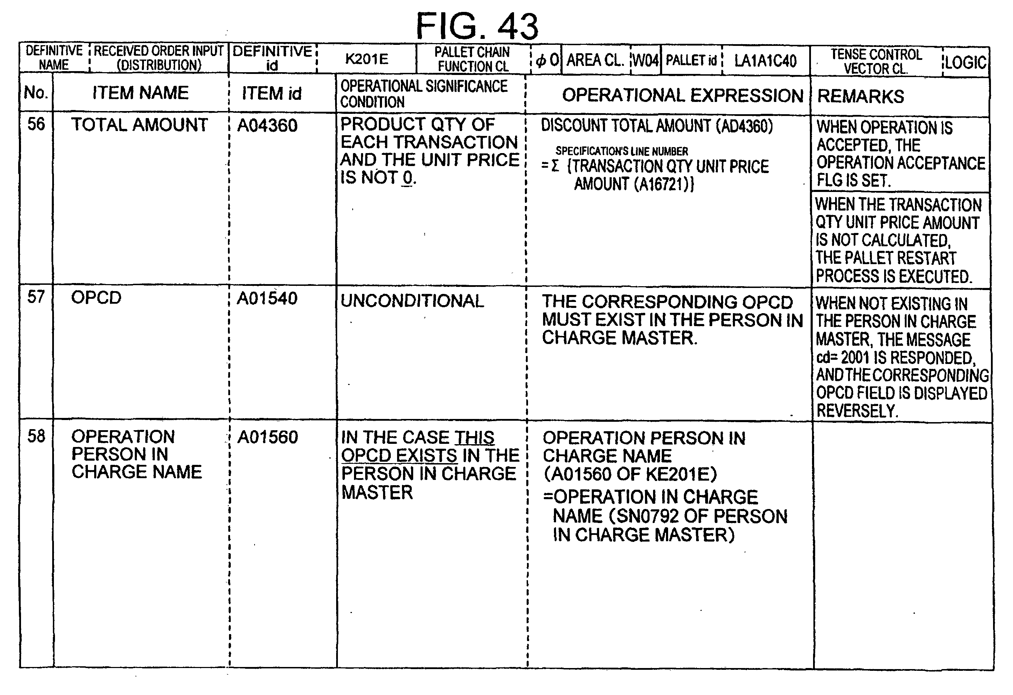

Fig. 42 and Fig. 43 show examples of the tense control vector specifications.

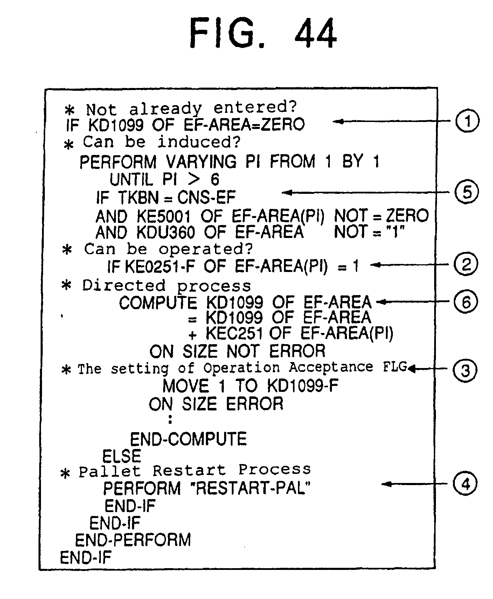

Fig. 44 shows an example of the programming based on the tense control vector specifications.

In this program, (1) to (4) are made from the rule of Lyee. That is, these are the particular conditions of Lyee, so interacting with users are not necessary.

(5) is to be made from the operational significant conditions of the tense control vector and the code table.

(6) is to be made from the operational expression of the tense control vector. (5) and (6) are to be determined and made into the documentation through interaction with the users, a hand-over document, "code table".

Hereinafter, the sample the program made by Lyee is illustrated.

1. Drawings Specifications (Order Entry (Distribution))

EP 0 947 916 B1

```
   KH201E                        Received Order Entry (Distribution)              DD/DD/DD   TT:TT:TT
  O P C D              0000000000000000 Estimate No.  BBBBBBBB      *Received Order Classification BB  00000000
 * Customer       BBBBBBBBB 00000000000000000000000000000000       TEL 000000000000
 * Delivery Destination  BBBBBBBBB 0000000000000000000000000000000       FAX 000000000000
 * Warehouse   BB 000000000000   * Person In Charge   BBBBBBB 000000000000000000   Received Order No.   00000000
NO     Product Code        Product Name                  Quantity   Previous Unit Price         Unit Price  Wholesale Rate  Delivery Deadline
      Other Party Product            Types & Media/Product #        Inventory      Price              Amount         Order No.
 1 BBBBBBBBBBBB BBBBBBBBBBBBBBBBBBBBBBBBBB 9999 6,666,666      9,999,999 BBB 999999
 0 0000000000000 BBBBBBBBBBBBBBBBBBBBBBBB  6,666 6,666,666 666,666,666     BBBBBBBB
 2 BBBBBBBBBBBB BBBBBBBBBBBBBBBBBBBBBBBBBB 9999 6,666,666      9,999,999 BBB 999999
 0 0000000000000 BBBBBBBBBBBBBBBBBBBBBBBB  6,666 6,666,666 666,666,666     BBBBBBBB
 3 BBBBBBBBBBBB BBBBBBBBBBBBBBBBBBBBBBBBBB 9999 6,666,666      9,999,999 BBB 999999
 0 0000000000000 BBBBBBBBBBBBBBBBBBBBBBBB  6,666 6,666,666 666,666,666     BBBBBBBB
 4 BBBBBBBBBBBB BBBBBBBBBBBBBBBBBBBBBBBBBB 9999 6,666,666      9,999,999 BBB 999999
 0 0000000000000 BBBBBBBBBBBBBBBBBBBBBBBB  6,666 6,666,666 666,666,666     BBBBBBBB
 5 BBBBBBBBBBBB BBBBBBBBBBBBBBBBBBBBBBBBBB 9999 6,666,666      9,999,999 BBB 999999
 0 0000000000000 BBBBBBBBBBBBBBBBBBBBBBBB  6,666 6,666,666 666,666,666     BBBBBBBB
 6 BBBBBBBBBBBB BBBBBBBBBBBBBBBBBBBBBBBBBB 9999 6,666,666      9,999,999 BBB 999999
 0 0000000000000 BBBBBBBBBBBBBBBBBBBBBBBB  6,666 6,666,666 666,666,666     BBBBBBBB
   Wholesale Cost No.    666                                   Total Amount   6,666,666,666
Order-Originating Person BBBBBBBB Mr./Mrs. Remarks  BBBBBBBBBBBBBBBBBBBBBBBBBBB  BBBBBBBBBBBBBBBBBBBBBBBBB
*Direct Shipment Classification B  Delivery Deadline 999999  Customer's Order Slip No.   BBBBBBBB      * Dispatch  B  00000000000000
   F1- Registry      F1- Reference  F5- Credit Inquiry     F10/F11- Product Entry   (S/H)      F12- Cancel      F8
```

## 2 − 1. H D R

```
PW1 V2R3M0  931105                    SEU Origin List
File         . . . . . .  CTN010/QDDSSRC
Bar          . . . . . . .  K052BP01
R*...+... 1 ...+... 2 ...+... 3 ...+... 4 ...+... 5 ...+... 6 ...+... 7 ...+..
    A*********************************************************************
    A*    System Name      = Catena New Sales/Distribution Management System
    A*    File Name        = Receive Transaction File HDR
    A*    DDS Type         = PF
    A*
    A*    Entry Date       = 95/ 8/24
    A*    Change Date      = 95/ 9/05
    A*********************************************************************
    A*
    A          R KD52RC                      TEXT(' Receive Transaction File HDR   R ')
    A*
    A            KD1830        18A           COLHDG(' IDX 1 Mgt. SN                 ')
    A            KD0325         8S 0         COLHDG(' Record Date                   ')
    A            KD0324         6S 0         COLHDG(' Record Time                   ')
    A            KDS208         1A           COLHDG(' Delete Status                 ')
    A            KD1084         7A           COLHDG(' Person In Charge Code         ')
    A            KD1535         5A           COLHDG(' Person In Charge Dept. Code   ')
    A            KD1179         7A           COLHDG(' Reg. Per. Code                ')
    A            KD1181         5A           COLHDG(' Reg. Per Dept. Code           ')
    A            KDU975        18A           COLHDG(' Change Orig. Mgt. SN          ')
    A            KD1836         1A           COLHDG(' HS Cl.                        ')
    A            KDU277         1A           COLHDG(' Sales Cl.                     ')
    A            KD1838         1A           COLHDG(' Kinds of Transaction          ')
    A            KD1839         2A           COLHDG(' Shipment Reason               ')
    A            KD1840         2A           COLHDG(' Arrival Reason                ')
    A            KDS429         1A           COLHDG(' Trns. F Cl. £                 ')
    A            KD1843         8S 0         COLHDG(' F Entry Date                  ')
    A            KD1844         8S 0         COLHDG(' Trns. No.                     ')
    A            KDC766         7A           COLHDG(' BS Report No.                 ')
    A            KD1847         9A           COLHDG(' Customer Code                 ')
    A            KD1848        220           COLHDG(' Name of Customer Person In Charge' )
    A            KD4044        20A           COLHDG(' Name (Kana) of Customer Person In Charge ' )
    A            KD4000        420           COLHDG(' Trns. Name                    ')
    A            KD1849        280           COLHDG(' Trns. Valid Period            ')
    A            KD1850         2S 0         COLHDG(' No. of TXT Lines              ')
    A            KD1851         8S 0         COLHDG(' Trns. End Data Sched.         ')
    A            KD1852        18A           COLHDG(' HDR Mgt. SN                   ')
    A            KD1854        13P 0         COLHDG(' Trns. Total Amount            ')
    A            KD1855        13P 0         COLHDG(' Trns. Total Amt. inclusive of Consumption Tax ' )
    A            KD1856        13P 0         COLHDG(' Qty Pr. Total Amt.            ')
    A            KD1857        13P 0         COLHDG(' Qty Unit Price Total Amt.     ')
    A            KD1858        13P 0         COLHDG(' Qty Unit Price Disc. Total Amt. )
    A            KD1859        13P 0         COLHDG(' C. Tax Total Amt.             ')
    A            KDU360         1A           COLHDG(' Disc. Cl.                     ')
    A            KDB001         4S 2         COLHDG(' Sales Unit Price Disc. Rate   ')
    A            KD1099        13P 0         COLHDG(' Disc. Total Amt.              ')
    A            KD1865         9P 2         COLHDG(' Total No. of Prod. Transacted ')
    A            KDU470         7P 0         COLHDG(' Total No. of Prod. Untransacted ')
    A            KD1866         7P 0         COLHDG(' No. of Possible Security Prod. ')
    A            KD1867         7P 0         COLHDG(' No. of Impossible Security Prod. ')
    A            KD0439         7S 0         COLHDG(' Settlement Bank Code          ')
    A            KD1877         1S 0         COLHDG(' Credit Sales Acceptance FLG   ')
    A            KD0019        13P 0         COLHDG(' Credit Sales Total Amt.       ')
```

21

```
PW1 V2R3MO  931105                    SEU Origin List
File     . . . . . . CTN010/QDDSSRC
Bar      . . . . . . K052BP01
R*...+... 1 ...+... 2 ...+... 3 ...+... 4 ...+... 5 ...+... 6 ...+... 7 ...+..
         A        KD0020      13P 0    COLHDG ( ' Credit Sales Paid-in Amt.          ' )
         A        KD0021       8S 0    COLHDG ( ' Credit Sales Strike-out Date       ' )
         A        KD0022      13P 0    COLHDG ( ' Credit Sales Not Striked-out        ' )
         A        KD1878       1S 0    COLHDG ( ' Credit Purchase Acpt. FLG           ' )
         A        KD0023      13P 0    COLHDG ( ' Credit Purchase Total Amt.          ' )
         A        KD0024      13P 0    COLHDG ( ' Credit Purchase Payment Amt.        ' )
         A        KD0025       8S 0    COLHDG ( ' Credit Purchase Strike-out Date     ' )
         A        KD0026      13P 0    COLHDG ( ' Credit Purchase Strike-out Remainder' )
         A        KD1412       1A      COLHDG ( ' Dispatch Cl.                        ' )
         A        KD4045       2A      COLHDG ( ' Dispatcher Code                     ' )
         A        KD4046       1A      COLHDG ( ' Group Packing Cl. No.               ' )
         A        KD0059       1A      COLHDG ( ' Delivery Note Issuance FLG          ' )
         A        KDS228       1A      COLHDG ( ' KH3010 Issuance Instrn. FLG         ' )
         A        KDS229       1A      COLHDG ( ' KG3020 Issuance Instrn. FLG         ' )
         A        KDS242       1A      COLHDG ( ' KH4090 Issuance Instrn. FLG         ' )
         A        KDS284       1A      COLHDG ( ' KH5260 Issuance Instrn. FLG         ' )
         A        KDS398       1A      COLHDG ( ' Reserve 1                           ' )
         A        KDS399       1A      COLHDG ( ' Reserve 2                           ' )
         A        KDS400       1A      COLHDG ( ' Reserve 3                           ' )
         A        KDS401       1A      COLHDG ( ' Reserve 4                           ' )
         A        KDS402       1A      COLHDG ( ' Order Acpt. Center Person In Charge Cl ' )
         A**
         A        KDS403       1A      COLHDG ( ' Change Screen Cl                ' )
         A**
         A**
         A**
         A**
         A        KDS404       1A      COLHDG ( ' Reserve 7                       ' )
         A        KDS405       1A      COLHDG ( ' Acct. I/F Done FLG              ' )
         A        KDS406       1A      COLHDG ( ' Reverse G-NG Cl                 ' )
         A        KDS407       1A      COLHDG ( ' Over Credit Limit Amt. FLG      ' )
         A        KDS408       1A      COLHDG ( ' Next Trns. Shift FLG            ' )
         A        KDS409       1A      COLHDG ( ' Trns. Correction Done FLG       ' )
         A        KD4028       8S 0    COLHDG ( ' Estimate No.                    ' )
         A        KD4029       8S 0    COLHDG ( ' Rec. Order No.                  ' )
         A        KDU452       2S 0    COLHDG ( ' Rec. Order Line No.             ' )
         A        KD4030       8S 0    COLHDG ( ' Placed Order No.                ' )
         A        KDU453       2S 0    COLHDG ( ' Placed Order Line No.           ' )
         A        KD4031       8S 0    COLHDG ( ' Buying-in No.                   ' )
         A        KDU454       2S 0    COLHDG ( ' Buying-in Line No.              ' )
         A        KD4032       8S 0    COLHDG ( ' Shipping No.                    ' )
         A        KDU455       2S 0    COLHDG ( ' Ship. Line No.                  ' )
         A        KD4033       8S 0    COLHDG ( ' Payment No.                     ' )
         A        KD4034       8S 0    COLHDG ( ' Paid-in No.                     ' )
         A        KD4035       8S 0    COLHDG ( ' Sales No.                       ' )
         A        KDU456       2S 0    COLHDG ( ' Sales Line No.                  ' )
         A        KD4036       8S 0    COLHDG ( ' Move No.                        ' )
         A        KDU457       2S 0    COLHDG ( ' Move Line No.                   ' )
         A        KDU289       8S 0    COLHDG ( ' Sales Return Appln. No.         ' )
         A        KDU458       2S 0    COLHDG ( ' Sales Return Appln. Line        ' )
         A        KDU290       8S 0    COLHDG ( ' Buying-in Return Appln. No.     ' )
         A        KDU459       2S 0    COLHDG ( ' Buying-in Return Appln. Line    ' )
         A        KDS563       8S 0    COLHDG ( ' Resell No.                      ' )
```

22

```
PW1 V2R3M0  931105                    SEU Origin List
File      . . . . . . . CTN010/QDDSSRC
Bar       . . . . . . . K052BP01
R*...+... 1 ...+... 2 ...+... 3 ...+... 4 ...+... 5 ...+... 6 ...+... 7 ...+..
        A              KD1057      8S 0     COLHDG(' Loan No.                      ')
        A              KDU936      2S 0     COLHDG(' Loan Line No.                 ')
        A              KDU937      8S 0     COLHDG(' Loan Return No.               ')
        A              KDU938      2S 0     COLHDG(' Loan Return Line No.          ')
        A              KD0944      7A       COLHDG(' Bill No.                      ')
        A              KD0511      2A       COLHDG(' Account Cl.                   ')
        A              KD0512      7A       COLHDG(' Account #                     ')
        A              KD1786      420      COLHDG(' Remarks 1                     ')
        A              KD1787      420      COLHDG(' Remarks 2                     ')
        A              KDS410      420      COLHDG(' Remarks 3                     ')
        A              KDS411      420      COLHDG(' Remarks 4                     ')
        A              KDS412      420      COLHDG(' Remarks 5                     ')
        A              KD4037      200      COLHDG(' Customer Trns. No.            ')
        A              KDS564      1A       COLHDG(' Customer Slips Genuine/Temp. Cl.')
        A              KDS565      1A       COLHDG(' Inventory Security Done FLG   ')
        A              KD0959      9A       COLHDG(' Billing Code                  ')
        A              KD1571      2A       COLHDG(' Return Reason Code            ')
        A              KD1447      2A       COLHDG(' Sales Cl.                     ')
        A              KDU309      1A       COLHDG(' Consumption Tax Y/N Cl.       ')
        A              KDU364      1A       COLHDG(' Sales Sum-up Cl.              ')
        A              KD0201      1A       COLHDG(' Install Cl.                   ')
        A              KD0692      1A       COLHDG(' Auto. Shipping Cl.            ')
        A              KDS566      1A       COLHDG(' Partial Delivery Possibility Cl.')
        A              KD0121      6A       COLHDG(' IBM Customer Code             ')
        A              KDS567      1A       COLHDG(' Maker's Direct Distribution Cl.')
        A              KDS568      1A       COLHDG(' Catena Direct Distribution Cl.')
        A              KDS027      8A       COLHDG(' Acct. Customer Code           ')
        A              KD0654      1A       COLHDG(' Designated Slip Cl.           ')
        A              KDV201      11A      COLHDG(' Customer Designated Trns. No. ')
        A.             KD1261      10A      COLHDG(' Customer name (kana)          ')
        A              KDV320      1A       COLHDG(' EOS Cl.                       ')
        A              KDV321      1A       COLHDG(' Reserve Cl. 2                 ')
        A              KD1771      10A      COLHDG(' Delivery Destination Code     ')
        A              KD1772      10A      COLHDG(' Reserve 2                     ')
        A              KD1773      10A      COLHDG(' Reserve 3                     ')
        A*
        A        K KD1852
        A*
```

‡ ‡ ‡     End of Origin Specification     ‡ ‡ ‡

```
2-2. DTL
PW1 V2R3M0 931105                    SEU Origin List
File        . . . . . . CTN010/QDDSSRC
Bar         . . . . . . K052BP02
R*...+... 1 ...+... 2 ...+... 3 ...+... 4 ...+... 5 ...+... 6 ...+... 7 ...+..
          A*********************************************************************
          A*     System Name    = Catena New Sales/Distribution Management System
          A*     File Name      = Receive Transaction File DTL
          A*     DDS Type PF    = PF
          A*
          A*     Entry Date     = 95/ 8/30
          A*     Change Date    = 95/ 8/30
          A*********************************************************************
          A*
          A                                        UNIQUE
          A       R KE52RC                          TEXT('    Receive Transaction File DTL        ')
          A*
          A         KE4001      18A                 COLHDG(' TXT Mgt. SN (Serial No.)       ')
          A         KE1879       2S 0               COLHDG(' TXT No.                        ')
          A         KES208       1A                 COLHDG(' Reserve CL (delete)            ')
          A         KE1084       7A                 COLHDG(' Person In Charge Code          ')
          A         KE1535       5A                 COLHDG(' Person In Charge Dept. Code    ')
          A         KEU277       1A                 COLHDG(' Sales CL                       ')
          A         KE1838       1A                 COLHDG(' Kinds of Transaction           ')
          A         KE1839       2A                 COLHDG(' Shipment Reason                ')
          A         KE1840       2A                 COLHDG(' Arrival Reason                 ')
          A         KE1843       8S 0               COLHDG(' F Entry Date                   ')
          A         KE1844       8S 0               COLHDG(' Trns. No.                      ')
          A         KE1847       9A                 COLHDG(' Customer Code                  ')
          A         KE1447       2A                 COLHDG(' Sales CL                       ')
          A         KES567       1A                 COLHDG(' Maker's Direct Distribution CL ')
          A         KES568       1A                 COLHDG(' Catena Direct Distribution CL  ')
          A         KE1836       1A                 COLHDG(' HS CL                          ')
          A         KE4101      12A                 COLHDG(' Product Code 1                 ')
          A         KEQ027      60O                 COLHDG(' Product Code Product Name      ')
          A         KE0130      13A                 COLHDG(' JAN Code                       ')
          A         KE4301      26O                 COLHDG(' Product Name (Abbrev.) 1       ')
          A         KE4351      12A                 COLHDG(' Type Name (Abbrev.) 1          ')
          A         KE4401      10A                 COLHDG(' Media Name 1                   ')
          A         KE4451      15A                 COLHDG(' Product No. 1                  ')
          A         KE4042      13A                 COLHDG(' Customer Product Code          ')
          A         KE5001       7P 2               COLHDG(' No. of Transacted Products     ')
          A         KES413       5P 0               COLHDG(' Estimated No. of Transacted Products' )
          A         KEU471       5P 0               COLHDG(' Balance of Transacted Products ')
          A         KE5351       1S 0               COLHDG(' Freq. of Security              ')
          A         KE5051      20O                 COLHDG(' Customer Trns. No.             ')
          A         KE0747       1A                 COLHDG(' Agency CL                      ')
          A         KE5101       1A                 COLHDG(' Inventory CL 1                 ')
          A         KE5151       9A                 COLHDG(' Inventory Location Code 1      ')
          A         KE5201       1A                 COLHDG(' Security Method 1              ')
          A         KE1070       5A                 COLHDG(' Shelf No. 1                    ')
          A         KE5251       1A                 COLHDG(' Product Status CL 1            ')
          A         KE5301       7P 0               COLHDG(' Nm. of Inventory Location Stock 1 ')
          A         KES203       7P 0               COLHDG(' Inventory Location Security No. 1 ')
          A         KE5102       1A                 COLHDG(' Inventory CL 2                 ')
          A         KD5152       9P                 COLHDG(' Inventory Location Code 2      ')
          A         KD5202       1A                 COLHDG(' Security Method 2              ')
          A         KD1071       5A                 COLHDG(' Shelf No. 2                    ')
```

EP 0 947 916 B1

```
PW1 V2R3M0  931105              SEU Origin List
File          . . . . . . CTN010/QDDSSRC
Bar           . . . . . . . K052BP02
R*...+... 1 ...+... 2 ...+... 3 ...+... 4 ...+... 5 ...+... 6 ...+... 7 ...+..
         A              KB5252       1A        COLHDG(' Product Status Cl 2        ')
         A              KB5302       7P 0      COLHDG(' Nm. of Inventory Location Stock 2 ')
         A              KBS204       7P 0      COLHDG(' Inventory Location Security No. 2  ')
         A              KB5103       1A        COLHDG(' Inventory Cl 3             ')
         A              KB5153       9A        COLHDG(' Inventory Location Code 3  ')
         A              KB5203       1A        COLHDG(' Security Method 3          ')
         A              KB1072       5A        COLHDG(' Shelf No. 3                ')
         A              KB5253       1A        COLHDG(' Product Status Cl 3 ·      ')
         A              KB5303       7P 0      COLHDG(' Nm. of Inventory Location Stock 3 ')
         A              KBS205       7P 0      COLHDG(' Inventory Location Security No. 3 ')
         A              KB5104       1A        COLHDG(' Inventory Cl 4             ')
         A              KB5154       9A        COLHDG(' Inventory Location Code 4  ')
         A              KB5204       1A        COLHDG(' Security Method 4          ')
         A              KB1073       5A        COLHDG(' Shelf No. 4                ')
         A              KB5254       1A        COLHDG(' Product Status Cl 4        ')
         A              KB5304       7P 0      COLHDG(' Nm. of Inventory Location Stock 4 ')
         A              KBS206       7P 0      COLHDG(' Inventory Location Security No. 4 ')
         A              KB5105       1A        COLHDG(' Inventory Cl 5             ')
         A              KB5155       9A        COLHDG(' Inventory Location Code 5  ')
         A              KB5205       1A        COLHDG(' Security Method 5          ')
         A              KBS428       5A        COLHDG(' Shelf No. 5                ')
         A              KB5255       1A        COLHDG(' Product Status Cl 5        ')
         A              KB5305       7P 0      COLHDG(' Nm. of Inventory Location Stock 5 ')
         A              KBS207       7P 0      COLHDG(' Inventory Location Security No. 5 ')
         A              KB1904       7P 0      COLHDG(' Product Security Total     ')
         A              KBU480       620       COLHDG(' Final Arrival Point Name 1    1    ')
         A              KB5551       8A        COLHDG(' Final Arrival Point Postal Code 1  ')
         A              KB5601       420       COLHDG(' Final Arrival Point Address 1-1    ')
         A              KB5651       420       COLHDG(' Final Arrival Point Address 2-1    ')
         A              KB5701       420       COLHDG(' Final Arrival Point Address 3-1    ')
         A              KB5751       320       COLHDG(' Final Arrival Point Department  1  ')
         A              KB5801       220       COLHDG(' Final Arrival Point Person In Charge 1 ')
         A              KB5851       12A       COLHDG(' Final Arrival Point TEL 1  ')
         A              KB5901       12A       COLHDG(' Final Arrival Point FAX 1  ')
         A              KB9101       5P 0      COLHDG(' Nm. of Arrival Products at Arrival-point 1' )
         A              KB5401       9A        COLHDG(' Start Point Location Code 1 ')
         A              KB5451       9A        COLHDG(' Arrival Point Location Code 1 ')
         A              KB5501       9A        COLHDG(' Final Arrival Point Code 1  ')
         A              KB5951       8S 0      COLHDG(' Arrival-point Arrival Schedule 1 ')
         A              KB6001       8S 0      COLHDG(' Final Arrival-point Arrival Schedule 1 ')
         A              KB6051       1A        COLHDG(' Routing Judgement 1        ')
         A              KBS569       1A        COLHDG(' Early/Mid/Late of Month Schl Cl 1 ')
         A              KBU460       8S 0      COLHDG(' Trns. Done No.1    1       ')
         A              KBU461       2S 0      COLHDG(' Trns. Done Line No.1       ')
         A              KB9351       5P 0      COLHDG(' Nm. of Arrival Products at Arrival-point 2' )
         A              KB6102       9A        COLHDG(' Start Point Location Code 2 ')
         A              KB6152       9A        COLHDG(' Arrival Point Location Code 2 ')
         A              KB6202       9A        COLHDG(' Final Arrival Point Code 2  ')
         A              KB6652       8S 0      COLHDG(' Arrival-point Arrival Schedule 2 ')
         A              KB6702       8S 0      COLHDG(' Final Arrival-point Arrival Schedule 2 ')
         A              KB6752       1A        COLHDG(' Routing Judgement 2        ')
         A              KBS570       1A        COLHDG(' Early/Mid/Late of Month Schl Cl 2 ')
         A              KBU462       8S 0      COLHDG(' Trns. Done No.2    1       ')
```

25

```
PW1 V2R3M0  931105                    SEU Origin List
File       . . . . . : . . CTN010/QDDSSRC
Bar        . . . . . . . . K052BP02
R*...+... 1 ...+... 2 ...+... 3 ...+... 4 ...+... 5 ...+... 6 ...+... 7 ...+..
          A        KBU463     2S  0      COLHDG ( ' Trns. Done Line No.2                    ' )
          A        KB9601     5P  0      COLHDG ( ' Nm. of Arrival Products at Arrival-Point 3 ' )
          A        KB6103     9A         COLHDG ( ' Start Point Location Code 3              ' )
          A        KB6153     9A         COLHDG ( ' Arrival Point Location Code 3            ' )
          A        KB6903     9A         COLHDG ( ' Final Arrival Point Code 3               ' )
          A        KE7353     8S  0      COLHDG ( ' Arrival-point Arrival Schedule 3         ' )
          A        KB7403     8S  0      COLHDG ( ' Final Arrival-point Arrival Schedule 3   ' )
          A        KB7453     1A         COLHDG ( ' Routing Judgement 3                      ' )
          A        KBS571     1A         COLHDG ( ' Early/Mid/Late of Month Schl. Cl. 3      ' )
          A        KBU464     8S  0      COLHDG ( ' Trns. Done No.3    1                     ' )
          A        KBU465     2S  0      COLHDG ( ' Trns. Done Line No.3                     ' )
          A        KB9851     5P  0      COLHDG ( ' Nm. of Arrival Products at Arrival-Point 4 ' )
          A        KB7504     9A         COLHDG ( ' Start Point Location Code 4              ' )
          A        KB7554     9A         COLHDG ( ' Arrival Point Location Code 4 .          ' )
          A        KB7604     9A         COLHDG ( ' Final Arrival Point Code 4               ' )
          A        KB8054     8S  0      COLHDG ( ' Arrival-point Arrival Schedule 4         ' )
          A        KB8104     8S  0      COLHDG ( ' Final Arrival-point Arrival Schedule 4   ' )
          A        KB8154     1A         COLHDG ( ' Routing Judgement 4                      ' )
          A        KBS572     1A         COLHDG ( ' Early/Mid/Late of Month Schl. Cl. 4      ' )
          A        KBU466     8S  0      COLHDG ( ' Trns. Done No.4    1                     ' )
          A        KBU467     2S  0      COLHDG ( ' Trns. Done Line No.4                     ' )
          A        KEA101     5P  0      COLHDG ( ' Nm. of Arrival Products at Arrival-Point 5 ' )
          A        KB8205     9A         COLHDG ( ' Start Point Location Code 5              ' )
          A        KB8255     9A         COLHDG ( ' Arrival Point Location Code 5            ' )
          A        KB8305     9A         COLHDG ( ' Final Arrival Point Code 5               ' )
          A        KB8755     8S  0      COLHDG ( ' Arrival-point Arrival Schedule 5         ' )
          A        KB8805     8S  0      COLHDG ( ' Final Arrival-point Arrival Schedule 5   ' )
          A        KB8855     1A         COLHDG ( ' Routing Judgement 5                      ' )
          A        KBS573     1A         COLHDG ( ' Early/Mid/Late of Month Schl. Cl. 5      ' )
          A        KBU468     8S  0      COLHDG ( ' Trns. Done No.5    1                     ' )
          A        KBU469     2S  0      COLHDG ( ' Trns. Done Line No. 5                    ' )
          A        KB4005     7P  0      COLHDG ( ' Procurement Impossible Total             ' )
          A        KB1124    13P  3      COLHDG ( ' Regular Price                            ' )
          A        KEA651    13P  3      COLHDG ( ' Manufacturing Unit Price                 ' )
          A        KEA701     4S  2      COLHDG ( ' Manufacturing Unit Price Discount Rate   )
          A        KBA751     4S  2      COLHDG ( ' Manufacturing Special Discount Rate      ' )
          A        KEA801    13P  3      COLHDG ( ' Buying-in Unit Price                     ' )
          A        KBU472     9P  0      COLHDG ( ' Buying-in Unit Price Discount Amount ' )
          A        KEA851     4S  2      COLHDG ( ' Buying-in Unit Price Discount Rate       ' )
          A        KEA901     4S  2      COLHDG ( ' Buying-in Special Discount Rate          ' )
          A        KEA951    13P  3      COLHDG ( ' Sales Unit Price                         ' )
          A        KBU473     9P  0      COLHDG ( ' Sales Unit Price Discount Amount         ' )
          A        KEB001     4S  2      COLHDG ( ' Sales Unit Price Discount Rate           ' )
          A        KEB051     4S  2      COLHDG ( ' Sales Special Discount Rate              ' )
          A        KBB701    13P  3      COLHDG ( ' Loan Unit Price                          ' )
          A        KBU478     9P  0      COLHDG ( ' Loan Unit Price Discount Amount          ' )
          A        KEB751     4S  2      COLHDG ( ' Loan Unit Price Discount Rate            ' )
          A        KEB801     4S  2      COLHDG ( ' Loan Special Discount Rate               ' )
          A        KEC001     9P  0      COLHDG ( ' Sales/Buying-in Rough Profit             ' )
          A        KEC151     5S  2      COLHDG ( ' Sales/Buying-in Rough Profit Rate        ' )
          A        KE0373     3S  0      COLHDG ( ' Wholesale Rate                           ' )
          A        KEC201     9P  0      COLHDG ( ' Transacted Quantity Unit Price Amount ' )
          A        KEC251     9P  0      COLHDG ( ' Transacted Quantity Unit Price Discount Amount ' )
```

26

```
PW1 V2R3M0  931105                    SEU Origin List
File  . . . . . . . CTN010/QDDSSRC
Bar   . . . . . . . K052BP02
R*...+... 1 ...+... 2 ...+... 3 ...+... 4 ...+... 5 ...+... 6 ...+... 7 ...+..
            A           KES002      9P 0     COLHDG ( ' Transaction on Consumption tax Amount)
            A           KE4028      8S 0     COLHDG ( ' Estimate No.                ' )
            A           KE4029      8S 0     COLHDG ( ' Rec. Order No.              ' )
            A           KEU452      2S 0     COLHDG ( ' Rec. Order Line No.         ' )
            A           KE4030      8S 0     COLHDG ( ' Placed Order No.            ' )
            A           KBU453      2S 0     COLHDG ( ' Placed Order Line No.       ' )
            A           KE4031      8S 0     COLHDG ( ' Buying-in No.               ' )
            A           KEU454      2S 0     COLHDG ( ' Buying-in Line No.          ' )
            A           KE4032      8S 0     COLHDG ( ' Shipping No.                ' )
            A           KBU455      2S 0     COLHDG ( ' Ship. Line No.              ' )
            A           KE4033      8S 0     COLHDG ( ' Payment No.                 ' )
            A           KE4034      8S 0     COLHDG ( ' Paid-in No.                 ' )
            A           KE4035      8S 0     COLHDG ( ' Sales No.                   ' )
            A           KEU456      2S 0     COLHDG ( ' Sales Line No.              ' )
            A           KE4036      8S 0     COLHDG ( ' Move No.                    ' )
            A           KBU457      2S 0     COLHDG ( ' Move Line No.               ' )
            A           KBU289      8S 0     COLHDG ( ' Sales Return Appln. No.     ' )
            A           KEU453      2S 0     COLHDG ( ' Sales Return Appln. Line 0  ' )
            A           KEU290      8S 0     COLHDG ( ' Buying-in Return Appln. No. ' )
            A           KEU459      2S 0     COLHDG ( ' Buying-in Return Appln. Line 0 ' )
            A           KES563      8S 0     COLHDG ( ' Resell No.                  ' )
            A           KE1057      8S 0     COLHDG ( ' Loan No.                    ' )
            A           KBU936      2S 0     COLHDG ( ' Loan Line No.               ' )
            A           KEU937      8S 0     COLHDG ( ' Loan Return No.             ' )
            A           KEU938      2S 0     COLHDG ( ' Loan Return Line No.        ' )
            A           KE0944      7A       COLHDG ( ' Bill No.                    ' )
            A           KE1571      2A       COLHDG ( ' Reason Code                 ' )
            A           KEU529      1A       COLHDG ( ' Payment Hold Cl.            ' )
            A           KBT013      40A      COLHDG ( ' Product Name (kana)         ' )
            A           KET030      9A       COLHDG ( ' Reserve A                   ' )
            A           KET031      9A       COLHDG ( ' Reserve B                   ' )
            A           KBT032      9A       COLHDG ( ' Reserve C                   ' )
            A           KBT033      9A       COLHDG ( ' Reserve D                   ' )
            A           KBT034      9A       COLHDG ( ' Reserve E                   ' )
            A           KET035      9A       COLHDG ( ' Reserve F                   ' )
            A           KBT036      9A       COLHDG ( ' Reserve G                   ' )
            A           KBT037      9A       COLHDG ( ' Registry-Time Mgt. SN Up 9  ' )
            A           KET038      9A       COLHDG ( ' Registry-Time Mgt. SN Down 9 ' )
            A           KET039      9A       COLHDG ( ' Product Buying-in Party Code ' )
            A           KEV320      1A       COLHDG ( ' EOS Cl.                     ' )
            A           KBB321      1A       COLHDG ( ' Reserve Cl. 2               ' )
            A           KE1771      7A       COLHDG ( ' Reserve 1                   ' )
            A*
            A        K KE4001
            A        K KE1879
            A*


                   * * *  End of Origin Specification    * * *
```

```
W02 Homogeneity Vector (Reference Key)
**********************************************************************
*    LP0004     P F 4 : Reference
**********************************************************************
 LP0004-SEC SECTION.
 LP0004-START.
        IF    NOT ( PRKEY NO OF W0204(PS) = 04 )
              GO TO  LP0004-EXIT
        END-IF.
*----------------------------------------------------------------*
*    L01540   O P C D  (LP0004)                                  *
*----------------------------------------------------------------*
        IF  ERR-INF  NOT = "1"
            IF  A01540 OF KH201E(PS) = SPACE
                MOVE  "1"     TO  ERR-INF
                MOVE  2009    TO  MSG-NO
                MOVE  B"1"    TO  A01540-C OF W0204(PS)
                MOVE  SPACE   TO  A01560 OF KH201E(PS)
            ELSE
* OPEN K213DL01
                IF  K213DL01-OPEN   NOT =   "1"
                    OPEN INPUT K213DL01
                    IF FLSTS1 NOT = ZERO
                        MOVE  8800    TO  MSG-NO
                        MOVE  "1"     TO  ERR-INF
                        GO TO         MAIN-END
                    ELSE
                        MOVE  "1"    TO  K213DL01-OPEN
                    END-IF
                END-IF
*
                MOVE  A01540 OF KH201E(PS)   TO   W01540
                MOVE  ZERO       TO SGLCODE
                MOVE  W01540    TO SK1084 OF K213DL01-REC
                READ  K213DL01
                    INVALID  KEY
                        MOVE  100   TO   SGLCODE
                END-READ
                IF  SGLCODE = ZERO
                    MOVE  SKD792 OF K213DL01-REC TO R-W01560
                END-IF
*-----
                IF  SGLCODE  =  ZERO
                    MOVE  R-W01560          TO  INDATA
                    MOVE  16               TO  OUTKETA
                    PERFORM PSLEKPROC
                    MOVE  OUTDATA  TO  AD1560 OF KH201E(PS)
                ELSE
                    MOVE  "1"     TO  ERR-INF
                    MOVE  2001    TO  MSG-NO
                    MOVE  B"1"    TO  A01540-C OF W0204(PS)
                    MOVE  SPACE   TO  A01560 OF-KH201E(PS)
                END-IF
            END-IF.
        END-IF.
        END-IF
* Determination of homogeneity route and the next screen in the case of customer code
        IF    BRR-INF  NOT = "1"
            IF  CSR-LOCK OF W0204(PS)   = "A12590"
                MOVE  3              TO  ROUTE-NO
                MOVE  "KH600Q"  TO  L-GAMEN-NO
            END-IF
* Determination of homogeneity route and the next screen in the case of Delivery destination code
            IF  CSR-LOCK OF W0204(PS) = "A13610"
                MOVE  3              TO  ROUTE-NO
                MOVE  "KH600Q"  TO. L-GAMEN-NO
```

W03: Duplicate Vector

```
                                                                   W03KH201E
‡‡‡‡‡‡‡‡‡‡‡‡‡‡‡‡‡ Beginning of Data ‡‡‡‡‡‡‡‡‡‡‡‡‡‡‡‡‡‡‡‡‡‡‡‡‡‡‡‡‡‡‡‡‡‡‡‡‡‡‡‡
    ‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡
    ‡    KH201E          Received Order Entry (Distribution)             ‡
    ‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡.
    IF  GAMEN-NO OF CRTL-AREA  =  "KH201E"
    ‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡
    D    DISPLAY "KH201E LAYT-FLG=" LAYH-FLG
    D    DISPLAY "KH201E LAYT-FLG=" LAYT-FLG
         IF LAYH-FLG  =  1"
    ‡‡‡‡‡  Reg. Per. Code                        YD1179KH201E1E
         MOVE  A01540 OF KH201E(STG1)
               TO  KD1179 OF EF-AREA
    ‡‡‡‡‡  Shipment Reason                       YD1839KH201E1E
         MOVE  A07580 OF KH201E(STG1)
               TO  KD1839 OF EF-AREA
    ‡‡‡‡‡  Customer Code                         YD1847KH201E1E
         MOVE A12590 OF KH201E(STG1)
               TO  KD1847 OF EF-AREA
    ‡‡‡‡‡  Transaction No.                       YD1844KH201E1E
960424‡‡‡‡‡IF  A07560 OF KH201E(STG1) IS   NUMERIC
    ‡‡‡‡‡  MOVE  A07560 OF KH201E(STG1)
    ‡‡‡‡‡        TO  KD1844 OF EF-AREA
    ‡‡‡‡‡END-IF
    ‡‡‡‡‡  Received Order No.                    YD1844KH201E1E
960513‡‡‡‡‡IF  A07560 OF KH201E(STG1)   IS NUMERIC
    ‡‡‡‡‡  MOVE  A07560 OF KH201E(STG1)
    ‡‡‡‡‡        TO  KD4029 OF EF-AREA
    ‡‡‡‡‡EDN-IF
    ‡‡‡‡‡  Estimate No.                          YD4028KH201E1E
960513‡‡‡‡‡IF  AD4800 OF KH201E(STG1)   IS NUMERIC
    ‡‡‡‡‡  MOVE  A04800 OF RH201E(STG1)
    ‡‡‡‡‡        TO  KD4028 OF EF-AREA
    ‡‡‡‡‡END-IF
    ‡‡‡‡‡ Trns. Total Amt.                       YD1854KH201E1E
         MOVE  A04360 OF KH201E(STG1)
               TO  KD1854 OF EF-AREA
    ‡‡‡‡‡  Qty Unit Price Total Amt.             YD1857KH201E1E
         MOVE  A04360 OF KH201E(STG1)
               TO  KD1857 OF EF-AREA
    ‡‡‡‡‡ Name of Customer Person In Charge (Tentative)   YD4044KH201E1E
         MOVE  A14890 OF KH201E(STG1)
               TO KD4044 OF EF-AREA
    ‡‡‡‡‡  Remarks 1                             YD1786KH201E1E
         MOVE  A17860 OF KH201E(STG1)
               TO  KD1786 OF EF-AREA
    ‡‡‡‡‡  Remarks 2                             YD1787KH201E1E
         MOVE  A17870 OF KH201E(STG1)
               TO  KD1787 OF EF-AREA
    ‡‡‡‡‡  Customer Trns. No.                    YD4037KH201E1E
         MOVE AU2980 OF KH201E(STG1)
               TO  KD4037 OF EF-AREA
    ‡‡‡‡‡  Distribution Cl.                      YD1412KH201E1E
         MOVE  A14130 OF KH201E(STG1)
               TO  KD1412 OF EF-AREA
    ‡‡‡‡‡  Person In Charge Code                 YD1084KH201E1E
         MOVE  A10840 UF KH201E(STG1)
               TO KD1084 OF EF-AREA
    ‡‡‡‡‡  Catena Direct Distribution Cl.        YDS568KH201E1E
         MOVE  A11210 OF KH201E(STG1)
               TO  KDS568 OF EF-AREA
         END-IF
    ‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡‡ TEXT
         IF  LAYT-FLG  =  "1"
         PERFORM  VARYING  SI  FROM  1  BY  1
                  UNTIL  SI  >  6
    ‡‡‡‡‡ LASTIDX CONTROL
         MOVE  SI  TO  TI
    ‡‡‡‡‡  Final Arrival Point Code 1            YE5501KH201E1E
    ‡‡‡‡‡     IF  A11210 OF KH201E(STG1) NOT = 1
```

W03: Homogeneity Vector                               W03BH2

```
++++++++++++++++ Beginning of Data ++++++++++++++++
+++++++++++++++++++++++++++++++++++++++++++++++++++++++++++++
*                                                           *
*  W03BH2      Received Order (HDR)                          *
+++++++++++++++++++++++++++++++++++++++++++++++++++++++++++++
***** Quantity Unit Price Total Amount *****            L18570
UG0717++++IF TKBN = CNS-BR AND KDU360 OF BP-AREA NOT = "1"
        IF TKBN = CNS-BR
        IF KB5001 OF BP-AREA(PI) IS NUMERIC
        AND KDI857 OF BP-AREA       IS NUMERIC
        AND KBC201 OF BP-AREA(PI) IS NUMERIC
        IF PI = I
        MOVE ZERO TO KDI857 OF BP-AREA
        END-IF
        IF KB5001 OF BP-AREA(PI) NOT = ZERO
        COMPUTE DKI857 OF BP-AREA = KDI857 OF BP-AREA
               + KBC201 OF BP-AREA(PI)
        ON SIZE ERROR
        MOVE ALL "9" TO KDI857 OF BP-AREA
        IF ERR-INP = SPACE
        MOVE "1" TO ERR-INP
        MOVE 3019 TO MSG-NO
        END-IF
        END-COMPUTE
        END-IF
***** Quantity Unit Price discount Total Amount *****  L18580
        IF TKBN = CNS-BR
        IF KDI858 OF BP-AREA       IS NUMERIC
        AND KB5001 OF BP-AREA(PI) IS NUMERIC
        AND KBC251 OF BP-AREA(PI) IS NUMERIC
***** Discount Cl. NOT = "1" *****
        IF KDU360 OF BP-AREA NOT = "1"
        IF PI = I
        MOVE ZERO TO KDI858 OF BP-AREA
        END-IF
        IF KB5001 OF BP-AREA(PI) NOT = ZERO
        COMPUTE KDI858 OF BP-AREA
             = KDI858 OF BP-AREA
               + KBC251 OF BP-AREA(PI)
        ON SIZE ERROR
        MOVE ALL "9" TO KDI858 OF BP-AREA
        IF ERR-INP = SPACE
        MOVE "1" TO ERR-INP
        MOVE 3019 TO MSG-NO
        END-IF
        END-COMPUTE
        END-IF
***** Discount Cl.      = "1" *****
        IF KDU360 OF BP-AREA = "1"
        MOVE KD1099 OF BP-AREA
             TO KDI858 OF BP-AREA
        END-IF
        END-IF
        END-IF
***** Quantity Regular Price Total Amount *****  L18560
        IF TKBN = CNS-BR
        IF KB5001 OF BP-AREA(PI) IS NUMERIC
        AND KDI856 OF BP-AREA       IS NUMERIC
        AND KBI124 OF BP-AREA(PI) IS NUMERIC
        IF PI = I
        MOVE ZERO TO KDI856 OF BP-AREA
        END-IF
        IF KB5001 OF BP-AREA(PI) NOT = ZERO
        COMPUTE KDI856 OF BP-AREA = KDI856 OF BP-AREA
               + KBI124 OF BP-AREA(PI) + KB5001 OF BP-AREA(PI)
        ON SIZE ERROR
        MOVE ALL "9" TO KDI856 OF BP-AREA
```

```
W03:  Homogeneity Vector
                    IF   ERR-INF = SPACE
                       MOVE  "1"  TO   ERR-INF
                       MOVE  3019 TO  MSG-NO
                    END-IF
                 END-COMPUTE
              END-IF
           END-IF
        END-IF.
*****  Disc. Total Amount                        L10990
     IF   TKBN = CNS-EF
        IF  KDU360 OF EF-AREA NOT = "1"
           IF  KD1099 OF EF-AREA     IS NUMERIC
           AND KE5001 OF EF-AREA(PI) IS NUMERIC
           AND KEC251 OF EF-AREA(PI) IS NUMERIC
              IF  PI = 1
                 MOVE  ZERO  TO  KD1099 OF EF-AREA
              END-IF
              IF  KE5001 OF EF-AREA(PI)  NOT = ZERO
                 COMPUTE  KD1099 OF EF-AREA
                        = KD1099 OF EF-AREA
                        + KEC251 OF EF-AREA(PI)
                    ON SIZE ERROR
                       MOVE  ALL "9"   TO  KD1099 OF EF-AREA
                       IF  ERR-INF = SPACE
                          MOVE  "1"  TO   ERR-INF
                          MOVE  3019 TO  MSG-NO
                       END-IF
                 END-COMPUTE
              END-IF
           END-IF
        END-IF
     END-IF.
*****  Transaction Total Amount                  L18540
     IF   TKBN = CNS-EF
        IF  KD1854 OF EF-AREA IS NUMERIC
        AND KD1857 OF EF-AREA IS NUMERIC
        AND KD1099 OF EF-AREA IS NUMERIC
           COMPUTE KD1854 OF EF-AREA = KD1857 OF EF-AREA
                                     - KD1099 OF EF-AREA
              ON SIZE ERROR
                 MOVE  ALL "9"   TO  KD1854 OF EF-AREA
                 IF  ERR-INF = SPACE
                    MOVE  "1"  TO   ERR-INF
                    MOVE  3019 TO  MSG-NO
                 END-IF
           END-COMPUTE
        END-IF
     END-IF.
*****  Trns. Total Amount inclusive of Consumption Tax   L18550
     IF   TKBN = CNS-EF
        IF  KD1855 OF EF-AREA IS NUMERIC
        AND KD1854 OF EF-AREA IS NUMERIC
        AND WI0903            IS NUMERIC
           IF  (KS0901 OF WBF-AREA = "1")
              IF  KD1854 OF EF-AREA >= ZERO
                 COMPUTE  KD1855 OF EF-AREA
                        = KD1854 OF EF-AREA * (1 + WI0903) + 0.5
                    ON SIZE ERROR
                       MOVE  ALL "9"   TO  KD1855 OF EF-AREA
                       IF  ERR-INF = SPACE
                          MOVE  "1"  TO   ERR-INF
                          MOVE  3019 TO  MSG-NO
                       END-IF
                 END-COMPUTE
              ELSE
                 COMPUTE  KD1855 OF EF-AREA
                        = KD1854 OF EF-AREA * (1 + WI0903) - 0.5
                    ON SIZE ERROR
                       MOVE  ALL "9"   TO  KD1855 IF EF-AREA
                       IF  ERR-INF = SPACE
```

W04: Duplicate Vector

```
*===============================================================*
*              Duplicate Vector Group 1 (Tail)                  *
*===============================================================*
*---------------------------------------------------------------*
*     Y17990   Wholesale Cost No.                               *
*---------------------------------------------------------------*
*     Y04360   Total Amount                                     *
*---------------------------------------------------------------*
 Y04360-SEC   SECTION.
 Y04360-START.
      IF    ERR-INP  NOT = "1"
      AND   GAMEN-NO OF W0204(PS2) = "KH201E"
            IF  PPKEY-NO OF W0204(PS2) = 1
            OR  PPKEY-NO OF W0204(PS2) = 12
               MOVE  ZERO  TO  A04360 OF KH201E(PS1)
         ELSE
               IF  KD1857 OF W03-HD1R  IS NUMERIC
                  MOVE  KD1857 OF W03-HD1R
                     TO  A04360 OF KH201E(PS1)
               END-IF
            END-IF
         END-IF.
 Y04360-EXIT.
      EXIT.
*---------------------------------------------------------------*
```

W04: Homogeneity Vector

```
*---------------------------------------------------------------*
*     L04360   Total Amount                                     *
*---------------------------------------------------------------*
 L04360-SEC   SECTION.
 L04360-START.
      MOVE  ZERO  TO  WK-KINGAKU.
      PERFORM  VARYING  PJ  FROM  1  BY  1
               UNTIL  PJ >  6
            IF  A08311 OF KH201E(PS1 PJ) NOT = SPACE
            AND A09221 OF KH201E(PS1 PJ) IS NUMERIC
            AND A09221 OF KH201E(PS1 PJ) NOT = ZERO
            AND A10791 OF KH201E(PS1 PJ) IS NUMERIC
            AND A10791 OF KH201E(PS1 PJ) NOT = ZERO

            AND A16721 OF KH201E(PS1 PJ) IS NUMERIC
            AND A16721 OF KH201E(PS1 PJ) NOT = ZERO
               COMPUTE  WK-KINGAKU
                  = WK-KINGAKU + A16721 OF KH201E(PS1 PJ)
            END-IF
      END-PERFORM.
      MOVE  WK-KINGAKU TO A04360 OF KH201E(PS1).
 L04360-EXIT.
      EXIT.
```

Industrial Applicability

In the traditional software development the dependency on personal abilities is extremely high as well as having high personal ability is required for all staff involved, which has brought about fundamental problems. This invention has realized a development methodology, by theoretically grasping the consciousness action existing in the depths of the thinking method in relation to the cognitive action, and it is applicable to any fields including OS middle game, process control and business software.

Since the software structure which is induced by this invention is determined theoretically, it is recurrent and becomes the one and only. As a result, the software developed is not a black box any more, thereby eliminating human errors from the quality viewpoint, so that the system becomes stiff with the clear structure. Therefore, not only an exact estimate of software development is made possible development but also planning and the development management can be performed with ease.

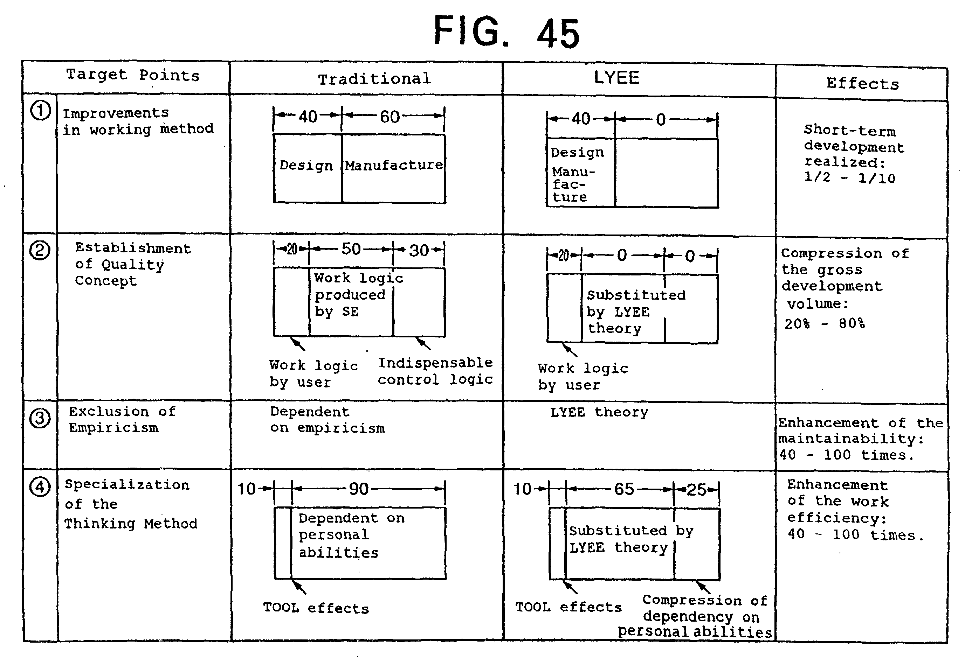

Fig. 45 shows its effects. Compared with the traditional method, the development period is shortened by 1/2 to 1/10; the total development volume is compressed by 20% to 80%; the maintainability increases by 40 to 100 times; and the working efficiency is enhanced by 40 to 100 times.

In the traditional software, definitives comprised of screens, vouchers and files take up 30% and their logic takes up 70% of the whole software developed, thereby necessitating a document respectively. However, in this invention, the homogeneity map which is corresponding to the above-mentioned logic in the traditional method does not require a document, so that it can cut the volume of documents by 70% compared with that of the traditional method.

**Claims**

1.    A software production method comprising the following steps:

a step (101) to determine definitive identifiers for identifying definitives including a screen format, a voucher format and a file format, which are needed for the software to be produced;

a step (102) to sort out words existing in the definitives;

a step (103) to create a homogeneity map, in which pallets (W02, W03, W04) being logical units needed by the software are to be plot in accordance with a predetermined rule based on the definitive identifiers;

a step (105) to determine necessary files based on the sorted-out words and the created homogeneity map;

a step (106) to create a first (1301-1306), a second (1401-1406) and a third (1701-1708) tense control vectors, the tense control vectors being sub-routines, wherein the first tense control vector operates either one of the following for every said screen format and for every word belonging to the screen format: to do nothing in case data exists in self word's first data area, or to create data in the self word's first data area in case data does not exist in the self word's first data area while setting a first restart flag when such creation is impossible, wherein the second tense control vector operates either one of the following for every said screen format and for every word belonging to the screen format: to do nothing if there is no data for the self word in the data received from the screen format, or if there is a data for the self word in the data received from the screen format, to do either of the followings, in case of a non-control word, setting the data in a self word's second data area, while setting a second restart flag when said data setting is not precisely accomplished, and in case of a control word, determining a homogeneity route in accordance with a nature of the self word, while setting the second restart flag when the determination of the homogeneity route is not precisely established; and wherein the third tense control vector operates either one of the following for all words belonging to all definitives necessary for the software: to do nothing in case data exists in a self word's third data area, or to create data in the self word's third data area in case data does not exist in the self word's third data area, while setting a third restart flag when such creation is impossible;

a step (107) to create a first, a second, a third pallet functions, wherein the first pallet function executes for every said screen format, for all words belonging to the screen format, irrespective of the sequence of the words, the first tense control vectors, each vector of which corresponds to every word belonging to the screen format, while re-executing all the first tense control vectors for every word belonging to the screen format when the first restart flag is set after such execution, wherein the second pallet function executes for every said screen format, for all words belonging to the screen format, irrespective of the sequence of the words, the second tense control vectors, each vector of which corresponds to every word belonging to the screen format, while re-executing all the second tense control vectors for every word belonging to the screen format when the second restart flag is set after such execution, and wherein the third pallet function executes, for all words belonging to the definitive, irrespective of the sequence of the words, the third tense control vectors, each vector of which corresponds to every word belonging to the definitive, while re-executing all the third tense control vectors for every word belonging to the definitive when the third restart flag is set after such execution; and

a step (108) to assemble the first to third pallet functions into a pallet chain function which executes the first pallet function, transmits data resulted from said execution to a screen format, receives the data from the screen format to execute the second pallet function, and, based on this execution's result, selectively executes the third pallet function in accordance with the homogeneity route determined by the second tense control vector.

**2.** A processing apparatus comprising:

a first means for having a first (1301-1306), a second (1401-1406) and a third (1701-1708) tense control vectors, the tense control vectors being sub-routines, wherein the first tense control vector operates either one of the following for every screen format necessary for a software to be produced and for every word belonging to the screen format: to do nothing in case data necessary for editing said screen format exists in a self word's first data area, or to create data in the self word's first data area in case data does not exist in the self word's first data area while setting a first restart flag when such creation is impossible, wherein the second tense control vector operates either one of the following for every said screen format and for every word belonging to the screen format: to do nothing if there is no data for the self word in the data received from the screen format, or if there is a data for the self word in the data received from the screen format, to do either of the followings, in case of a non-control word, setting the data in a self word's second data area, while setting a second restart flag when said data setting is not precisely accomplished, and in case of a control word, determining a homogeneity route in accordance with a nature of the self word, while setting the second restart flag when the determination of the homogeneity route is not precisely established; and wherein the third tense control vector operates either one of the following for every word belonging to all definitives including the screen format, a voucher format, and a file format necessary for the software: to do nothing in case data exists in a self word's third data area, or to create data in the self word's third data area in case data does not exist in the self word's third data area, while setting a third restart flag when such creation is impossible;

a second means for having a first, a second and a third pallet functions (1801-1806), wherein the first pallet function executes for every said screen format and for all words belonging to the screen format, irrespective of the sequence of the words, the first tense control vectors, each vector of which corresponds to every word belonging to the screen format, while re-executing all the first tense control vectors for every word belonging to the screen format when the first restart flag is set after such execution, wherein the second pallet function executes for every said screen format and for all words belonging to the screen format, irrespective of the sequence of the words, the second tense control vectors, each vector of which corresponds to every word belonging to the screen format, while re-executing all the second tense control vectors for every word belonging to the screen format when the second restart flag is set after such execution, and wherein the third pallet function executes, for all words belonging to the definitive, irrespective of the sequence of the words, the third tense control vectors, each vector of which corresponds to every word belonging to the definitive, while re-executing all the third tense control vectors for every word belonging to the definitive when the third restart flag is set after such execution; and
a third means for executing the first pallet function, transmitting data resulted from said execution to a screen format, receiving the data from the screen format to execute the second pallet function, and, based on this execution's result, selectively executing the third pallet function in accordance with the homogeneity route determined by the second tense control vector.

**3.** A recording medium on which a programme is recorded, said program comprising:

a first means for having a first (1301-1306), a second (1401-1406) and a third (1701-1708) tense control vectors, the tense control vectors being sub-routines, wherein the first tense control vector operates either one of the following for every screen format necessary for a software to be produced and for every word belonging to the screen format: to do nothing in case data necessary for editing said screen format exists in a self word's first data area, or to create data in the self word's first data area in case data does not exist in the self word's first data area while setting a first restart flag when such creation is impossible, wherein the second tense control vector operates either one of the following for every said screen format and for every word belonging to the screen format: to do nothing if there is no data for the self word in the data received from the screen format, or if there is a data for the self word in the data received from the screen format, to do either of the followings, in case of a non-control word, setting the data in a self word's second data area, while setting a second restart flag when said data setting is not precisely accomplished, and in case of a control word, determining a homogeneity route in accordance with a nature of the self word, while setting the second restart flag when the determination of the homogeneity route is not precisely established; and wherein the third tense control vector operates either one of the following for every word belonging to all definitives including the screen format, a voucher format, and a file format necessary for the software: to do nothing in case data exists in a self word's third data area, or to create data in the self word's third data area in case data does not exist in the self word's third data area, while setting a third restart flag when such creation is impossible;
a second means for having a first, a second and a third pallet functions (1801-1806), wherein the first pallet function executes for every said screen format and for all words belonging to the screen format, irrespective of the sequence of the words, the first tense control vectors, each vector of which corresponds to every word belonging to the screen format, while re-executing all the first tense control vectors for every word belonging to the screen format when the first restart flag is set after such execution, wherein the second pallet function executes for every said screen format and for all words belonging to the screen format, irrespective of the sequence of the words, the second tense control vectors, each vector of which corresponds to every word belonging to the screen format, while re-executing all the second tense control vectors for every word belonging to the screen format when the second restart flag is set after such execution, and wherein the third pallet function executes, for all words belonging to the definitive, irrespective of the sequence of the words, the third tense control vectors, each vector of which corresponds to every word belonging to the definitive, while re-executing all the third tense control vectors for every word belonging to the definitive when the third restart flag is set after such execution; and

a third means for executing the first pallet function, transmitting data resulted from said execution to a screen format, receiving the data from the screen format to execute the second pallet function, and, based on this execution's result, selectively executing the third pallet function in accordance with the homogeneity route determined by the second tense control vector.

4. A processing method comprising the following steps:

a step (2101) to determine one or more screen formats to be displayed, which are necessary for a software to be produced;

a step (2102) to activate W04 pallet function which executes, for every said screen format and for all words belonging to the screen format, irrespective of the sequence of the words, first tense control vectors, tense control vectors being sub-routines, while re-executing all the first tense control vectors for every word belonging to the screen format when a first restart flag is set after such execution, wherein the first tense control vector operates either one of the followings for every said screen format and for every word belonging to the screen format: to do nothing in case data exists in a self word's first data area, or to create data in the self word's first data area in case data does not exist in the self word's first data area while setting the first restart flag when such creation is impossible;

a step (2103) to display the screen format edited based on said W04 pallet function;

a step (2104) to receive contents resulted from an operation onto the screen format displayed;

a step (2105) to activate W02 pallet function which executes, for every said screen format and for all words belonging to the screen format, irrespective of the sequence of the words, second tense control vectors, while re-executing all the second tense control vectors for every word belonging to the screen format when a second restart flag is set after such execution, wherein the second tense control vector operates either one of the followings for every said screen format and for every word belonging to the screen format: to do nothing if there is no data for the self word in the data received from the screen format by said operation onto the screen format, or, if there is a data for the self word in the data received from the screen format, to do either of the followings: in case of a non-control word, setting the data in a self word's second data area while setting the second restart flag when said data setting is not precisely accomplished, and in case of a control word, determining (2106) a homogeneity route in accordance with a nature of the self word while setting the second restart flag when the determination of the homogeneity route is not precisely established; and

a step (2108) to selectively activate W03 pallet function based on the execution result of the W02 pallet function and in accordance with the homogeneity route determined by said second tense control vector, said W03 pallet function executing, for all words belonging to all definitives necessary for the software, irrespective of the sequence of the words, third tense control vectors, while re-executing all the third tense control vectors for every word belonging to the definitive when a third restart flag is set after such execution, wherein the third tense control vector operates either one of the followings for all words belonging to all the definitives: to do nothing in case data exists in a self word's third data area, or to create data in the self word's third data area in case data does not exist in the self word's third data area while setting the third restart flag when such creation is impossible.

5. A recording medium on which is recorded a program adapted to control a computer to carry out the method of claims 1 or 4.

**Patentansprüche**

1. Software-Herstellungsverfahren, umfassend die folgenden Schritte:

einen Schritt (101) zum Bestimmen von Definitiven-Identifizierern von Definitiven einschließlich eines Schirm-Formats, eines Voucher-Formats und eines Datei-Formats, die für die herzustellende Software benötigt werden;

einen Schritt (102) zum Heraussortieren von Wörtern, die in den Definitiven existieren;

einen Schritt (103) zum Erzeugen einer Homogenitätskarte, in der Paletten (WO2, WO3, WO4), die logische Einheiten sind, die von der Software benötigt werden, in Übereinstimmung mit einer vorgegebenen Regel auf Grundlage der Definitiven-Identifizierer aufgetragen werden sollen;

einen Schritt (105) zum Bestimmen von notwendigen Dateien auf Grundlage der herausgesuchten Wörter und der erzeugten Homogenitätskarte;

einen Schritt (106) zum Erzeugen eines ersten (1301-1306), eines zweiten (1401-1406) und eines dritten (1701-1708) Zeitsteuervektors, wobei die Zeitsteuervektoren Unterprogramme sind, wobei der erste Zeitsteuervektor einen der folgenden für jedes besagte Schirm-Format und für jedes Wort, das zu dem Schirm-Format gehört, betreibt: Nichtstun für den Fall, dass Daten in einem ersten Datengebiet eines Selbstworts existieren, oder Erzeugen von Daten in dem ersten Datengebiet des Selbstworts für den Fall, dass Daten nicht in dem ersten Datengebiet des Selbstworts existieren, während ein erstes Neustart-Flag eingestellt wird, wenn eine derartige Erzeugung unmöglich ist, wobei der zweite Zeitsteuervektor einen der folgenden für jedes besagte Schirm-Format und für jedes Wort, das zu dem Schirm-Format gehört, betreibt: Nichtstun, wenn keine Daten für das Selbstwort in den Daten, die von dem Schirm-Format empfangen werden, vorhanden sind, oder wenn ein Datenwert für das Selbstwort in den Daten, die von dem Schirm-Format empfangen werden, vorhanden ist, Ausführen eines der folgenden, für den Fall eines Nicht-Steuerworts, Einstellen der Daten in einem zweiten Datengebiet eines Selbstworts, während ein zweites Neustart-Flag eingestellt wird, wenn die Dateneinstellung nicht genau erreicht wird, und für den Fall eines Steuerworts, Bestimmen einer Homogenitätsroute in Übereinstimmung mit einer Art des Selbstworts, während das zweite Neustart-Flag eingestellt wird, wenn die Bestimmung der Homogenitätsroute nicht genau hergestellt wird; und wobei der dritte Zeitsteuervektor einen der folgenden für sämtliche Wörter, die zu sämtlichen Definitiven gehören, die für die Software erforderlich sind, betreibt: Nichtstun für den Fall, dass Daten in einem dritten Datengebiet eines Selbstworts existieren, oder Erzeugen von Daten in dem dritten Datengebiet des Selbstworts für den Fall, dass Daten in dem dritten Datengebiet des Selbstworts nicht existieren, während ein drittes Neustart-Flag eingestellt wird, wenn eine derartige Erzeugung unmöglich ist;

einen Schritt (107) zum Erzeugen einer ersten, einer zweiten, einer dritten Paletten-Funktion, wobei die erste Paletten-Funktion für jedes besagte Schirm-Format, für sämtliche Worte, die zu dem Schirm-Format gehören, unabhängig von der Sequenz der Worte, die ersten Zeitsteuervektoren ausführt, wobei jeder Vektor davon jedem Wort entspricht, das zu dem Schirm-Format gehört, während sämtliche ersten Zeitsteuervektoren für jedes Wort, das zu dem Schirm-Format gehört, neu ausgeführt werden, wenn das erste Neustart-Flag nach einer derartigen Ausführung eingestellt wird, wobei die zweite Paletten-Funktion für jedes besagte Schirm-Format, für sämtliche Worte, die zu dem Schirm-Format gehören, unabhängig von der Sequenz der Worte, die zweiten Zeitsteuervektoren ausführt, wobei jeder Vektor davon jedem Wort entspricht, das zu dem Schirm-Format gehört, während sämtliche zweite Zeitsteuervektoren für jedes Wort ausgeführt werden, das zu dem Schirm-Format gehört, wenn das zweite Neustart-Flag nach einer derartigen Ausführung eingestellt wird, und wobei die dritte Paletten-Funktion für sämtliche Worte, die zu dem Definitiv gehören, unabhängig von der Sequenz der Worte, die dritten Zeitsteuervektoren ausführt, wobei jeder Vektor davon jedem Wort entspricht, das zu dem Definitiv gehört, während sämtliche dritte Zeitsteuervektoren für jedes Wort, das zu dem Definitiv gehört, erneut ausgeführt werden, wenn das dritte Neustart-Flag nach einer derartigen Ausführung eingestellt wird; und

einen Schritt (108) zum Zusammensetzen der ersten bis dritten Paletten-Funktionen in eine Paletten-Kettenfunktion, die die erste Paletten-Funktion ausführt, Daten, die sich aus der Ausführung ergeben, an ein Schirm-Format überträgt, die Daten von dem Schirm-Format zur Ausführung der zweiten Paletten-Funktion empfängt, und auf Grundlage dieses Ausführungsergebnisses selektiv die dritte Paletten-Funktion in Übereinstimmung mit der Homogenitätsroute, die von dem zweiten Zeitsteuervektor bestimmt wird, ausführt.

2.  Verarbeitungsvorrichtung, umfassend:

eine erste Einrichtung, um einen ersten (1301-1306), einen zweiten (1401-1406) und einen dritten (1701-1708) Zeitsteuervektor aufzuweisen, wobei die Zeitsteuervektoren Unterprogramme sind, wobei der erste Zeitsteuervektor einen der folgenden für jedes Schirm-Format, das für eine herzustellende Software erforderlich ist, und für jedes Wort, das zu dem Schirm-Format gehört, betreibt: Nichtstun für den Fall, dass Daten, die zum Editieren des Schirm-Formats erforderlich sind, in einem ersten Datengebiet eines Selbstworts existieren, oder Erzeugen von Daten in dem ersten Datengebiet des Selbstworts für den Fall, dass Daten in dem ersten Datengebiet des Selbstworts nicht existieren, während ein erstes Neustart-Flag eingestellt wird, wenn eine derartige Erzeugung unmöglich ist, wobei der zweite Zeitsteuervektor einen der folgenden für jedes besagte Schirm-Format und für jedes Wort, das zu dem Schirm-Format gehört, betreibt: Nichtstun, wenn keine Daten für das Selbstwort in den Daten vorhanden sind, die von dem Schirm-Format empfangen werden, und wenn ein Datenwert für das Selbstwort in den Daten vorhanden ist, die von dem Schirm-Format empfangen werden, Ausführen eines der folgenden, für den Fall eines Nicht-Steuerworts, Einstellen der Daten in einem zweiten Datengebiet des Selbstworts, während ein zweites Neustart-Flag eingestellt wird, wenn die Dateneinstellung nicht genau erreicht wird, und für den Fall eines Steuerworts, Bestimmen einer Homogenitätsroute in Übereinstimmung mit einer Art des Selbstworts, während das zweite Neustart-Flag eingestellt wird, wenn die Bestimmung der Homogenitätsroute nicht genau hergestellt wird; und wobei der dritte Zeitsteuervektor einen der folgenden für jedes Wort, das zu sämtlichen Definitiven einschließlich des Schirm-Formats, eines Voucher-Formats und eines Datei-Formats gehört, die für die Software notwendig sind, betreibt: Nichtstun für den Fall, dass Daten in einem dritten Datengebiet des Selbstworts existieren, oder Erzeugen von Daten in dem dritten Datengebiet des Selbstworts für den Fall, dass Daten in dem dritten Datengebiet des Selbstworts nicht existieren, während ein drittes Neustart-Flag eingestellt wird, wenn eine derartige Erzeugung unmöglich ist;

eine zweite Einrichtung, um eine erste, eine zweite und eine dritte Paletten-Funktion (1801-1806) aufzuweisen, wobei die erste Paletten-Funktion für jedes besagte Schirm-Format und für sämtliche Wörter, die zu dem Schirm-Format gehören, unabhängig von der Sequenz der Worte, die ersten Zeitsteuervektoren ausführt, wobei jeder Vektor davon jedem Wort entspricht, das zu dem Schirm-Format gehört, während sämtliche ersten Zeitsteuervektoren für jedes Wort, das zu dem Schirm-Format gehört, neu ausgeführt werden, wenn das erste Neustart-Flag nach einer derartigen Ausführung eingestellt wird, wobei die zweite Paletten-Funktion für jedes besagte Schirm-Format und für sämtliche Wörter, die zu dem Schirm-Format gehören, unabhängig von der Sequenz der Worte, die zweiten Zeitsteuervektoren ausführt, wobei jeder Vektor davon jedem Wort entspricht, das zu dem Schirm-Format gehört, während sämtliche zweiten Zeitsteuervektoren für jedes Wort, das zu dem Schirm-Format gehört, erneut ausgeführt werden, wenn das zweite Neustart-Flag nach einer derartigen Ausführung eingestellt wird, und wobei die dritte Paletten-Funktion für sämtliche Wörter, die zu dem Definitiv gehören, unabhängig von der Sequenz der Worte, die dritten Zeitsteuervektoren ausführt, wobei jeder Vektor davon jedem Wort entspricht, das zu dem Definitiv gehört, während sämtliche dritten Zeitsteuervektoren für jedes Wort, das zu dem Definitiv gehört, ausgeführt werden, wenn das dritte Neustart-Flag nach einer derartigen Ausführung eingestellt wird; und

eine dritte Einrichtung zum Ausführen der ersten Paletten-Funktion, zum Übertragen von Daten, die sich aus der Ausführung ergeben, an ein Schirm-Format, Empfangen der Daten von dem Schirm-Format, um die zweiten Paletten-Funktion auszuführen, und auf Grundlage dieses Ausführungsergebnisses, selektives Ausführen der dritten Paletten-Funktion in Übereinstimmung mit der Homogenitätsroute, die von dem zweiten Zeitsteuervektor bestimmt wird.

3.  Aufzeichnungsmedium, auf dem ein Programm aufgezeichnet ist, wobei das Programm umfasst:

eine erste Einrichtung, um einen ersten (1301-1306), einen zweiten (1401-1406) und einen dritten (1701-1708) Zeitsteuervektor aufzuweisen, wobei die Zeitsteuervektoren Unterprogramme sind, wobei der erste Zeitsteuervektor einen der folgenden für jedes Schirm-Format, das für eine herzustellende Software benötigt wird, und für jedes Wort, das zu dem Schirm-Format gehört, betreibt: Nichtstun für den Fall, dass Daten, die zum Editieren des Schirm-Formats erforderlich sind, in einem ersten Datengebiet eines Selbstworts existieren, oder Erzeugen von Daten in einem ersten Datengebiet eines Selbstworts für den Fall, dass Daten in dem ersten Datengebiet des Selbstworts nicht existieren, während ein erstes Neustart-Flag eingestellt wird, wenn eine derartige Erzeugung unmöglich ist, wobei der zweite Zeitsteuervektor eines der folgenden für jedes Schirm-Format und für jedes Wort, das zu dem Schirm-Format gehört, betreibt: Nichtstun, wenn keine Daten für das Selbstwort in den Daten, die von dem Schirm-Format empfangen werden, vorhanden sind, oder wenn ein Datenwert für das Selbstwort in den Daten, die von dem Schirm-Format empfangen werden, vorhanden ist, Ausführen eines der folgenden, für den Fall eines Nicht-Steuerworts, Einstellen der Daten in einem zweiten Datengebiet des Selbstworts, während ein zweites Neustart-Flag eingestellt wird, wenn die Dateneinstellung nicht genau erreicht wird, und für den Fall eines Steuerworts, Bestimmen einer Homogenitätsroute in Übereinstimmung mit einer Art des Selbstworts, während das zweite Neustart-Flag eingestellt wird, wenn die Bestimmung der Homogenitätsroute nicht genau hergestellt wird; und wobei der dritte Zeitsteuervektor einen der folgenden für jedes Wort, das zu sämtlichen Definitiven einschließlich des Schirm-Formats, eines Voucher-Formats und eines Datei-Formats gehört, die für die Software erforderlich sind, betreibt: Nichtstun für den Fall, dass Daten in einem dritten Datengebiet eines Selbstworts existieren, oder Erzeugen von Daten in dem dritten Datengebiet des Selbstworts für den Fall, dass Daten in dem dritten Datengebiet des Selbstworts nicht existieren, während ein drittes Neustart-Flag eingestellt wird, wenn eine derartige Erzeugung unmöglich ist; eine zweite Einrichtung, um eine erste, eine zweite und eine dritte Paletten-Funktion (1801-1806) aufzuweisen, wobei die erste Paletten-Funktion für jedes besagte Schirm-Format und für sämtliche Wörter, die zu dem Schirm-Format gehören, unabhängig von der Sequenz der Worte, die ersten Zeitsteuervektoren ausführt, wobei jeder Vektor davon jedem Wort, das zu dem Schirm-Format gehört, entspricht, während sämtliche ersten Zeitsteuervektoren für jedes Wort, das zu dem Schirm-Format gehört, erneut ausgeführt werden, wenn das erste Neustart-Flag nach einer derartigen Ausführung eingestellt wird, wobei die zweite Paletten-Funktion für jedes besagte Schirm-Format und für sämtliche Wörter, die zu dem Schirm-Format gehören, unabhängig von der Sequenz der Worte, die zweiten Zeitsteuervektoren ausführt, wobei jeder Vektor davon jedem Wort, das zu dem Schirm-Format gehört, entspricht, während sämtliche zweiten Zeitsteuervektoren für jedes Wort, das zu dem Schirm-Format gehört, erneut ausgeführt werden, wenn das zweite Neustart-Flag nach einer derartigen Ausführung eingestellt wird, und wobei die dritte Paletten-Funktion für sämtliche Worte, die zu dem Definitiv gehören, unabhängig von der Sequenz der Worte, die dritten Zeitsteuervektoren ausführt, wobei jeder Vektor davon jedem Wort, das zu dem Definitiv gehört, entspricht, während sämtliche dritten Zeitsteuervektoren für jedes Wort, das zu dem Definitiv gehört, erneut ausgeführt werden, wenn das dritte Neustart-Flag nach einer derartigen Ausführung eingestellt wird; und

eine dritte Einrichtung zum Ausführen der ersten Paletten-Funktion, Übertragen von Daten, die sich aus der Ausführung ergeben, an ein Schirm-Format, Empfangen der Daten von dem Schirm-Format, um die zweite Paletten-Funktion auszuführen, und, auf Grundlage des Ausführungsergebnisses, selektives Ausführen der dritten Paletten-Funktion in Übereinstimmung mit der Homogenitätsroute, die durch den zweiten Zeitsteuervektor bestimmt wird.

4. Verarbeitungsverfahren, umfassend die folgenden Schritte:

einen Schritt (2101) zum Bestimmen von einen oder mehreren anzuzeigenden Schirm-Formaten, die für eine herzustellende Software erforderlich sind;

einen Schritt (2102) zum Aktivieren einer W04-Paletten-Funktion, die für jedes besagte Schirm-Format und für sämtliche Worte, die zu dem Schirm-Format gehören, unabhängig von der Sequenz der Worte, erste Zeitsteuervektoren ausführt, wobei Zeitsteuervektoren Unterprogramme sind, während sämtliche erste Zeitsteuervektoren für jedes Wort, das zu dem Schirm-Format gehört, erneut ausgeführt werden, wenn ein erstes Neustart-Flag nach einer derartigen Ausführung eingestellt wird, wobei der erste Zeitsteuervektor einen der folgenden für jedes besagte Schirm-Format und für jedes Wort, das zu dem Schirm-Format gehört, betreibt: Nichtstun für den Fall, dass Daten in einem ersten Datengebiet eines Selbstworts existieren, oder Erzeugen von Daten in dem ersten Datengebiet des Selbstworts für den Fall, dass Daten in dem ersten Datengebiet des Selbstworts nicht existieren, während das erste Neustart-Flag eingestellt wird, wenn eine derartige Erzeugung unmöglich ist;

einen Schritt (2103) zum Anzeigen des Schirm-Formats, das auf Grundlage der W04 Paletten-Funktion editiert wird;

einen Schritt (2104) zum Empfangen von Inhalten, die sich aus einem Betrieb auf das gezeigte Schirm-Format hin ergeben;

ein Schritt (2105) zum Aktivieren einer W02 Paletten-Funktion, die für jedes besagte Schirm-Format und für sämtliche Worte, die zu dem Schirm-Format gehören, unabhängig von der Sequenz der Worte, zweite Zeitsteuervektoren ausführt, während sämtliche zweiten Zeitsteuervektoren für jedes Wort, das zu dem Schirm-Format gehört, erneut ausgeführt werden, wenn ein zweites Neustart-Flag nach einer derartigen Ausführung eingestellt wird, wobei der zweite Zeitsteuervektor einen der folgenden für jedes besagte Schirm-Format und für jedes Wort, das zu dem Schirm-Format gehört, betreibt: Nichtstun, wenn keine Daten für das Selbstwort in den Daten, die von dem Schirm-Format durch den Betrieb auf das Schirm-Format hin empfangen werden, vorhanden sind, oder wenn ein Datenwert für das Selbstwort in den Daten, die von dem Schirm-Format empfangen werden, vorhanden ist, Ausführen eines der folgenden: für den Fall eines Nicht-Steuerworts, Einstellen der Daten in einem zweiten Datengebiet eines Selbstworts, während das zweite Neustart-Flag eingestellt wird, wenn die Dateneinstellung nicht genau erreicht wird, und für den Fall eines Steuerworts, Bestimmen (2106) einer Homogenitätsroute in Übereinstimmung mit einer Art des Selbstworts, während das zweite Neustart-Flag eingestellt wird, wenn die Bestimmung der Homogenitätsroute nicht genau hergestellt wird; und

einen Schritt (2108) zum selektiven Aktivieren einer W03 Paletten-Funktion auf Grundlage des Ausführungsergebnisses der W02 Paletten-Funktion und in Übereinstimmung mit der Homogenitätsroute, die von dem zweiten Zeitsteuervektor bestimmt wird, wobei die W03 Paletten-Funktion, für sämtliche Worte, die zu sämtlichen Definitiven gehören, die für die Software benötigt werden, unabhängig von der Sequenz der Worte, dritte Zeitsteuervektoren ausführt, während sämtliche dritten Zeitsteuervektoren für jedes Wort, das zu dem Definitiv gehört, erneut ausgeführt werden, wenn ein drittes Neustart-Flag nach einer derartigen Ausführung eingestellt wird, wobei der dritte Zeitsteuervektor einen der folgenden für sämtliche Wörter, die zu sämtlichen Definitiven gehören, betreibt: Nichtstun für den Fall, dass Daten in einem dritten Datengebiet eines Selbstworts existieren, oder Erzeugen von Daten in dem dritten Datengebiet des Selbstworts für den Fall, dass Daten in dem dritten Datengebiet des Selbstworts nicht existieren, während das dritte Neustart-Flag eingestellt wird, wenn eine derartige Erzeugung unmöglich ist.

**5.** Aufzeichnungsmedium, auf dem ein Programm aufgezeichnet ist, welches zum Steuern eines Computers zum Ausführen des Verfahrens der Ansprüche 1 oder 4 ausgelegt ist.


**Revendications**

**1.** Un procédé de production de logiciel comprenant les étapes suivantes:

une étape (101) pour déterminer des identificateurs d'éléments définitifs destinés à identifier des éléments définitifs, incluant un format d'écran, un format de fiche et un format de fichier, qui sont nécessaires pour produire le logiciel;
une étape (102) pour trier des mots qui existent dans les éléments définitifs;
une étape (103) pour créer un plan d'homogénéité dans lequel des palettes (W02, W03, W04), qui sont des unités logiques nécessaires au logiciel, doivent être représentées conformément à une règle prédéterminée basée sur les identificateurs d'éléments définitifs;
une étape (105) pour déterminer des fichiers nécessaires sur la base des mots triés et du plan d'homogénéité créé;
une étape (106) pour créer un premier (1301-1306), un second (1401-1406) et un troisième (1701-1708) vecteurs de commande de temps, les vecteurs de commande de temps étant des sous-programmes, dans laquelle le premier vecteur de commande de temps accomplit l'une ou l'autre des actions suivantes pour chaque format d'écran et chaque mot appartenant au format d'écran: ne rien faire dans le cas où des données existent dans une première zone de données du mot propre, ou créer des données dans la première zone de données du mot propre dans le cas où des données n'existent pas dans la première zone de données du mot propre, tout en instaurant une première marque de redémarrage lorsqu'une telle création est impossible, dans laquelle le second vecteur de commande de temps accomplit l'une ou l'autre des actions suivantes pour chaque format d'écran et chaque mot appartenant au format d'écran: ne rien faire s'il n'y a pas de données pour le mot propre dans les données reçues à partir du format d'écran, ou bien s'il y a des données pour le mot propre dans les données reçues à partir du format d'écran, accomplir l'une ou l'autre des actions suivantes, dans le cas d'un mot de non-commande, placer les données dans une seconde zone de données du mot propre, tout en instaurant une seconde marque de redémarrage lorsque ce placement de données n'est pas accompli de façon précise, et dans le cas d'un mot de commande, déterminer une route d'homogénéité conformément à la nature du mot propre, tout en instaurant la seconde marque de redémarrage lorsque la détermination de la route d'homogénéité n'est pas établie de façon précise; et dans laquelle le troisième vecteur de commande de temps accomplit l'une ou l'autre des actions suivantes pour tous les mots appartenant à tous les éléments définitifs nécessaires pour le logiciel: ne rien faire dans le cas où des données existent dans une troisième zone de données du mot propre, ou créer des données dans la troisième zone de données du mot propre dans le cas où des données n'existent pas dans la troisième zone de données du mot propre, tout en instaurant une troisième marque de redémarrage lorsqu'une telle création est impossible;
une étape (107) pour créer une première, une seconde et une troisième fonctions de palette, dans laquelle la première fonction de palette exécute pour chaque format d'écran, pour tous les mots appartenant au format d'écran, indépendamment de la séquence des mots, les premiers vecteurs de commande de temps, dont chaque vecteur correspondant à chaque mot appartenant au format d'écran, tout en réexécutant tous les premiers vecteurs de commande de temps pour chaque mot appartenant au format d'écran lorsque la première marque de redémarrage est instaurée après une telle exécution, dans laquelle la seconde fonction de palette exécute pour chaque format d'écran, pour tous les mots appartenant au format d'écran, indépendamment de la séquence des mots, les seconds vecteurs de commande de temps, dont chaque vecteur correspond à chaque mot appartenant au format d'écran, tout en réexécutant tous les seconds vecteurs de commande de temps pour chaque mot appartenant au format d'écran lorsque la seconde marque de redémarrage est instaurée après une telle exécution, et dans laquelle la troisième fonction de palette exécute, pour tous les mots appartenant à l'élément définitif, indépendamment de la séquence des mots, les troisièmes vecteurs de commande de temps, dont chaque vecteur correspond à chaque mot appartenant à l'élément définitif, tout en réexécutant tous les troisièmes vecteurs de commande de temps pour chaque mot appartenant à l'élément définitif lorsque la troisième marque de redémarrage est instaurée après une telle exécution; et

une étape (108) pour assembler les première à troisième fonctions de palette en une fonction de chaîne de palettes qui exécute la première fonction de palette, transmet à un second format d'écran les données qui résultent de cette exécution, reçoit les données provenant du format d'écran pour exécuter la seconde fonction de palette et, sur la base du résultat de cette exécution, exécute sélectivement la troisième fonction de palette conformément à la route d'homogénéité déterminée par le second vecteur de commande de temps.

2. Un appareil de traitement comprenant:

un premier moyen pour avoir un premier (1301-1306), un second (1401-1406) et un troisième (1701-1708) vecteurs de commande de temps, les vecteurs de commande de temps étant des sous-programmes, dans lequel le premier vecteur de commande de temps accomplit l'une ou l'autre des actions suivantes, pour chaque format d'écran nécessaire pour produire un logiciel et pour chaque mot appartenant au format d'écran: ne rien faire dans le cas où des données nécessaires pour éditer ce format d'écran existent dans une première zone de données d'un mot propre, ou créer des données dans la première zone de données du mot propre dans le cas où des données n'existent pas dans la première zone de données du mot propre, tout en instaurant une première marque de redémarrage lorsqu'une telle création est impossible, dans lequel le second vecteur de commande de temps accomplit l'une ou l'autre des actions suivantes pour chaque format d'écran et pour chaque mot appartenant au format d'écran: ne rien faire s'il n'y a pas de données pour le mot propre dans les données reçues à partir du format d'écran, ou s'il y a des données pour le mot propre dans les données reçues à partir du format d'écran, accomplir l'une ou l'autre des actions suivantes: dans le cas d'un mot de non-commande, placer les données dans une seconde zone de données du mot propre, tout en instaurant une seconde marque de redémarrage lorsque ce placement de données n'est pas accompli de façon précise, et dans le cas d'un mot de commande, déterminer une route d'homogénéité conformément à la nature du mot propre, tout en instaurant la seconde marque de démarrage lorsque la détermination de la route d'homogénéité n'est pas établie de façon précise; et dans lequel le troisième vecteur de commande de temps accomplit l'une ou l'autre des actions suivantes pour chaque mot appartenant à tous les éléments définitifs incluant le format d'écran, un format de fiche et un format de fichier nécessaires pour le logiciel: ne rien faire dans le cas où des données existent dans une troisième zone de données d'un mot propre, ou créer des données dans la troisième zone de données du mot propre dans le cas où des données n'existent pas dans la troisième zone de données du mot propre, tout en instaurant une troisième marque de redémarrage lorsqu'une telle création est impossible;

un second moyen pour avoir une première, une seconde et une troisième fonctions de palette (1801-1806), dans lequel la première fonction de palette exécute pour chaque format d'écran et pour tous les mots appartenant au format d'écran, indépendamment de la séquence des mots, les premiers vecteurs de commande de temps, dont chaque vecteur correspond à chaque mot appartenant au format d'écran, tout en réexécutant tous les premiers vecteurs de commande de temps pour chaque mot appartenant au format d'écran lorsque la première marque de redémarrage est instaurée après une telle exécution, dans lequel la seconde fonction de palette exécute pour chaque format d'écran et pour tous les mots appartenant au format d'écran, indépendamment de la séquence des mots, les seconds vecteurs de commande de temps, dont chaque vecteur correspond à chaque mot appartenant au format d'écran, tout en réexécutant tous les seconds vecteurs de commande de temps pour chaque mot appartenant au format d'écran lorsque la seconde marque de redémarrage est instaurée après une telle exécution, et dans lequel la troisième fonction de palette exécute, pour tous les mots appartenant à l'élément définitif, indépendamment de la séquence des mots, les troisièmes vecteurs de commande de temps, dont chaque vecteur correspond à chaque mot appartenant à l'élément définitif, tout en réexécutant tous les troisièmes vecteurs de commande de temps pour chaque mot appartenant à l'élément définitif, lorsque la troisième marque de redémarrage est instaurée après une telle exécution; et un troisième moyen pour exécuter la première fonction de palette, transmettre à un format d'écran les données qui résultent de cette exécution, recevoir les données provenant du format d'écran pour exécuter la seconde fonction de palette et, sur la base du résultat de cette exécution, exécuter sélectivement la troisième fonction de palette conformément à la route d'homogénéité déterminée par le second vecteur de commande de temps.

3. Un support d'enregistrement sur lequel un programme est enregistré, ce programme comprenant:

un premier moyen pour avoir un premier (1301-1306), un second (1401-1406) et un troisième (1701-1708) vecteurs de commande de temps, les vecteurs de commande de temps étant des sous-programmes, dans lequel le premier vecteur de commande de temps accomplit l'une ou l'autre des actions suivantes, pour chaque format d'écran nécessaire pour produire un logiciel et pour chaque mot appartenant au format d'écran: ne rien faire dans le cas où des données nécessaires pour éditer ce format d'écran existent dans une première zone de données d'un mot propre, ou créer des données dans la première zone de données du mot propre dans le cas où des données n'existent pas dans la première zone de données du mot propre, tout en instaurant une première marque de redémarrage lorsqu'une telle création este impossible, dans lequel le second vecteur de commande de temps accomplit l'une ou l'autre des actions suivantes pour chaque format d'écran et pour chaque mot appartenant au format d'écran: ne rien faire s'il n'y a pas de données pour le mot propre dans les données reçues à partir du format d'écran, ou s'il y a des données pour le mot propre dans les données reçues à partir du format d'écran, accomplir l'une ou l'autre des actions suivantes: dans le cas d'un mot de non-commande, placer les données dans une seconde zone de données du mot propre, tout en instaurant une second marque de redémarrage lorsque ce placement de données n'est pas accompli de façon précise, et dans le cas d'un mot de commande, déterminer une route d'homogénéité conformément à la nature du mot propre, tout en instaurant la seconde marque de démarrage lorsque la détermination de la route d'homogénéité n'est pas établie de façon précise; et dans lequel le troisième vecteur de commande de temps accomplit l'une ou l'autre des actions suivantes pour chaque mot appartenant à tous les éléments définitifs incluant le format d'écran, un format de fiche et un format de fichier nécessaires pour le logiciel: ne rien faire dans le cas où des données existent dans une troisième zone de données d'un mot propre, ou créer des données dans la troisième zone de données du mot propre dans le cas où des données n'existent pas dans la troisième zone de données du mot propre, tout en instaurant une troisième marque de redémarrage lorsqu'une telle création est impossible;

un second moyen pour avoir une première, une seconde et une troisième fonctions de palette (1801-1806), dans lequel la première fonction de palette exécute pour chaque format d'écran et pour tous les mots appartenant au format d'écran, indépendamment de la séquence des mots, les premiers vecteurs de commande de temps, dont chaque vecteur correspond à chaque mot appartenant au format d'écran, tout en réexécutant tous les premiers vecteurs de commande de temps pour chaque mot appartenant au format d'écran lorsque la première marque de redémarrage est instaurée après une telle exécution, dans lequel la seconde fonction de palette exécute pour chaque format d'écran et pour tous les mots appartenant au format d'écran, indépendamment de la séquence des mots, les seconds vecteurs de commande de temps, dont chaque vecteur correspond à chaque mot appartenant au format d'écran, tout en réexécutant tous les seconds vecteurs de commande de temps pour chaque mot appartenant au format d'écran lorsque la seconde marque de redémarrage est instaurée après une telle exécution, et dans lequel la troisième fonction de palette exécute, pour tous les mots appartenant à l'élément définitif, indépendamment de la séquence des mots, les troisièmes vecteurs de commande de temps, dont chaque vecteur correspond à chaque mot appartenant à l'élément définitif, tout en réexécutant tous les troisièmes vecteurs de commande de temps pour chaque mot appartenant à l'élément définitif, lorsque la troisième marque de redémarrage est instaurée après une telle exécution; et un troisième moyen pour exécuter la première fonction de palette, transmettre à un format d'écran les données qui résultent de cette exécution, recevoir les données provenant du format d'écran pour exécuter la seconde fonction de palette et, sur la base du résultat de cette exécution, exécuter. sélectivement la troisième fonction de palette conformément à la route d'homogénéité déterminée par le second vecteur de commande de temps.

**4.** Un procédé de traitement comprenant les étapes suivantes:

une étape (2101) pour déterminer un ou plusieurs formats d'écran à visualiser, qui sont nécessaires pour produire un logiciel;
une étape (2102) pour activer une fonction de palette W04 qui exécute, pour chaque format d'écran et pour tous les mots appartenant au format d'écran, indépendamment de la séquence des mots, des premiers vecteurs de commande de temps, des vecteurs de commande de temps étant des sous-programmes, tout en réexécutant tous les premiers vecteurs de commande de temps pour chaque mot appartenant au format d'écran lorsqu'une première marque de redémarrage est instaurée après une telle exécution, dans laquelle le premier vecteur de commande de temps accomplit l'une ou l'autre des actions suivantes pour chaque format d'écran et pour chaque mot appartenant au format d'écran: ne rien faire dans le cas où des données existent dans une première zone de données d'un mot propre, ou créer des données dans la première zone de données du mot propre dans le cas où des données n'existent pas dans la première zone de données du mot propre, tout en instaurant la première marque de redémarrage lorsqu'une telle création est impossible;
une étape (2103) pour visualiser le format d'écran édité sur la base de la fonction de palette W04;
une étape (2104) pour recevoir le contenu résultant d'une opération effectuée sur le format d'écran visualisé;
une étape (2105) pour activer une fonction de palette W02 qui exécute, pour chaque format d'écran et pour tous les mots appartenant au format d'écran, indépendamment de la séquence des mots, des seconds vecteurs de commande de temps, tout en réexécutant tous les seconds vecteurs de commande de temps pour chaque mot appartenant au format d'écran lorsqu'une seconde marque de redémarrage est instaurée après une telle exécution, dans laquelle le second vecteur de commande de temps accomplit l'une ou l'autre des actions suivantes pour chaque format d'écran et pour chaque mot appartenant au format d'écran: ne rien faire s'il n'y a pas de données pour le mot propre dans les données reçues à partir du format d'écran par l'opération effectuée sur le format d'écran, ou, s'il y a des données pour le mot propre dans les données reçues à partir du format d'écran, accomplir l'une ou l'autre des actions suivantes: dans le cas d'un mot de non-commande, placer les données dans une seconde zone de données du mot propre, tout en instaurant la seconde marque de redémarrage lorsque ce placement de données n'est pas accompli de façon précise, et dans le cas d'un mot de commande, déterminer (2106) une route d'homogénéité conformément à la nature du mot propre, tout en instaurant la seconde marque de redémarrage lorsque la détermination de la route d'homogénéité n'est pas établie de façon précise; et

une étape (2108) pour activer sélectivement une fonction de palette W03 sur la base du résultat d'exécution de la fonction de palette W02 et conformément à la route d'homogénéité déterminée par le second vecteur de commande de temps, cette fonction de palette W03 exécutant, pour tous les mots appartenant à tous les éléments définitifs nécessaires pour le logiciel, indépendamment de la séquence des mots, des troisièmes vecteurs de commande de temps, tout en réexécutant tous les troisièmes vecteurs de commande de temps pour chaque mot appartenant à l'élément définitif lorsqu'une troisième marque de démarrage est instaurée après une telle exécution, dans laquelle le troisième vecteur de commande de temps accomplit l'une ou l'autre des actions suivantes pour tous les mots appartenant à tous les éléments définitifs: ne rien faire dans le cas où des données existent dans une troisième zone de données du mot propre, ou créer des données dans la troisième zone de données du mot propre dans le cas où des données n'existent pas dans la troisième zone de données du mot propre, tout en instaurant la troisième marque de démarrage lorsqu'une telle création est impossible.

5.  Un support d'enregistrement sur lequel est enregistré un programme adapté pour commander un ordinateur de façon à mettre en oeuvre le procédé des revendications 1 ou 4.

# FIG. 1

101

Determination of Definitive Identifiers

102

Determination of Words

103

Creation of Homogeneity Map

Collection of Tense Control Vector Specifications — 104

Determination of Files — 105

Creation of Tense Control Vectors — 106

Creation of Pallet Functions — 107

Assembly into Pallet Chain Function — 108

# FIG. 2

```
                  1         2         3         4         5         6         7         8
        1234567890123456789012345678901234567890123456789012345678901234567890123456789 0

     KH211E                    Sales Entry (direct sales)      DD DD DD  TT TT TT
              8888888    00000000000000000000000                          00000000
     *        88         00000000000000000000000                            999999
     *        88888888   000000000000000000000000000000000000               999999
     *        88888888   00000000000000000000000000000000000              8 00000000
     *        8888888     00000000000000000000000 Slip Order No. 888888888888888888888
              88888888888888888888888888  888888888888888888888888888 TEL 888888888888
              888888888888888888888888

Line*

     66  888888888888    9999.99    999.999.999-    99.999.999    666.666.666-
         888888888888888888888888888888         000000000000000000000000
     66  888888888888    9999.99    999.999.999-    99.999.999    666.666.666-
         888888888888888888888888888888         000000000000000000000000
     66  888888888888    9999.99    999.999.999-    99.999.999    666.666.666-
         888888888888888888888888888888         000000000000000000000000
     66  888888888888    9999.99    999.999.999-    99.999.999    666.666.666-
         888888888888888888888888888888         000000000000000000000000
     66  888888888888    9999.99    999.999.999-    99.999.999    666.666.666-
         888888888888888888888888888888         000000000000000000000000
                          6.666.666.666-                  6.666.666.666-          0
                          6.666.666.666-                  6.666.666.666-
     Continue    Registry     End      Reference
     0000000000000000000000000000000000000000000000000000000000000000000000000000000000

        1234567890123456789012345678901234567890123456789012345678901234567890123456789 0
                  1         2         3         4         5         6         7         8
```

# FIG. 3

```
              1         2         3         4         5         6         7         8
     12345678901234567890123456789012345678901234567890123456789012345678901234567890

 1   KH600Q              Customer Code Inquiry          DD DD DD  TT TT TT
 2
 3
 4   66 000000000  000000000000000000000  000000000000000000000  0000000000 00000000
 5   66 000000000  000000000000000000000  000000000000000000000  0000000000 00000000
 6   66 000000000  000000000000000000000  000000000000000000000  0000000000 00000000
 7   66 000000000  000000000000000000000  000000000000000000000  0000000000 00000000
 8   66 000000000  000000000000000000000  000000000000000000000  0000000000 00000000
 9   66 000000000  000000000000000000000  000000000000000000000  0000000000 00000000
10   66 000000000  000000000000000000000  000000000000000000000  0000000000 00000000
11   66 000000000  000000000000000000000  000000000000000000000  0000000000 00000000
12   66 000000000  000000000000000000000  000000000000000000000  0000000000 00000000
13   66 000000000  000000000000000000000  000000000000000000000  0000000000 00000000
14   66 000000000  000000000000000000000  000000000000000000000  0000000000 00000000
15   66 000000000  000000000000000000000  000000000000000000000  0000000000 00000000
16   66 000000000  000000000000000000000  000000000000000000000  0000000000 00000000
17   66 000000000  000000000000000000000  000000000000000000000  0000000000 00000000
18   66 000000000  000000000000000000000  000000000000000000000  0000000000 00000000
19   66 000000000  000000000000000000000  000000000000000000000  0000000000 00000000
20                                                                              0
21        99                   8888888888888888             8888888
22
23   Continue    Return                                                       F8
24   0000000000000000000000000000000000000000000000000000000000000000000000000000000

     12345678901234567890123456789012345678901234567890123456789012345678901234567890
              1         2         3         4         5         6         7         8
```

# FIG. 4

```
              1         2         3         4         5         6         7         8
    1234567890123456789012345678901234567890123456789012345678901234567890123456789 0

    KH410E              Arrival Confirmation Entry          DD DD DD  TT TT TT

          BBBBBBB   OOOOOOOOOOOOOOOOOOOOOOO


                    BB       OOOOOOOOOOOOOOOOOO


                    B        (1: Hardware, 2: Software)


                    B        (1: Agency Goods. 2: Normal)














         Continue    Registry    End    Reference
    OOOOOOOOOOOOOOOOOOOOOOOOOOOOOOOOOOOOOOOOOOOOOOOOOOOOOOOOOOOOOOOOOOOOOOOOOOOOOOO

    1234567890123456789012345678901234567890123456789012345678901234567890123456789 0
              1         2         3         4         5         6         7         8
```

# FIG. 5

```
         1         2         3         4         5         6         7         8
123456789012345678901234567890123456789012345678901234567890123456789012345678901234567890
```

```
  KH616Q                    Warehouse Code Inquiry          DD DD DD   TT TT TT


     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
     66    00              OOOOOOOOOOOOOOOOOOOOOOOOOOOOOOOOOOOOOOOOOOOO
                                                                             O
          99

  Continue    Return
OOOOOOOOOOOOOOOOOOOOOOOOOOOOOOOOOOOOOOOOOOOOOOOOOOOOOOOOOOOOOOOOOOOOOOOOOOOOOOOOOOOO
```

```
123456789012345678901234567890123456789012345678901234567890123456789012345678901234567890
         1         2         3         4         5         6         7         8
```

# FIG. 6

```
          1         2         3         4         5         6         7         8
12345678901234567890123456789012345678901234567890123456789012345678901234567890

    KH510E                 Shipment Request List            DD DD DD  TT TT TT



        Shipment Request Date        From 999999 to 999999 (Shipment to be output).











Execute -Continue  F2- Registry  F3- End
OOOOOOOOOOOOOOOOOOOOOOOOOOOOOOOOOOOOOOOOOOOOOOOOOOOOOOOOOOOOOOOOOOOOOOOOOOOOOOOOOO
12345678901234567890123456789012345678901234567890123456789012345678901234567890
          1         2         3         4         5         6         7         8
```

# FIG. 7

| 行 \ 桁 | | 1−10 | 11−20 | 21−30 | 31−40 | 41−5 |
|---|---|---|---|---|---|---|
| | | 1 2 3 4 5 6 7 8 9 0 | 1 2 3 4 5 6 7 8 9 0 | 1 2 3 4 5 6 7 8 9 0 | 1 2 3 4 5 6 7 8 9 0 | 1 2 3 4 5 6 |
| 1 | 1 | | | | | |
| | 2 | K H 5 0 1 0 | | | | |
| | 3 | | | | | |
| | 4 | Department | X X X X X | N N N N N N N N N N | N N N N N N N | N N N |
| | 5 | | | | | |
| 2 | 6 | ☆ Delivery Destination | X X X X X X X | N N N N N N N | N N N | N N N |
| | 7 | Billing Destination | X X X X X X | N N N N N | N N N | N N N |
| | 8 | | | | | |
| | 9 | For shipping order | Shipping No. | Line   Product Code | | Product Name |
| | 10 | Y Y M M D D | X X X X X X X | 9 9 X X X X X X X | X X X X X X X X X | X X X X X |
| | 11 | Y Y M M D D | X X X X X X X | 9 9 X X X X X X X | X X X X X X X X X | X X X X X |
| | 12 | Y Y M M D D | X X X X X X X | 9 9 X X X X X X X | X X X X X X X X X | X X X X X |
| 3 | 13 | | | | | |
| | 14 | ☆ Delivery Destination | X X X X X X X | N N N N N N N | N N N | N N N |
| | 15 | Billing Destination | X X X X X X | N N N N N | N N N | N N N |
| | 16 | | | | | |
| | 17 | For shipping order | Shipping No. | Line   Product Code | | Product N |
| | 18 | Y Y M M D D | X X X X X X X | 9 9 X X X X X X X | X X X X X X X X X | X X X X |
| 4 | 19 | Y Y M M D D | X X X X X X X | 9 9 X X X X X X X | X X X X X X X X X | X X X |
| | 20 | Y Y M M D D | X X X X X X X | 9 9 X X X X X X X | X X X X X X X | |
| | 21 | | | | | |
| | 22 | | | | | |
| | 23 | | | | | |
| | 24 | | | | | |
| 5 | 25 | | | | | |
| | 26 | | | | | |
| | 27 | | | | | |
| | 28 | | | | | |

EP 0 947 916 B1

## FIG. 8

| 行 \ 桁 | 130–140 | 141–150 | 151–160 | 161–170 | 161–170 | 180–190 |
|---|---|---|---|---|---|---|
| | 3 4 5 6 7 8 9 0 | 1 2 3 4 5 6 7 8 9 0 | 1 2 3 4 5 6 7 8 9 0 | 1 2 3 4 5 6 7 8 9 0 | 1 2 3 4 5 6 7 8 9 0 | 1 2 3 4 5 6 7 |
| **1** — 1 | | | | | | |
| — 2 | Date | Y Y  MM  D D | P A G E   Z Z Z 9 | | | |
| — 3 | | | | | | |
| — 4 | | | | | | |
| — 5 | | | | | | |
| — 6 | | | | | | |
| **2** — 7 | | | | | | |
| — 8 | | | | | | |
| — 9 | Your Order No. | | Inst.   City | Shipment Sales | | |
| — 10 | X X X X X X | X X X X X X X X X X | X    N | N    X | X | |
| — 11 | X X X X X X | X X X X X X X X X X | X    N | N    X | X | |
| — 12 | X X X X X X | X X X X X X X X X X | X    N | N    X | X | |
| **3** — 13 | | | | | | |
| — 14 | | | | | | |
| — 15 | | | | | | |
| — 16 | | | | | | |
| — 17 | Your Order No. | | Inst.   City | | | |
| — 18 | X X X X X X | X X X X X X X X X X | X    N | N | | |
| — 19 | X X X X X X | X X X X X X X X X X | X    N | N | | |
| — 20 | X X X X X X | X X X X X X X X X X | X    N | N | | |

EP 0 947 916 B1

# FIG. 9

Diagram content:

**91** Menu

**92** W04 — Sales Entry (Direct Sales) KH211E
: W03 — S/F :
Employee M
Name M
Customer Inf. F
Department M
W03-S/F
Goods List F

**93** W02 — Sales Entry (Direct Sales) KH211E
Employee M
Name M
Customer Inf. F
Department M
W03-S/F
Goods List F

Execute
R=1
**94** W03 — S/F  1

F1 (Registry)
R=2
**95** W03 — ·Sales No.Number Assignment F  ·Sales F  ·Credit Rating

**96** WFL — Print File

F4 (Reference) + Customer Code
R=3
**97** W04 — Customer Code Inquiry KH600Q
Customer Inf. F

**98** W02 — Customer Code Inquiry KH600Q
Customer Inf. F

Execute + Selection No.
R=3

F12 (Return)
R=3

F3 (End)
R=0

EP 0 947 916 B1

# FIG. 10

101 MENU

102 W04 ARRIVAL CONFIRMATION ENTRY KH410E

103 W02 ARRIVAL CONFIRMATION ENTRY KH410E

ARRIVAL F
NAME M
CREDIT PURCHASE F
GOODS LIST F
SERIAL NO. F
MGT.SN INVENTORY NUMBER ASSIGNMENT F
MGT.SN CREDIT PURCHASE NUMBER ASSIGNMENT F
INVENTORY GOODS LIST F
CUSTOMER INF F

F4 (REFERENCE)
+WAREHOUSE CODE

R=3

104 W04 WAREHOUSE CODE INQUIRY KH616Q

105 W02 WAREHOUSE CODE INQUIRY KH616Q

NAME M

R=3 EXECUTE

R=3

F12 (RETURN)

R=3

EXECUTE

R=3

F1 (REGISTRY)

R=4

WFL

106

GOODS ARRIVAL F
INVENTORY GOODS LIST F

F3 (END)

R=0

EP 0 947 916 B1

# FIG. 11

# FIG. 12

```
                    START
                      │
  ┌───────────────────┼─────────────── 1201
  │              ╱─────┴─────╲                              ┌──────────────── 1202
  │           ╱    IS DATA      ╲        Y                  │ THE W02 DATA IS
  │        ╱  EXISTING IN THE W02 ╲──────────────────────▶ │ COPIED TO THE W04
  │        ╲  DATA AREA OF THE WORD╱                        │   DATA AREA
  │           ╲   "SALES DATA"?  ╱                          │  OF THE WORD
  │              ╲─────┬─────╱                              │  "SALES DATA"
  └────────────────────┼──N──────────                      └───────┬────────
                       │           1203                            │
  ┌───────────────────┼──────────────                              │    1204
  │              ╱─────┴─────╲                              ┌───────┼──────── 
  │           ╱    IS DATA      ╲        Y                  │ THE W03 DATA IS
  │        ╱  EXISTING IN THE W03 ╲──────────────────────▶ │ COPIED TO THE W04
  │        ╲  DATA AREA OF THE WORD╱                        │   DATA AREA
  │           ╲   "SALES DATA"?  ╱                          │  OF THE WORD
  │              ╲─────┬─────╱                              │  "SALES DATA"
  └────────────────────┼──N──────────                      └──────────────────
                       │
                     END
```

EP 0 947 916 B1

# FIG. 13

```
                    ┌─────────┐
                    │  START  │
                    └─────────┘
                         │                    1301
              ┌ ─ ─ ─ ─ ─│─ ─ ─ ─ ─ ─ ─ ┐
                       ╱   ╲
              │      ╱       ╲            │
                  ╱    IS DATA  ╲
           Y  │ ╱   ALREADY SET   ╲       │
         ◄────╱  INTO THE W04 DATA  ╲
              │╲  AREA OF THE WORD  ╱     │
                ╲  "SALES DATA"?   ╱
              │  ╲              ╱         │
                   ╲         ╱
              └ ─ ─ ─ ╲ ─ ╱ ─ ─ ─ ─ ─ ─ ┘
                       │ N
                       │              1302
              ┌ ─ ─ ─ ─│─ ─ ─ ─ ┐
                     ╱   ╲
              │    ╱       ╲       │
                 ╱ IS THE W04 ╲        N
              │ ╱  DATA EDITABLE? ╲───┼──────────────┐
                ╲              ╱                      │
              │  ╲          ╱    │                    │
              └ ─ ─╲ ─ ─ ╱ ─ ─ ─ ┘                   │
                    │ Y                       1305    │
                    │                ┌ ─ ─ ─ ─│─ ─ ─ ─ ─ ┐
              ┌──────────┐                   ╱   ╲
         1303 │   EDIT   │           │     ╱       ╲       │
              └──────────┘              ╱  NECESSARY  ╲
                    │              │  ╱  TO SET THE W04 ╲    N
                    │                ╱   RESTART FLG OF  ╲──┼───┐
                    │              │ ╲     THE WORD     ╱       │
                    │                ╲ "SALES DATA"?  ╱     │   │
                    │              │  ╲            ╱            │
                    │                   ╲       ╱          │   │
                    │              └ ─ ─ ─╲ ─ ╱ ─ ─ ─ ─ ─ ┘   │
                    │                      │ Y      1306       │
       1304         │              ┌──────────────┐       ┌ ─ ─│
   ┌──────────────┐ │              │ THE W04 RESTART│      │    │
   │ THE EDITED   │ │              │ FLG OF THE WORD│      │    │
   │ RESULT IS SET│ │              │"SALES DATA" IS │      └ ─ ─┘
   │ INTO THE W04 │ │              │      SET       │         │
   │ DATA AREA OF │ │              └──────────────┘          │
   │   THE WORD   │ │                      │                 │
   │ "SALES DATA" │ │                      │                 │
   └──────────────┘ │                      │                 │
          │         │                      │                 │
          └─────────┴──────────────────────┴─────────────────┘
                    │
              ┌─────────┐
              │   END   │
              └─────────┘
```

# FIG. 14

START

IS DATA ALREADY SET INTO THE ADDRESS HAVING THE IDENTIFIER OF THE WORD "SALES DATA" IN THE INPUT BUFFER? — 1401

N

Y

DIRECTED PROCESS OF THE WORD — 1402

IS DIRECTED PROCESS ACCOMPLISHED ? — 1403

N

Y

NECESSARY TO SET THE W02 RESTART FLG OF THE WORD "SALES DATA"? — 1404

N

Y

THE W02 DATA REFUSAL FLG OF THE WORD "SALES DATA" IS SET — 1406

THE W02 DATA RESTART FLG WORD "SALES DATA" IS SET — 1405

END

EP 0 947 916 B1

FIG. 15

# FIG. 16

EP 0 947 916 B1

# FIG. 17

START → 1701

1701: IS DATA ALREADY SET INTO THE W03 DATA AREA OF THE WORD "SALES DATA"?

— Y → (to 1708 path)

— N ↓

1703: IS THE W03 DATA OF THE WORD "SALES DATA" OPERABLE WITH SELF'S OR THE OTHER WORD'S W03 DATA?

— N → 1706

— Y ↓

OPERATION — 1704

↓

THE OPERATIONAL RESULT IS SET INTO THE W03 DATA AREA OF THE WORD "SALES DATA" — 1705

↓

END

1706: NECESSARY TO SET THE W03 RESTART FLG OF THE WORD "SALES DATA"?

— N → 1708

— Y ↓

THE W03 RESTART FLG OF THE WORD "SALES DATA" IS SET — 1707

1708: THE W03 REFUSAL FLG OF THE WORD "SALES DATA" IS SET

EP 0 947 916 B1

# FIG. 18

```
        ┌─────────┐
        │  Start  │
        └─────────┘
             │
    ┌─────────────────┐
    │   Open File     │ ～1801
    └─────────────────┘
             │
    ┌─────────────────┐
    │  Execution of   │ ～1802
    │ Duplicate Vector│
    └─────────────────┘
             │
    ┌─────────────────┐
    │  Execution of   │ ～1803
    │Homogeneity Vector│
    └─────────────────┘
             │
                              1806
    ┌ ─ ─ ─ ─ ─ ─ ─ ─ ┐ ～1804
       ◇               N   ┌──────────┐      ┌─────┐
    │Pallet Restart│ ─────►│Close File│ ────►│ End │
       FLG?                └──────────┘      └─────┘
    └ ─ ─ ─ ─ ─ ─ ─ ─ ┘
             │ Y
    ┌─────────────────┐
    │ The Pallet Restart│ ～1805
    │  FLG is reset.  │
    └─────────────────┘
```

# FIG. 19

Start

Determination of Information to be Transmitted — 1901

System shutdown? — 1902
Y → Shutdown — 1903

N

Continue inside the WT unit? — 1904
N → All pallets in the corresponding WT unit are set. — 1907

Y

Scenario closure needed? — 1905
N →

Y

Scenario Chain process — 1906

Execution of the corresponding W4 Pallet — 1908

Send Function — 1909

Receive Function — 1910

Is Receive Data Normal? — 1911
N →

Y

Execution of the corresponding W2 Pallet — 1912

1913 — Route 1
Y → Execution of W3 Pallet — 1915

N

1914 — Route 2
Y → Execution of W3 Pallet — 1916

N

# FIG. 20

| ├──────── WT Unit ────────┤ | | ├──────── WT Unit ──────── |

| Registration<br>A Screen | Registration<br>B Screen | Registration<br>C Screen | Registration<br>D Screen |

├── Phase Chain ──┤                    ├── Phase Chain ──┤

├─────────── Scenario Chain ───────────┤

# FIG. 21

# FIG. 22

# FIG. 23

EP 0 947 916 B1

# FIG. 24

The logic Lm being the original cause for taking actions based on the information swept out by the logic, which humans cannot be aware of but build up instantly.

Information swept Out by Program Logic Lc

Program Logic Lc

Action occurring based on human's logic Lm of the time just before taking actions.

# FIG. 25

# FIG. 26

STRUCTURE OF P2

FILE OPEN

MIDDLE FILE READ

SLIP No. READ

ACCOUNT M READ

CUSTOMER M READ

DAILY-HDR EDIT

DAILY-HDR, WRT → DAILY HDR

PAID-IN SLIP-HDR EDIT

DAILY-DTL EDIT

DAILY-DTL WRT → DAILY DTL

SLIP No. UPDATE → SLIP No.

PAID-IN SLIPS-DTL EDIT

PAID-IN SLIPS WRT → PAID-IN SLIPS

MIDDLE FILE READ

PAID-IN SLIPS (FOR DISTRIBUTION)

FILE CLOSE

# FIG. 27

765step

EP 0 947 916 B1

# FIG. 28

# FIG. 29

Is the W03 corresponding item's value already entered? — Y

N — 2901

Is the W03 corresponding item's value inducible? — N

Y — 2902

Is the W03 corresponding item's value calculable? — N

Y — 2903

Is the Pallet Restart FLG set necessary? — N

Y — 2904

The Pallet Restart FLG is set.

2905

Calculation of the corresponding item

71

# FIG. 30

# FIG. 31

Determination
of INPUT

Determination of
Homogeneity Route

W02

W03   Tense Control
Vectors corresponding to all
words, all brain cells

Operational Memory
(Logic)

W04

Status Display

Output
Screen

EP 0 947 916 B1

# FIG. 32

**Auto Logic**

**W03**
Tense Control Vectors corresponding
to all words, all brain cells

W02

W04

INPUT
determination

Separation

Determination of
Homogeneity Route

Operational Memory
(Logic)

Status Display

Practical Logic

EP 0 947 916 B1

# FIG. 33

(a)

```
┌─────────────┐  OK   ┌──────────────────────┐
│ INPUT Check │──────▶│  Normal Transaction  │
└─────────────┘       └──────────────────────┘
              \  NG
               \      ┌──────────────────────┐
                \────▶│   Error Transaction  │
                      └──────────────────────┘
```

(b)

W02                    W03              Error FLG      W04
                                        Error CD
                                        Error Item

```
┌───────────────┐   ┌─────────────────────┐        ┌──────────────┐
│ Determination │   │      ◇              │        │              │
│ of Homogeneity│──▶│ Division based on   │───────▶│    Error     │
│ Route         │   │ Edit Conditions     │        │  Transaction │
│               │   │      ◇              │        │              │
│               │   │  ┌───────────┐      │        │ ┌──────────┐ │
│               │   │  │  Process  │──────┼───────▶│ │          │ │
│               │   │  │  directed │      │        │ └──────────┘ │
└───────────────┘   └──────┬──────────────┘        └──────────────┘
                           │
                        ┌──┴──┐
                        │     │
                        └─────┘
```

# FIG. 34
## (a)

# FIG. 34
## (b)

# FIG. 35

SOURCE PROGRAM

**(a)**

SCREEN

FILE

VOUCHER

CODE TABLE

**(b)**

DOCUMENTS TO BE MADE

SCREEN DEFINITION

FILE DEFINITION

VOUCHER DEFINITION

WORD TABLE

HOMOGENEITY MAP

Q & A
→TENSE
CONTORL VECTOR
SPECIFICATION

BASIC ITEMS W03

**(c)**

DATA DEFINITION PART

SCREEN DATA DEFINITION

FILE DATA DEFINITION

VOUCHER DATA DEFINITION

LOGIC PART

PALLET FUNCTION

DUPLICATE VECTOR

HOMOGENEITY VECTOR

EP 0 947 916 B1

# FIG. 36

| SCREEN NAME | RECEIVED ORDER DATA ENTRY | IDENTIFIER | KH201F | | OPERATIONAL WORD | FUNCTION [TRANSACTION UP TO THE NEXT SCREEN, THE NEXT SCREEN IDENTIFIER] |
|---|---|---|---|---|---|---|

**WORD PLACEMENT DIAGRAM (LAYOUT)**

```
      0102030405060708091011121314151617181920212223242526272829303132333435363738394
  01 KH201E                          RECEIVED ORDER DATA ENTRY        YY/HH/DD  hh:mm
  02
  03 O P C D      999999      X X X X X X X X X X X X X X
  04 RECEIVED ORDER  99       X X X X
  05 CLASSIFICATION
  06 CUSTOMER      BBBBBBBBB  X X X X X X X X X X X X X X X X X X X X X X X X X
  07
  08 DELIVERY      BBBBBBBBB  X X X X X X X X X X X X X X X X X X X X X X X X X X
  09 DESTINATION
  10 DISTRIBUTION WAREHOUSE BB    X X X X X X X X X
  11 SALES CLERK   BBBBBBB    X X X X X X X X X X X X X
  12                                                          CLASSIFI-
  13 No  PRODUCT CODE QTY        UNIT      PREVIOUS ORDER UNIT  AMOUNT  CATION
  14     PRODUCT NAME                                         OTHER PARTY PRODUCT
  15 01  BBBBBBBBBB   99999    9,999,999,999  9,999,999,999  999,999,999,999  BBBB
  16     X X X X X X X X X X X X X X X X X X X X X X X X X X X X  BBBBBBBBBBBB
  17 02  BBBBBBBBBB   99999    9,999,999,999  9,999,999,999  999,999,999,999  BBBB
  18     X X X X X X X X X X X X X X X X X X X X X X X X X X X X  BBBBBBBBBBBB
  19 03  BBBBBBBBBB   99999    9,999,999,999  9,999,999,999  999,999,999,999  BBBB
  20     X X X X X X X X X X X X X X X X X X X X X X X X X X X X  BBBBBBBBBBBB
  21 04  BBBBBBBBBB   99999    9,999,999,999  9,999,999,999  999,999,999,999  BBBB
  22     X X X X X X X X X X X X X X X X X X X X X X X X X X X X  BBBBBBBBBBBB
  23                                TOTAL AMOUNT   99,999,999,999,999
  24 X X X X X X X X X X X X X X X X X X X X X X X X X X X X X X X X X X X X X X X X
  25  [ENTER CONFIRM]  [F01 REGISTRY]  [F04 REFERENCE]  [F10 PRODUCT SELECTION]  [F03 END]  [Page Up/Dn]
```

| PURPOSE OF SCREEN | RECEIVED ORDER TRANSACTION INFORMATION IS ENTERED INTO THE SYSTEM<br>FILE TO BE MADE/UPDATED<br>①RECEIVED ORDER BUSINESS FILE - CREATE<br>②INVENTORY MANAGEMENT FILE - UPDATE<br>③CREDIT RATING MANAGEMENT FILE - UPDATE<br>④TRANSACTION No. FILE - UPDATE | REMARKS | |
|---|---|---|---|

| OPERATIONAL WORD | FUNCTION [TRANSACTION UP TO THE NEXT SCREEN, THE NEXT SCREEN IDENTIFIER] |
|---|---|
| ACKNOWLEDGE Enter | TRIAL REGISTRY BASED ON INPUT DATA (R=1) →KH201E |
| REGISTRY F1 | EXECUTE REGISTRY BASED ON INPUT DATA (R=2) →KH201E |
| REFERENCE F1 | TRANSITION TO THE REFERENCE SCREEN OF VARIOUS CODES (R=3)<br>RECEIVED ORDER CLASSIFICATION FIELD→Kh6060<br>CUSTOMER FIELD→kh6000<br>DELIVERY DESTINATION FIELD→kh6000<br>DISTRIBUTION WAREHOUSE FIELD→kh6020<br>SALES IN CHARGE FIELD→kh6100 |
| PRODUCT SELECTION F10 | TRANSITION TO THE RECEIVED ORDER PRODUCT INF. REFERENCE SCREEN (R=3) →KH204E |
| END F3 | TRANSITION TO THE MENU SCREEN (R=0) →KH001M |

EP 0 947 916 B1

78

# FIG. 37

| VOUCHER NAME : | IDENTIFIER : | | OUTPUT CONTROL METHOD [NEW LINE , NEW PAGE ETC,] |
|---|---|---|---|

WORD PLACEMENT DIAGRAM (LAYOUT)

010203040506 ················································ 61626364656667

01
02
03
04
⋮
57
58
59
60

VOUCHER OUTPUT CONDITIONS

OUTPUT POINT OUTPUT LOCATION
           OUTPUT DEVICE
           KINDS OF FORM

OUTPUT TIME

REMARKS

EP 0 947 916 B1

# FIG. 38

| FILE NAME | | IDENTIFIER | | FILE CLASSIFICATION | $\alpha / \beta / \gamma$ | BELONGING AREA | W02/W03 |
|---|---|---|---|---|---|---|---|
| No | ITEM NAME | ITEM id | ATTRIBUTE | CONTENTS/MEANING/OTHERS (TRANSACTION CONDITIONS PART) | | | REMARKS |
| | | | | | | | |

# FIG. 39

EP 0 947 916 B1

# FIG. 40

DOCUMENTS FORMING ACTIVITY BASE

## UNIT OF TRANSACTION

### RECEIVED ORDER DATA REGISTRY

TARGET DEFINITIVES
  SCREEN

    RECEIEVD ORDER DATA ENTRY SCREEN
  CUSTOMER CODE INQUIRY SCREEN
  RECEIVED ORDER PRODUCT INF.
  INQUIRY SCREEN
  PERSON IN CHARGE CODE INQUIRY
  SCREEN
        :

FILE
  RECEIVED ORDER TRANSACTION FILE
  INVENTORY MANAGEMENT FILE
  CUSTOMER INFORMATION FILE
  PRODUCT INFORMATION FILE
  PERSON IN CHARGE FILE

## DEFINITIVES SPECIFICATION: LIKE SCREEN DEFINITION FORM

| KH201E RECEIVED ORDER DATA REGISTRY |
| --- |
| EXECUTE · REGISTRY · REFERENCE · END |

KH608Q PERSON IN CHARGE CODE INQUIRY
EXECUTE · END

KH600Q CUSTOMER CODE INQUIRY
EXECUTE · RETURN

HOMOGENEITY MAP

① KH201E
② W04  ② W02

④ R=2  ④ W03

WFL

END R=0

ONLY α-GROUP CLEARLY PUT

④ PERSON IN CHARGE+ REFERENCE
R=3

④ KH600Q
② W04  ② W02

④ EXECUTE
R=3
RETURN
R=3

④ CUSTOMER+ INQUIRY
R=3

④ KH600Q
② W04  ② W02

④ EXECUTE
R=3
RETURN
R=3

EP 0 947 916 B1

# FIG. 41

Word Name; Y

Already input? — 4101

N

inducible? — 4102

Y

Operation/Edit Possible? — 4103

Y

Operational Expression /Editing Expression — 4104

# FIG. 42

| DEFINITIVE NAME | MULTIPLE TRANSACTION FILE | DEFINITIVE id | KD52BP | PALLET CHAIN FUNCTION CL. | φ 0 | AREA CL. | W03 | PALLET id | W03KH210E | TENSE CONTROL VECTOR CL. | LOGIC |
|---|---|---|---|---|---|---|---|---|---|---|---|
| No. | ITEM NAME | ITEM id | OPERATIONAL SIGNIFICANCE CONDITIONS | | OPERATIONAL EXPRESSION | | | | | REMARKS | | |
| 76 | DISCOUNT TOTAL AMOUNT | KD1099 | TRANSACTION CL. IS <u>ORDER RECEIVE</u> AND TRANSACTION CL. IS EXCEPT 1 (NO DISCOUNT) AND PRODUCT QTY OF EACH TRANSACTION IS NOT <u>0</u>. | | DISCOUNT TOTAL AMOUNT (KD1099)<br><br>SPECIFICATION'S LINE NUMBER<br>$= \Sigma$ {TRANSACTION QTY UNIT PRICE DISCOUNT AMOUNT (KEC251)} | | | | | WHEN OPERATION IS ACCEPTED, THE OPERATION ACCEPTANCE FLG IS SET.<br>WHEN THE TRANSACTION QTY UNIT PRICE DISCOUNT AMOUNT IS NOT CALCULATED, THE PALLET RESTART PROCESS IS EXECUTED. | | |
| 77 | QTY UNIT PRICE TOTAL AMOUNT | KD1857 | BUSINESS CL. IS <u>ORDER RECEIVE</u> AND PRODUCT QTY OF EACH TRANSACTION IS NOT <u>0</u>. | | QTY UNIT PRICE TOTAL AMOUNT (KD1857)<br><br>SPECIFICATION'S LINE NUMBER<br>$= \Sigma$ {TRANSACTION QTY UNIT PRICE DISCOUNT AMOUNT (KEC201)} | | | | | WHEN OPERATION IS ACCEPTED, THE OPERATION ACCEPTANCE FLG IS SET. | | |
| 78 | TRANSACTION TOTAL AMOUNT | KD1854 | TRANSACTION CL. IS <u>ORDER RECEIVE</u> ONLY. | | TRANSACTION TOTAL AMOUNT (KD1854)<br><br>=QTY UNIT PRICE TOTAL AMOUNT (KD1851)<br><br>−DISCOUNT TOTAL AMOUNT (KD1099) | | | | | WHEN OPERATION IS ACCEPTED, THE OPERATION ACCEPTANCE FLG IS SET.<br>WHEN THE QTY UNIT PRICE TOTAL AMOUNT AND THE DISCOUNT TOTAL AMOUNT IS NOT CALCULATED, THE PALLET RESTART PROCESS IS EXECUTED. | | |
| 79 | QTY PRICE TOTAL AMOUNT | KD1856 | TRANSACTION CL. IS <u>ORDER RECEIVE</u> AND THE TRANSACTION PRODUCT IS NOT <u>ORDER UNACCEPTABLE,</u> THE TRANSACTION PRODUCT QTY IS NOT <u>0</u>. | | QTY PRICE TOTAL AMOUNT (KD1856)<br><br>=PRICE (KE1124)<br>+DISCOUNT PRODUCT QTY (KE5001) | | | | | WHEN OPERATION IS ACCEPTED, THE OPERATION ACCEPTANCE FLG IS SET.<br>WHEN THE TRANSACTION PRODUCT IS NOT TRADABLE, MESSAGE cd=4101 IS RESPONDED, AND THE CORRESPONDING PRODUCT CODE FIELD IS DISPLAYED REVERSELY. | | |

EP 0 947 916 B1

# FIG. 43

| DEFINITIVE NAME | RECEIVED ORDER INPUT (DISTRIBUTION) | DEFINITIVE id | K201E | PALLET CHAIN FUNCTION CL | φ 0 | AREA CL. | W04 | PALLET id | LA1A1C40 | TENSE CONTROL VECTOR CL. | LOGIC |
|---|---|---|---|---|---|---|---|---|---|---|---|
| No. | ITEM NAME | ITEM id | OPERATIONAL SIGNIFICANCE CONDITION | | OPERATIONAL EXPRESSION | | | | | REMARKS | |
| 56 | TOTAL AMOUNT | A04360 | PRODUCT QTY OF EACH TRANSACTION AND THE UNIT PRICE IS NOT 0. | | DISCOUNT TOTAL AMOUNT (AD4360) SPECIFICATION'S LINE NUMBER $= \Sigma$ {TRANSACTION QTY UNIT PRICE AMOUNT (A16721)} | | | | | WHEN OPERATION IS ACCEPTED, THE OPERATION ACCEPTANCE FLG IS SET. | |
| | | | | | | | | | | WHEN THE TRANSACTION QTY UNIT PRICE AMOUNT IS NOT CALCULATED, THE PALLET RESTART PROCESS IS EXECUTED. | |
| 57 | OPCD | A01540 | UNCONDITIONAL | | THE CORRESPONDING OPCD MUST EXIST IN THE PERSON IN CHARGE MASTER. | | | | | WHEN NOT EXISTING IN THE PERSON IN CHARGE MASTER, THE MESSAGE cd= 2001 IS RESPONDED, AND THE CORRESPONDING OPCD FIELD IS DISPLAYED REVERSELY. | |
| 58 | OPERATION PERSON IN CHARGE NAME | A01560 | IN THE CASE THIS OPCD EXISTS IN THE PERSON IN CHARGE MASTER | | OPERATION PERSON IN CHARGE NAME (A01560 OF KE201E) =OPERATION IN CHARGE NAME (SN0792 OF PERSON IN CHARGE MASTER) | | | | | | |

EP 0 947 916 B1

# FIG. 44

```
* Not already entered?
IF KD1099 OF EF-AREA=ZERO                          ← ①
* Can be induced?
   PERFORM VARYING PI FROM 1 BY 1
        UNTIL PI > 6
                                                    ← ⑤
     IF TKBN = CNS-EF
      AND KE5001 OF EF-AREA(PI)  NOT = ZERO
      AND KDU360 OF EF-AREA    NOT = "1"
* Can be operated?
       IF KE0251-F OF EF-AREA(PI) = 1    ←          ② 
* Directed process
        COMPUTE KD1099 OF EF-AREA    ←              ⑥
              = KD1099 OF EF-AREA
              + KEC251 OF EF-AREA(PI)
        ON SIZE NOT ERROR
* The setting of Operation Acceptance FLG ←         ③
         MOVE 1 TO KD1099-F
         ON SIZE ERROR
             :
         END-COMPUTE
      ELSE
* Pallet Restart Process
       PERFORM "RESTART-PAL"         ←              ④
      END-IF
    END-IF
  END-PERFORM
END-IF
```

# FIG. 45

| Target Points | Traditional | LYEE | Effects |
|---|---|---|---|
| ① Improvements in working method | \|←40→\|←——60——→\| Design \| Manufacture | \|←40→\|←——0——→\| Design Manu-fac-ture | Short-term development realized: 1/2 – 1/10 |
| ② Establishment of Quality Concept | \|←20→\|←—50—→\|←30→\| Work logic produced by SE → Work logic by user   Indispensable control logic | \|←20→\|←—0—→\|←0→\| Substituted by LYEE theory → Work logic by user | Compression of the gross development volume: 20% – 80% |
| ③ Exclusion of Empiricism | Dependent on empiricism | LYEE theory | Enhancement of the maintainability: 40 – 100 times. |
| ④ Specialization of the Thinking Method | 10→\|←——90——→\| Dependent on personal abilities → TOOL effects | 10→\|←——65——→\|←25→\| Substituted by LYEE theory → TOOL effects   Compression of dependency on personal abilities | Enhancement of the work efficiency: 40 – 100 times. |

EP 0 947 916 B1

# FIG. 46

# FIG. 47

STRUCTURE OF ELEMENTARY

| ELEMENTARY' S SIGNIFICANT SPACE |
| ELEMENTARY RULE |
| BIRTH SEQUENCE TIME SPEED |

STRUCTURE OF CHAIN

ELEMENTARY RULE
ELEMENTARY
SEQUENCE
CHAIN' S SIGNIFICANCE SPACE
EQUIVALENCE ELEMENTARY

CONSCIOUSNESS CHAIN

DISTRIBUTION STRUCTURE

IDEALISTIC SPACE

DISTRIBUTION RULE
CREATE ALL SUBSETS.
CONSCIOUSNESS ELEMENTARY' S SYSTEM
CONSCIOUSNESS ELEMENTARY' S SUBSETS.

TRANSPOSITION (REVERSE TRANSPOSITION)

CONVERGENCE RULE
CREATE ALL SUBSETS.
COGNITION ELEMENTARY' S SYSTEM
COGNITION ELEMENTARY' S SUBSET

CONVERGENCE STRUCTURE

ONE SUBSET IS MADE INTO A CHAIN BY THE ASSOCIATION OF THE CONSCIOUSNESS CHAIN.

RECURRENCE

CONSCIOUSNESS RULE
CREATE THE CHAIN AT THE MOMENT OF CREATING THE SUBSETS
ACTION BY THE CONSCIOUSNESS RULE
ACTION BY THE BROADLY-MEANT PROBABILITY RULE (PROVIDENCE OF EXISTENCE)

PROBABILITY RULE, EVENT RULE
ACTION BY PROBABILITY RULE
THE CONTINGENCY MAKES FROM ONE SUBSET A CHAIN
PROBABILITY CHAIN

ACTION BY THE CONSCIOUSNESS CHAIN' S CHARACTERISTIC AND THE EVENT RULE

EVENT CHAIN

CONSCIOUSNESS CHAIN SET (SYNCHRONOUS)
CONSCIOUSNESS CHAIN'S EQUIVALENCE ELEMENTARY

PROBABILITY CHAIN' S SUBSET (ASYNCHRONOUS)
PROBABILITY CHAIN'S EQUIVALENCE ELEMENTARY
THE BROADLY-MEANT PROBABILITY RULE

EQUIVALENCE CHAIN
EVENT CHAIN' S SET (ASYNCHRONOUS)
EVENT CHAIN'S EQUIVALENCE ELEMENTARY
ACTION BY THE BROADLY-MEANT EVENT RULE
THE CHAIN IS CREATED EVERY TIME THE EVENT CHAIN IS CREATED
THE BROADLY-MEANT EVENT RULE
EQUIVALENCE RULE

PROBABILITY CHAIN'S EQUIVALENCE ELEMENTARY
SYNCHRONOUS / ASYNCHRONOUS EVENT CHAIN' S SET
SYNCHRONOUS EVENT CHAIN' S SET
BROADLY-MEANT EVENT RULE

UNITIZED EQUIVALENCE CHAIN GROUP
GROUPED EQUIVALENCE CHAIN'S EQUIVALENCE ELEMENTARY

EP 0 947 916 B1

# FIG. 48

Screen

(W03)   (W04)   g

Homogeneity Map φ1   (W02)

(W03)   q   (W04)   Homogeneity Map φ1

(W02)

[W04]   Homogeneity Map φ0

[W03]   [W02]

(W03)   f   (W04)   Homogeneity Map φ1

(W02)